(19) **Europäisches Patentamt European Patent Office Office européen des brevets**

(11) **EP 4 383 031 B1**

(12) **EUROPEAN PATENT SPECIFICATION**

(45) Date of publication and mention
of the grant of the patent:
**08.10.2025 Bulletin 2025/41**

(21) Application number: **22885381.8**

(22) Date of filing: **26.08.2022**

(51) International Patent Classification (IPC):
$H04L\ 67/12\ ^{(2022.01)}$ $H04L\ 67/52\ ^{(2022.01)}$
$G05B\ 19/418\ ^{(2006.01)}$ $G05B\ 15/02\ ^{(2006.01)}$
$H04L\ 12/28\ ^{(2006.01)}$ $H04W\ 4/33\ ^{(2018.01)}$
$G05B\ 19/042\ ^{(2006.01)}$

(52) Cooperative Patent Classification (CPC):
**G05B 15/02; H04L 12/2803; H04L 67/12;
H04L 67/52; H04W 4/33; G05B 19/042;
G05B 2219/2642; Y02P 90/02**

(86) International application number:
**PCT/CN2022/115151**

(87) International publication number:
**WO 2023/071484 (04.05.2023 Gazette 2023/18)**

(54) **AUTOMATIC CONTROL METHOD BASED ON HUMAN BODY SENSING, AND SYSTEM**

AUTOMATISCHES STEUERUNGSVERFAHREN AUF BASIS VON MENSCHLICHER
KÖRPERERFASSUNG UND SYSTEM

PROCÉDÉ DE COMMANDE AUTOMATIQUE BASÉ SUR LA DÉTECTION DE CORPS HUMAIN, ET
SYSTÈME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.10.2021 CN 202111241608**

(43) Date of publication of application:
**12.06.2024 Bulletin 2024/24**

(73) Proprietor: **Huawei Technologies Co., Ltd.
Shenzhen, Guangdong 518129 (CN)**

(72) Inventors:
• **DONG, Wei**
  **Shenzhen, Guangdong 518129 (CN)**
• **XU, Haowei**
  **Shenzhen, Guangdong 518129 (CN)**
• **YAO, Pei**
  **Shenzhen, Guangdong 518129 (CN)**
• **GAN, Lu**
  **Shenzhen, Guangdong 518129 (CN)**

(74) Representative: **Körber, Martin Hans
Mitscherlich PartmbB
Patent- und Rechtsanwälte
Karlstraße 7
80333 München (DE)**

(56) References cited:
**WO-A1-2021/164445     CN-A- 105 182 777
CN-A- 106 325 250      CN-A- 110 196 557
CN-A- 110 824 953      CN-A- 111 614 524
CN-A- 111 796 527      CN-A- 112 363 406
CN-A- 112 731 839      CN-A- 112 769 658
CN-A- 112 904 738      CN-A- 112 925 217**

Description

**TECHNICAL FIELD**

This application relates to the field of automatic control, and in particular, to a human sensing-based automatic control method, device storage medium, and a system.

**BACKGROUND**

With rapid development of smart homes, more users install internet of things (Internet of Things, IoT) devices (which may also be referred to as IoT devices, smart devices, or the like) in places such as homes or offices, and even install IoT devices throughout a house (which may also be referred to as whole-house intelligence, an all-in-one smart home, a smart manager, or the like). The users can experience convenience brought by the IoT devices. However, in the conventional technology, the user needs to carry a mobile device (for example, a smartphone or a wearable device) to implement automatic control of the IoT device through communication and sensing between the mobile device and the IoT device, and the like. The user sometimes forgets to carry the mobile device in places such as the home or the office, and cannot implement automatic control of the IoT device. As a result, inconvenience is brought to the user, and user experience is affected. CN 112925217 A discloses a smart home system and control method which are customized for different home users. CN 111796527 A discloses an intelligent control system based on millimeter wave radar.

**SUMMARY**

On a basis of the foregoing background, how to make automatic control of an IoT device by a user more convenient, and further improve user experience becomes a problem to be considered.

To resolve the foregoing technical problem, this application provides a human sensing-based automatic control method, a storage medium, and a system as defined in the claims. In the fowllowing description, embodiments which are not covered by the claims are to be concidered as examples necessary for understanding the invention. According to the technical solutions of this application, when a user approaches an IoT device, the IoT device automatically performs an operation, without performing any operation by the user or carrying any electronic device by the user neither. This greatly improves user experience. In addition, hardware of the IoT devices does not need to be modified neither. For example, a smart speaker generally has no camera and does not need to be additionally equipped with a camera.

According to a first aspect, this application provides a human sensing-based system for linkage between smart devices, including a hub device, a first electronic device, and R second electronic devices. Any two of the hub device, the first electronic device, and any one of the R second electronic devices communicate in a wired communication or wireless communication manner. The first electronic device includes an ultra-wide band module and a millimeter-wave radar module, and is configured to measure a human body position and positions of the R second electronic devices. The R second electronic devices include a first device, and R is a positive integer greater than or equal to 1. The first electronic device sends first scenario data to the hub device. The hub device determines, based on the first scenario data, that a current scenario is a first scenario, and determines that the first scenario corresponds to a first linkage rule. The first linkage rule includes that the first device performs a first task. The hub device sends, to the first device, a first message for performing the first task. The first device performs the first task in response to receiving the first message. The first electronic device sends second scenario data to the hub device. The hub device determines, based on the second scenario data, that the current scenario is a second scenario and the first scenario, and determines that the second scenario corresponds to a second linkage rule. The second linkage rule includes that the first device performs a second task. The second task is different from the first task. The hub device determines that a priority of the first scenario is higher than a priority of the second scenario, and the hub device determines that the first device performs the first task.

It should be noted that a more refined scenario may be sensed based on the human body position and the positions of the R second electronic devices that are detected by the first electronic device, so that a plurality of scenarios (for example, the first scenario and the second scenario coexist) in the house can be identified. Further, when a conflict (for example, a conflict between the first task and the second task) occurs between tasks in IFTTT rules corresponding to the plurality of scenarios in the house, conflicting specific tasks to be performed by a smart device may be further determined based on priorities of the scenarios. This meets a requirement of a user on linkage between the smart devices in the plurality of scenarios, thereby improving user experience.

According to the first aspect, the first scenario data includes data detected by the first electronic device at a first moment or within a first time period, and status information of any one or more of the R second electronic devices at the first moment or within the first time period. The data detected by the first electronic device at the first moment or within the first time period includes one or more of a human body position, an identity category of a human body, an attitude of the human body, a height feature of the human body, a physiological feature of the human body, and a position or positions of the any one or more of the R second electronic devices.

In some examples, each first electronic device in a whole-house sensing system has no specific storage capability and processing capability. In this case, the whole-house sensing system sends, to the hub device, the data detected by the first electronic device. The hub device performs comprehensive analysis on the received data, to identify that the current scenario is the first scenario. In this example, the first scenario data is data detected by each first electronic device at a current moment or within a current time period (for example, a moment 1 or a time period 2).

According to the first aspect or any implementation of the first aspect, the first scenario data indicates that a scenario in the house is the first scenario at the first moment or within the first time period.

In some examples, each first electronic device in the whole-house sensing system has a specific storage capability and processing capability, and may perform comprehensive analysis on data collected or simply processed by each first electronic device in the whole-house sensing system, to identify that the scenario in the whole house is the first scenario that is a corresponding scenario in an IFTTT rule of an intelligent scenario. The first scenario may be, for example, any one or more of a night coming-home scenario, a daytime coming-home scenario, an outsider intrusion scenario, a living room entertainment scenario, a bedroom entertainment scenario, a living room sleeping scenario, a bedroom sleeping scenario, a night raining scenario, a daytime going-out scenario, a night going-out scenario, and the like. Then, the whole-house sensing system sends the first scenario data to the hub device in the whole house. In this example, the first scenario data may be data that directly indicates that the scenario in the house is the first scenario.

According to the first aspect or any implementation of the first aspect, the second scenario data includes data detected by the first electronic device at a second moment or within a second time period, and/or status information of any one or more of the R second electronic devices at the second moment or within the second time period. The data detected by the first electronic device at the first moment or within the first time period includes one or more of a human body position, an identity category of a human body, an attitude of the human body, a height feature of the human body, a physiological feature of the human body, and a position or positions of the any one or more of the R second electronic devices.

According to the first aspect or any implementation of the first aspect, the second scenario data indicates that the scenario in the house is the second scenario and the first scenario at a second moment or within a second time period.

According to the first aspect or any implementation of the first aspect, the R second electronic devices further include a second device. The second linkage rule further includes that the second device performs a third task, and the first linkage rule does not include the second device. After the hub device determines that the first device performs the first task, the hub device further sends, to the second device, a second message for performing the third task. The second device performs the third task in response to receiving the second message.

In other words, when the second linkage rule further includes a task that does not conflict with the first linkage rule, the hub device continues to perform another task that does not conflict with the first linkage rule and that is in the second linkage rule.

According to the first aspect or any implementation of the first aspect, the hub device separately counts status changes of the R second electronic devices in each scenario detected by the first electronic device and/or control commands for the R second electronic devices sent by the hub device, and learns a linkage rule corresponding to each scenario.

Specifically, the hub device may collect a change state of each smart device, a control command for each smart device that is sent by using a smart home application, or the like. It may be understood that the user may send the control command to the smart device by using the smart home application. In this case, the hub device may obtain, by collecting the control command for each smart device forwarded by using the smart home application, a task performed by each smart device. The user may alternatively directly operate a panel or a button of the smart device to trigger the smart device to perform a corresponding task. In this case, the hub device may obtain, by collecting a status change of each smart device, a task performed by each smart device. In conclusion, a method for obtaining, by the hub device, the task performed by each smart device in the whole house is not limited in embodiments of this application.

According to the first aspect or any implementation of the first aspect, the hub device updates the linkage rule corresponding to each scenario in real time or cyclically or under a specific condition.

During specific implementation, the hub device may trigger counting a behavior habit of the user in real time or cyclically (for example, every day, every seven days, or every month) or under the specific condition (for example, every five minutes after powering on), to traverse each scenario, and obtain a task performing status of the smart device in a same scenario, for example, obtain a task performing status of the smart device within preset duration (for example, five minutes) that is before and after the whole-house sensing system detects a scenario. When it is learned, through counting, that one or some smart devices perform a same task for consecutive M1 days (for example, seven days) or consecutive M2 times (for example, seven times) in a scenario, an IFTTT rule in the scenario is generated.

It should be further noted that, in some other embodiments, the hub device further predefines a user preference setting item (for example, an air conditioner temperature during sleeping, a favorite music type, or light brightness of a lighting lamp during video watching), and learns or receives a user preference value set by the user. In this case, when executing an IFTTT rule, the hub device preferably performs a task based on the user preference value. When there are the plurality of scenarios in the house, a task is also performed, when the conflicting tasks are performed, based on the user preference value.

According to a second aspect, this application provides a human sensing-based method for linkage between smart devices, applied to a hub device. The hub device separately communicates with a first electronic device and any one of R second electronic devices in a wired communication or wireless communication manner. The first electronic device includes an ultra-wide band module and a millimeter-wave radar module, and is configured to measure a human body position and positions of the R second electronic devices. The R second electronic devices include a first device, and R is a positive integer greater than or equal to 1. The hub device receives first scenario data sent by the first electronic device. The hub device determines, based on the first scenario data, that a current scenario is a first scenario, and determines that the first scenario corresponds to a first linkage rule. The first linkage rule includes that the first device performs a first task. The hub device sends, to the first device, a first message for performing the first task. The hub device receives second scenario data sent by the first electronic device. The hub device determines, based on the second scenario data, that the current scenario is a second scenario and the first scenario, and determines that the second scenario corresponds to a second linkage rule. The second linkage rule includes that the first device performs a second task. The second task is different from the first task. The hub device determines that a priority of the first scenario is higher than a priority of the second scenario, and the hub device determines that the first device performs the first task.

According to the second aspect, the first scenario data includes data detected by the first electronic device at a first moment or within a first time period, and status information of any one or more of the R second electronic devices at the first moment or within the first time period. The data detected by the first electronic device at the first moment or within the first time period includes one or more of a human body position, an identity category of a human body, an attitude of the human body, a height feature of the human body, a physiological feature of the human body, and a position or positions of the any one or more of the R second electronic devices.

According to the second aspect or any implementation of the second aspect, the first scenario data indicates that a scenario in a house is the first scenario at the first moment or within the first time period.

According to the second aspect or any implementation of the second aspect, the second scenario data includes data detected by the first electronic device at a second moment or within a second time period, and/or status information of any one or more of the R second electronic devices at the second moment or within the second time period. The data detected by the first electronic device at the first moment or within the first time period includes one or more of a human body position, an identity category of a human body, an attitude of the human body, a height feature of the human body, a physiological feature of the human body, and a position or positions of the any one or more of the R second electronic devices.

According to the second aspect or any implementation of the second aspect, the second scenario data indicates that the scenario in the house is the second scenario and the first scenario at a second moment or within a second time period.

According to the second aspect or any implementation of the second aspect, the R second electronic devices further include a second device. The second linkage rule further includes that the second device performs a third task, and the first linkage rule does not include the second device. After the hub device determines that the first device performs the first task, the hub device further sends, to the second device, a second message for performing the third task. The second device performs the third task in response to receiving the second message.

According to the second aspect or any implementation of the second aspect, the hub device separately counts status changes of the R second electronic devices in each scenario detected by the first electronic device and/or control commands for the R second electronic devices sent by the hub device, and learns a linkage rule corresponding to each scenario.

According to the second aspect or any implementation of the second aspect, the hub device updates the linkage rule corresponding to each scenario in real time or cyclically or under a specific condition.

For technical effects that can be achieved in the second aspect and any implementation of the second aspect, refer to the descriptions of the technical effects in the first aspect and any implementation of the first aspect. Details are not described herein again.

According to a third aspect, this application provides a computer-readable storage medium. The computer-readable storage medium includes a computer program. When the computer program is run on an electronic device, the electronic device is enabled to perform the method according to the second aspect.

## BRIEF DESCRIPTION OF DRAWINGS

FIG. 1 is a schematic diagram of a scenario of a human sensing-based automatic control method according to an embodiment of this application;

FIG. 2 is a schematic diagram of a structure of a first electronic device in an automatic control method according to an embodiment of this application;

FIG. 3 is a schematic diagram of a structure of a hub device in an automatic control method according to an embodiment of this application;

FIG. 4 is a schematic diagram of a structure of a second electronic device in an automatic control method according to an embodiment of this application;

FIG. 5A is a schematic diagram of a structure of an ultra-wide band (Ultra-Wide Band, UWB) module in a first electronic device according to this application;

FIG. 5B is a schematic diagram of a structure of a millimeter-wave radar module in a first electronic device according to an embodiment of this application;

FIG. 6 is a schematic diagram of a structure of a UWB module in a second electronic device according to an embodiment of this application;

FIG. 7(a) to FIG. 7(e) are a schematic diagram of several antenna distributions of a UWB module in a first electronic device according to an embodiment of this application;

FIG. 8 is a schematic diagram of several antenna distributions of a millimeter-wave radar module in a first electronic device according to an embodiment of this application;

FIG. 9 is a schematic diagram of several manners of establishing a first coordinate system when a UWB module of a first electronic device includes three antennas according to an embodiment of this application;

FIG. 10 is a schematic diagram of a manner of establishing a second coordinate system according to an embodiment of this application;

FIG. 11 is a schematic diagram of a manner of establishing a third coordinate system according to an embodiment of this application;

FIG. 12(a) to FIG. 12(f) are a schematic diagram of a principle of calculating coordinates of a second electronic device in a first coordinate system according to an embodiment of this application;

FIG. 13(a) to FIG. 13(c) are a schematic diagram of several manners of marking a second electronic device according to an embodiment of this application;

FIG. 14 is a schematic diagram of a manner of marking a spatial region according to an embodiment of this application;

FIG. 15 is a schematic diagram of a pitch $\varphi_e^b$, a yaw $\psi_e^b$, and a roll $\theta_e^b$ of a second coordinate system relative to a first coordinate system according to an embodiment of this application;

FIG. 16 is a schematic diagram of a pitch $\varphi_e^t$, a yaw $\psi_e^t$, and a roll $\theta_e^t$ of a third coordinate system relative to a first coordinate system according to an embodiment of this application;

FIG. 17 is a schematic diagram of a manner of establishing a fourth coordinate system according to an embodiment of this application;

FIG. 18(a) to FIG. 18(e) are a schematic diagram of a principle of determining a distance and a radial speed of a reflection point by a millimeter-wave radar according to an embodiment of this application;

FIG. 19(a) to FIG. 19(c)-2 are a schematic diagram of a principle of determining a signal coming direction of a reflected signal from a reflection point by a millimeter-wave radar according to an embodiment of this application;

FIG. 20 is a schematic diagram of a principle of determining coordinates of a user by a first electronic device in a fourth coordinate system according to an embodiment of this application;

FIG. 21 is a schematic diagram of a method for determining coordinates of a user by a first electronic device in a fourth coordinate system according to an embodiment of this application;

FIG. 22 is a schematic diagram of a method for obtaining a breath frequency and a heartbeat frequency of a user by a millimeter-wave radar according to an embodiment of this application;

FIG. 23 is a schematic diagram of a method for determining a human body attitude of a user by a millimeter-wave radar according to an embodiment of this application;

FIG. 24 is a schematic diagram of conversion between a first coordinate system and a fourth coordinate system on a first electronic device according to an embodiment of this application;

FIG. 25 is a schematic diagram of an example of establishing a whole-house coordinate system (a fifth coordinate system), a first coordinate system, and a sixth coordinate system (a geographical coordinate system) according to an embodiment of this application;

FIG. 26 is a schematic diagram of a flowchart and a principle of a human sensing-based automatic control method in a whole-house scenario according to an embodiment of this application;

FIG. 27(a) to FIG. 27(c) are a schematic diagram of a method for correcting an installation error of a first electronic device according to an embodiment of this application;

FIG. 28 is a schematic diagram of a principle of an ICP algorithm according to an embodiment of this application;

FIG. 29 is a schematic diagram of region division and a user interface according to an embodiment of this application;

FIG. 30(1) and FIG. 30(2) are a schematic diagram of some user interfaces related to a method for intelligent linkage between smart devices according to an embodiment of this application;

FIG. 31(1) to FIG. 31(4) are a schematic diagram of some other user interfaces related to a method for intelligent linkage between smart devices according to an embodiment of this application;

FIG. 32(1) and FIG. 32(2) are a schematic diagram of still some other user interfaces related to a method for intelligent linkage between smart devices according to an embodiment of this application;

FIG. 33 is a schematic diagram of a user interface related to a method for intelligent linkage between smart devices according to an embodiment of this application;

FIG. 34A and FIG. 34B are a schematic flowchart of a method for intelligent linkage between smart devices according to an embodiment of this application;

FIG. 35 is a schematic flowchart of a method for counting an activity of a user in a house according to an embodiment of this application;

FIG. 36(1) to FIG. 36(4) are a schematic diagram of some user interfaces related to a method for counting an activity of a user in a house according to an embodiment of this application; and

FIG. 37(1) and FIG. 37(2) are a schematic diagram of some other user interfaces related to a method for counting an activity of a user in a house according to an embodiment of this application.

## DESCRIPTION OF EMBODIMENTS

The following describes the technical solutions in embodiments of this application with reference to the accompanying drawings in embodiments of this application. In the descriptions of embodiments of this application, terms used in the following embodiments are merely intended for a purpose of describing specific embodiments, but are not intended to limit this application. The terms "a", "the", "the foregoing", "this", and "the one" of singular forms used in this specification and the appended claims of this application are also intended to include forms such as "one or more", unless otherwise specified in the context clearly. It should be further understood that, in the following embodiments of this application, "at least one" and "one or more" mean one or more than two (including two). The term "and/or" is for describing an association relationship between associated objects and indicates that three relationships may exist. For example, A and/or B may indicate the following cases: Only A exists, both A and B exist, and only B exists, where A and B each may be singular or plural. The character "/" generally indicates an "or" relationship between associated objects.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear in different places in this specification do not necessarily mean referring to a same embodiment. Instead, the statements mean "one or more but not all of embodiments", unless otherwise specifically emphasized in another manner. The terms "include", "comprise", "have", and variants of the terms all mean "include but are not limited to", unless otherwise specifically emphasized in other ways. The term "connection" includes a direct connection and an indirect connection, unless otherwise stated. "First" and "second" are merely intended for a purpose of description, and shall not be understood as an indication or implication of relative importance or implicit indication of a quantity of indicated technical features.

In embodiments of this application, the word "example", "for example", or the like is for representing giving an example, an illustration, or a description. Any embodiment or design scheme described as an "example" or "for example" in embodiments of this application should not be explained as being more preferred or having more advantages than another embodiment or design scheme. Exactly, use of the term "example", "for example", or the like is intended to present a related concept in a specific manner.

## 1. Description of overall scenario

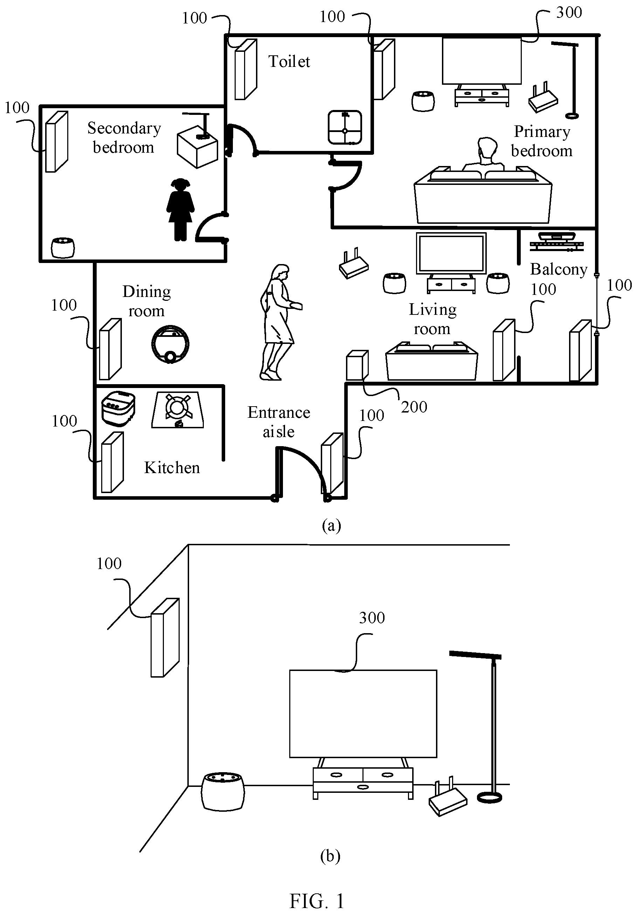

For example, FIG. 1 is a schematic diagram of a scenario of a human sensing-based automatic control method according to an embodiment of this application. As shown in (a) in FIG. 1, a whole house includes an entrance aisle, a kitchen, a dining room, a living room, a balcony, a primary bedroom, a secondary bedroom, a toilet, and the like. At least one first electronic device is disposed in the whole house. For example, each room or region includes at least one first electronic device. A second electronic device (for example, an IoT device) is further disposed in the whole house. Specifically, an electric rice cooker or an electric pressure cooker, a gas device, and the like are disposed in the kitchen. A speaker (for example, a smart speaker), a television (for example, a smart television, also referred to as a smart screen, a large screen, or the like), a routing device, and the like are disposed in the living room. A clothes hanger (for example, a smart clothes hanger) is disposed on the balcony. A floor-sweeping robot and the like are disposed in the dining room. A television (for example, a smart television), a speaker (for example, a smart speaker), a floor lamp (for example, a smart floor lamp), a routing device, and the like are disposed in the primary bedroom. A desk lamp (for example, a smart desk lamp), a speaker (for example, a smart speaker), and the like are disposed in the secondary bedroom. A body fat scale and the like are disposed in the toilet.

The human sensing-based automatic control method provided in embodiments of this application includes a human sensing-based automatic control method in a whole-house scenario, and further includes a human sensing-based automatic control method in a single room or region. The human sensing-based automatic control method provided in embodiments of this application is applied to a communication system. Correspondingly, the communication system includes a human sensing-based communication system in the whole-house scenario (which may also be referred to as a whole-house intelligent system), and a human sensing-based communication system in the single room or region (which may also be referred to as a room intelligent system or a region intelligent system). The communication system includes at least one first electronic device 100 and at least one second electronic device 300. In addition, the communication system may further include a hub device 200.

The first electronic device 100 is configured to locate the second electronic device 300 and/or a user. The first electronic device 100 may include a sensor. In an example, the first electronic device 100 includes an ultra-wide band (Ultra-Wide Band, UWB) module and a millimeter-wave radar module. The UWB module is configured to locate the second electronic device 300, and the millimeter-wave radar module is configured to locate the user.

A UWB technology is a radio communication technology that does not use a carrier modulated signal, but uses an energy pulse sequence below a nanosecond level or a microsecond level, and extends a pulse to a frequency range through orthogonal frequency division modulation or direct sequencing. UWB has features such as a wide spectrum, high precision, low power consumption, a strong anti-multipath capability, high security, and low system complexity, is widely used in short-range and high-speed wireless communication, and especially has a great advantage in the field of indoor locating. Generally, locating accuracy of a UWB system may reach a centimeter level. The UWB system includes a UWB base station and a UWB tag. The UWB base station determines a position (coordinates) of the UWB tag by detecting a distance between the UWB tag and the UWB base station and a signal coming direction of the UWB tag, that is, locates the UWB tag. Locating by using UWB is performed based on a UWB coordinate system (also referred to as a first coordinate system).

In an example, the second electronic device includes a UWB module. The UWB module of the first electronic device 100 implements a function of the UWB base station. The UWB module of the second electronic device implements a function of the UWB tag. The UWB module of the second electronic device is located by using the UWB module of the first electronic device 100, so that the first electronic device 100 can locate the second electronic device.

In another example, some second electronic devices include no UWB module. Usually, the second electronic device including the UWB module is a mobile device (for example, a smartphone or a remote control). Consequently, the second electronic device including the UWB module may be used to mark the second electronic device including no UWB module, so that the first electronic device 100 locates the second electronic device including no UWB module. A specific marking method is described in detail later.

The millimeter-wave radar operates in a millimeter-wave (millimeter-wave) band, is mainly configured to detect a moving object, and has an operating frequency band distributed in a 30 to 300 GHz frequency domain (a wavelength is 1 to 10 mm). The millimeter-wave radar continuously transmits (radiates) a specific form of radio magnetic signal when operating, receives an electromagnetic echo signal reflected by an object, and determines spatial information of the object by comparing a difference between the transmitted signal and the received signal. The millimeter-wave radar has features of a small size and high spatial resolution, is deployed indoors, and may be configured to detect information about a position, a physiological feature (for example, a breath frequency or a heartbeat frequency), an identity category (for example, an adult or a child), and a human body attitude (for example, standing, sitting, or lying) of a human body (the user) in a whole house. Consequently, by using the integrated millimeter-wave radar module, the first electronic device 100 can locate the user, and even detect the information such as the physiological feature, the identity category, and the human body attitude of the user. A specific method is described in detail later.

Locating by using the millimeter-wave radar is implemented based on a millimeter-wave radar coordinate system (also referred to as a second coordinate system). Coordinates respectively located in the second coordinate system and the first coordinate system need to be converted or unified to a same coordinate system. A specific coordinate system conversion method is described in detail later.

It should be noted that, in this embodiment of this application, an example in which the first electronic device 100 includes the UWB module and the millimeter-wave radar is used for description. In some other embodiments, the first electronic device 100 may include only the UWB module or the millimeter-wave radar. The first electronic device 100 including the UWB module is configured to locate the second electronic device 300. The first electronic device 100 including the millimeter-wave radar is configured to locate the user. The two types of first electronic devices 100 cooperate with each other to implement the human sensing-based automatic control method provided in embodiments of this application. This is not limited in embodiments of this application.

The first electronic device 100 may obtain a position of the second electronic device 300 (that is, locate the second electronic device), and may further obtain a position of a user in a room or a region (that is, locate the user). The whole house includes at least one room or region. If only one first electronic device is disposed in the whole house, signal attenuation or the like may be caused due to a reason, for example, wall blockage. In this case, the first electronic device cannot cover all regions in the whole house. Therefore, a plurality of first electronic devices are generally disposed in the whole house. For example, one first electronic device is disposed in each piece of relatively independent space (for example, the living room, a bedroom, a study, the balcony, the toilet, the kitchen, or an aisle), and is configured to locate a second electronic device and a user in the independent space. In this way, a second electronic device or a user at any position in the whole house can be detected by the first electronic device.

For example, as shown in (a) in FIG. 1, a signal receiving and sending range of the first electronic device disposed in the entrance aisle may cover the entrance aisle. A signal receiving and sending range of the first electronic device disposed in the kitchen may cover the kitchen. A signal sending and receiving range of the first electronic device disposed in the living room may cover the living room. A signal sending and receiving range of the first electronic device disposed in the dining room may cover the dining room. A signal sending and receiving range of the first electronic device disposed on the balcony may cover the balcony. A signal receiving and sending range of a first electronic device disposed in the primary bedroom may cover the primary bedroom. A signal sending and receiving range of the first electronic device disposed in the toilet may cover the toilet. A signal receiving and sending range of a first electronic device disposed in the secondary bedroom may cover the secondary bedroom. In an example, as shown in (b) in FIG. 1, the first electronic device may be disposed on a wall of the room or the region. In an example, the first electronic device may be disposed on a ceiling or the like of the room or the region. In this way, blockage of a signal by an object, for example, furniture in the whole house, can be reduced, and reduction of detection accuracy of the first electronic device due to blockage of the signal can be avoided. In an example, the first electronic device may be disposed on the ground or the like of the room or the region. Optionally, the first electronic device 100 may exist independently, or may be integrated with the second electronic device. This is not limited in this application. For example, the first electronic device 100 and a smart air conditioner are integrated into one device.

Optionally, some rooms or regions may not need to be equipped with a first electronic device. In other words, not all rooms or regions each are equipped with at least one first electronic device. For example, the dining room may be equipped with no first electronic device. One first electronic device may be shared in the entrance aisle and the dining room, or one first electronic device may be shared in the dining room and the living room.

It should be noted that, although the smart television is only shown as the second electronic device 300 in (a) in FIG. 1, a person skilled in the art should know that the second electronic device 300 includes but is not limited to the smart television, a smart speaker, a smart lamp (for example, a ceiling lamp, a smart desk lamp, or an aromatherapy lamp), a floor-sweeping robot, a body fat scale, a smart clothes hanger, a smart electric rice cooker, an air purifier, a humidifier, a desktop computer, a routing device, a smart socket, a water dispenser, a smart refrigerator, a smart air conditioner, a smart switch, a smart lock, and the like. It should be noted that, alternatively, the second electronic device 300 may not be a smart home device, but a portable device, for example, a personal computer (person computer, PC), a tablet computer, a mobile phone, or a smart remote control. A specific form of the second electronic device 300 is not limited in embodiments of this application.

The second electronic device 300 and the first electronic device 100 may be connected to the hub device 200 in a wired (for example, power line communication (power line communication, PLC)) manner and/or a wireless (for example, wireless fidelity (wireless fidelity, Wi-Fi) or Bluetooth) manner. It may be understood that the second electronic device 300 and the first electronic device 100 may be connected to the hub device 200 in a same manner or different manners. For example, both the second electronic device 300 and the first electronic device 100 are connected to the hub device 200 in the wireless manner. Alternatively, the second electronic device 300 is connected to the hub device 200 in the wireless manner, and the first electronic device 100 is connected to the hub device 200 in the wired manner. Alternatively, devices such as the smart speaker, the smart television, the body fat scale, and the floor-sweeping robot in the second electronic device 300 are connected to the hub device 200 in the wireless (for example, Wi-Fi) manner. Devices such as the smart desk lamp, the smart clothes hanger, and the smart lock in the second electronic device 300 are connected to the hub device 200 in the wired (for example, a PLC) manner. Preferably, the first electronic device 100 communicates with the second electronic device 300 in the wireless manner.

In an example, the first electronic device 100 may upload, to the hub device 200 in the wired or wireless manner, at least one of position information of the second electronic device 300 and the information such as the position, the physiological feature, the identity category, and the human body attitude of the user, that are obtained through detection.

The hub device 200, also referred to as a hub, a central control system, a host, or the like, is configured to receive the information sent by the first electronic device 100. Optionally, the hub device 200 is further configured to: construct a whole-house map, establish a whole-house coordinate system, and unify, to the whole-house coordinate system for unified measurement, position information obtained by all the first electronic devices 100. In this way, position information of the second electronic device 300 or the user obtained by all the first electronic devices 100 through detection can be unified to the whole-house coordinate system, and a specific position of the second electronic device 300 or the user in the whole house can be determined. The hub device 200 further notifies or controls the second electronic device 300 based on

EP 4 383 031 B1

the received information (including but not limited to the position information). Correspondingly, conversion between coordinate systems is also mentioned, and is described in detail later.

In an implementation, the hub device 200 receives the information that is sent by the first electronic device 100 and that includes the position information of the second electronic device 300 and at least one of the position, the physiological feature, the identity category, the human body attitude, and the like of the user. The hub device 200 notifies or controls, based on the position information of the second electronic device 300 and at least one of the position, the physiological feature, the identity category, the human body attitude, and the like of the user, the second electronic device 300 to execute a preset instruction. For example, when the user wakes up a smart speaker by a voice, the hub device 200 notifies or controls, based on positions of a plurality of smart speakers in the whole house, one or more smart speakers, that are closest to the user, to wake up. For example, when the user moves from one room to another room in the whole house, the hub device 200 controls a smart speaker in the room, from which the user leaves, to stop playing an audio, and controls a smart speaker in the room, that the user enters, to start playing (for example, continuing to play) the audio. For another example, the hub device 200 controls, based on distances between two smart speakers (the two smart speakers respectively play a left-channel audio and a right-channel audio of a same audio) and the user, playing volume of the smart speakers, so that volume of the left-channel audio received by the user is consistent with that of the right-channel audio received by the user. For another example, the user watches a video (for example, the video includes violent content) in a room by using a smart television, and it is detected that a child user enters the room, and the hub device 200 controls the smart television to stop playing the video. For another example, the hub device 200 notifies or controls, based on a position (for example, a distance or an orientation) of the user relative to a smart television, the smart television to start playing or stop playing a video.

Optionally, as shown in (a) in FIG. 1, at least one hub device 200 is disposed in the whole house. A first electronic device in each room or each region may send, to the hub device 200, all detected position information of a user and position information of one or more second electronic devices in the room or the region. The hub device 200 obtains detection data (including but not limited to the position information) of each room or each region in the whole house, so that when a preset condition is met, the hub device 200 can notify or control a corresponding second electronic device in a corresponding room or a corresponding region.

Optionally, a hub device (not shown in the figure) may be alternatively disposed in each room or each region in the whole house. The first electronic device in each room or each region may send, to the hub device in the room or the region, detected position information of a user and detected position information of one or more second electronic devices in the room or the region. The hub device in the current room or the current region is then sent to the hub device 200 in the whole house. The hub device 200 in the whole house obtains the detection data of each room or each region in the whole house, so that when a preset condition is met, a hub device 200 in a corresponding room or a corresponding region may be notified or controlled. The hub device in the corresponding room or the corresponding region then notifies or controls a corresponding second electronic device.

Optionally, the hub device in each room or each region and the hub device in the whole house may exist independently, or may be integrated with the first electronic device or the second electronic device into one device, or may be integrated with the first electronic device and the second electronic device into one device. This is not limited in this application.

Optionally, some rooms or regions may not need to be equipped with a hub device. In other words, not all rooms or regions each are equipped with at least one hub device. For example, the dining room may be equipped with no hub device. A hub device is shared in the dining room and the entrance aisle, or a hub device is shared in the dining room and the living room.

Optionally, the hub device 200 in the whole house may further assume a function of a hub device in a room or a region. For example, the hub device 200 in the whole house may further assume a function of a hub device in the living room. In an example, a hub device is disposed in each room or each region other than a room or a region (for example, the living room). When communicating with the second electronic device in each room or each region other than the room or the region (for example, the living room), the hub device 200 in the whole house still performs communication through the hub device in each room or each region. However, when communicating with the second electronic device in the room or the region (for example, the living room), the hub device 200 in the whole house no longer performs communication through the hub device in the room or the region (for example, the living room).

In an example, the communication system further includes a routing device (for example, a router). The routing device is configured to: connect to a local area network or an internet, and uses a specific protocol to select and set a path for sending a signal. For example, one or more routers are deployed in the whole house to constitute a local area network, or to access the local area network or the internet. The second electronic device 300 or the first electronic device 100 accesses the router, and performs data transmission with a device in the local area network or a device in the internet through a Wi-Fi channel established by the router. In an implementation, the hub device 200 may be integrated with the routing device into one device. For example, the hub device 200 and the routing device are integrated into a routing device, that is, the routing device has a function of the hub device 200. The routing device may be one or more routing devices in a parent-child routing device, or may be an independent routing device.

In an example, the communication system further includes a gateway (Gateway). The gateway is also referred to as an inter-network connector or a protocol converter. In an implementation, the gateway is configured to forward, to the routing device or the hub device 200, the information from the first electronic device 100. In another implementation, the function of the hub device 200 may be implemented by the gateway.

In an example, the communication system further includes a server (for example, a cloud server). The hub device 200, the routing device, or the gateway may send, to the server, the received information from the first electronic device 100. Further, the hub device 200, the routing device, or the gateway may further send, to the server, control information of the hub device 200 for the second electronic device 300. Further, the hub device 200, the routing device, or the gateway may further upload, to the server, various types of information generated in a running process of the second electronic device 300, to provide the various types of information for the user for viewing.

In an example, the communication system further includes one or more input devices (for example, the input device is a control panel). For example, a human-machine interaction interface of the communication system is displayed on the control panel. The user may view, on the man-machine interaction interface, information (for example, connection information of each device in the communication system) about the communication system, running information of the second electronic device 300, the control information of the hub device 200 for the second electronic device 300, and/or the like. The user may further input a control instruction on the man-machine interaction interface in a manner, for example, tapping a screen or a voice, to control a device in the communication system.

The foregoing content is merely some descriptions of the human sensing-based automatic control method provided in embodiments of this application. It should be noted that, in the examples or optional manners described above, any content may be freely combined, and combined content also falls within the scope of this application.

## 2. Description of a hardware structure of an electronic device

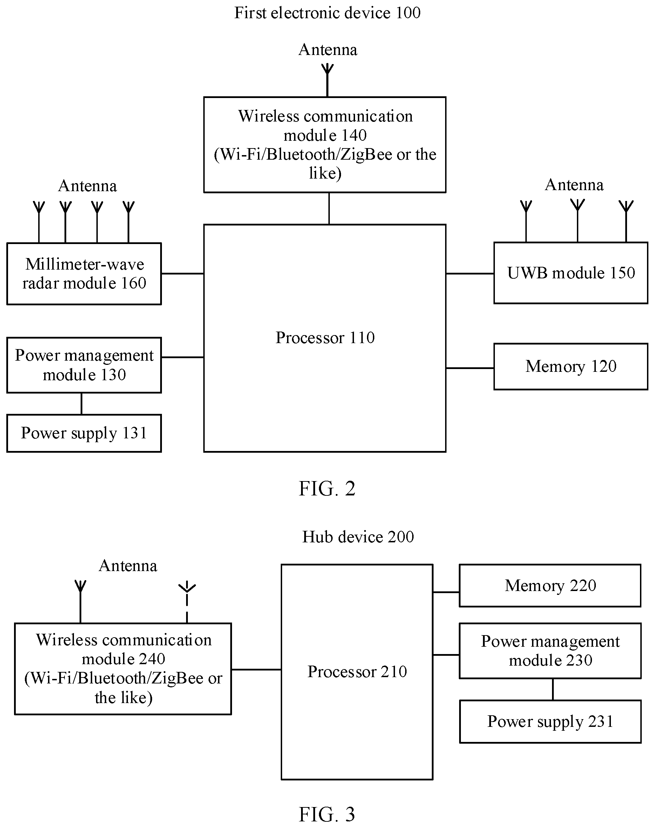

For example, FIG. 2 is a schematic diagram of a structure of a first electronic device 100.

As shown in FIG. 2, the first electronic device 100 may include a processor 110, a memory 120, a power management module 130, a power supply 131, a wireless communication module 140, a UWB module 150, a millimeter-wave radar module 160, and the like.

It may be understood that the structure shown in FIG. 2 constitutes no specific limitation on the first electronic device 100. In some other embodiments of this application, the first electronic device 100 may include more or fewer components than those shown in the figure, or combine some of the components, or split some of the components, or have different arrangements of the components. The components shown in the figure may be implemented by using hardware, software, or a combination of software and hardware.

The processor 110 may include one or more processing units. Different processing units may be independent components, or may be integrated into one or more processors. For example, the processor 110 is a central processing unit (central processing unit, CPU), or an application-specific integrated circuit (application-specific integrated circuit, ASIC), or may be configured as one or more integrated circuits implementing embodiments of this application, for example, one or more microprocessors (digital signal processors, DSPs) or one or more field programmable gate arrays (field programmable gate arrays, FPGAs).

The memory 120 may be configured to store computer-executable program code. The executable program code includes instructions. For example, the memory 120 may further store data processed by the processor 110. In addition, the memory 120 may include a high-speed random access memory, and may further include a non-volatile memory, for example, at least one magnetic disk storage component, a flash memory component, or a universal flash storage (universal flash storage, UFS). The processor 110 runs the instructions stored in the memory 120 and/or instructions stored in a memory disposed in the processor, to perform various function applications of the first electronic device 100 and data processing.

The power management module 130 is configured to receive an input from the power supply 131. The power supply 131 may be a battery, or may be a mains supply. The power management module 130 receives power supplying from the battery and/or the mains supply, and supplies power to components of the first electronic device 100, such as the processor 110, the memory 120, the wireless communication module 140, the UWB module 150, and the millimeter-wave radar module 160.

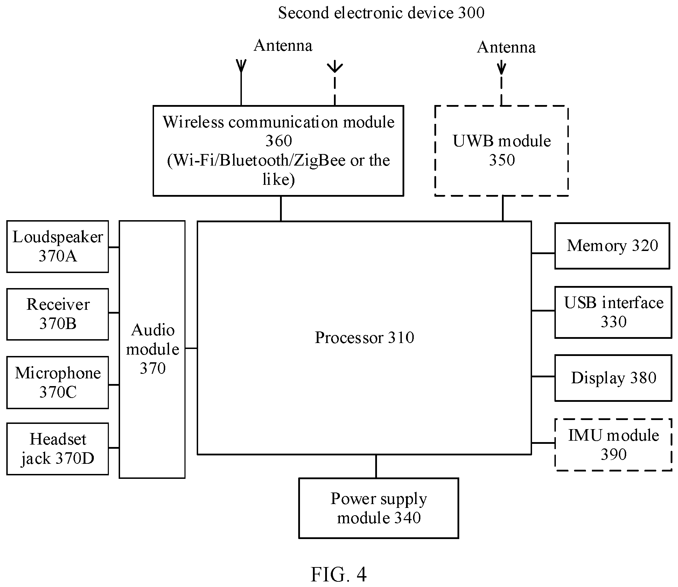

The wireless communication module 140 may provide a solution that is applied to the first electronic device 100 and includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and ZigBee (ZigBee). The wireless communication module 140 may be one or more components integrating at least one communication processing module. The wireless communication module 140 receives an electromagnetic wave through an antenna, performs frequency modulation and filtering processing on an electromagnetic wave signal, and sends a processed signal to the processor 110. The wireless communication module 140 may further receive a to-be-sent signal from the processor 110, perform frequency modulation and amplification on the to-be-sent signal, and convert a processed signal into an electromagnetic wave for radiation through the antenna. It should be noted that quantities of antennas of the wireless communication module 140, the UWB module 150, and the millimeter-wave radar module 160 in FIG. 4 are merely examples for description. It may be understood that the communication module 140, the UWB module 150, and the millimeter-wave radar module 160 each may include more or fewer antennas. This is not limited in embodiments of this application.

The UWB module 150 may provide a solution that is applied to the first electronic device 100 and includes wireless communication based on a UWB technology. For example, the UWB module 150 is configured to implement a function of the foregoing UWB base station. In an embodiment of this application, the UWB base station may locate a UWB tag. Specifically, duration within which a UWB signal flies in the air may be calculated with reference to some locating algorithms by detecting the UWB signal. A distance between the UWB tag and the UWB base station is obtained by multiplying the duration by a rate (for example, a light speed) at which the UWB signal is transmitted in the air. In an embodiment of this application, the UWB base station may further determine a direction of the UWB tag relative to the UWB base station (namely, a signal coming direction of the UWB tag) based on a phase difference obtained when the UWB signal sent by the UWB tag reaches different antennas of the UWB base station. The signal coming direction includes a horizontal coming direction and a vertical coming direction.

For example, FIG. 3 is a schematic diagram of a structure of a hub device 200.

As shown in FIG. 3, the hub device 200 may include a processor 210, a memory 220, a power management module 230, a power supply 231, a wireless communication module 240, and the like.

It may be understood that the structure shown in FIG. 3 constitutes no specific limitation on the hub device 200. In some other embodiments of this application, the hub device 200 may include more or fewer components than those shown in the figure, or combine some of the components, or split some of the components, or have different arrangements of the components. The components shown in the figure may be implemented by using hardware, software, or a combination of software and hardware.

The processor 210 may include one or more processing units. Different processing units may be independent components, or may be integrated into one or more processors. For example, the processor 210 is a central processing unit (central processing unit, CPU), or an application-specific integrated circuit (application-specific integrated circuit, ASIC), or may be configured as one or more integrated circuits implementing embodiments of this application, for example, one or more microprocessors (digital signal processors, DSPs) or one or more field programmable gate arrays (field programmable gate arrays, FPGAs).

The memory 220 may be configured to store computer-executable program code. The executable program code includes instructions. For example, the memory 220 may further store data processed by the processor 210. In addition, the memory 220 may include a high-speed random access memory, and may further include a non-volatile memory, for example, at least one magnetic disk storage component, a flash memory component, or a universal flash storage (universal flash storage, UFS). The processor 210 runs the instructions stored in the memory 220 and/or instructions stored in a memory disposed in the processor, to perform various function applications of the hub device 200 and data processing.

The power management module 230 is configured to receive an input from the power supply 231. The power supply 231 may be a battery, or may be a mains supply. The power management module 230 receives power supplying from the battery and/or the mains supply, and supplies power to components of the hub device 200, such as the processor 210, the memory 220, and the wireless communication module 240.

The wireless communication module 240 may provide a solution that is applied to the hub device 200 and includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and ZigBee (ZigBee). The wireless communication module 240 may be one or more components integrating at least one communication processing module. The wireless communication module 240 receives an electromagnetic wave through an antenna, performs frequency modulation and filtering processing on an electromagnetic wave signal, and sends a processed signal to the processor 210. The wireless communication module 240 may further receive a to-be-sent signal from the processor 210, perform frequency modulation and amplification on the to-be-sent signal, and convert a processed signal into an electromagnetic wave for radiation through the antenna.

For example, FIG. 4 is a schematic diagram of a structure of a second electronic device 300.

As shown in FIG. 4, the second electronic device 300 may include a processor 310, a memory 320, a universal serial bus (universal serial bus, USB) interface 330, a power supply module 340, a UWB module 350, a wireless communication module 360, and the like. Optionally, the second electronic device 300 may further include an audio module 370, a loudspeaker 370A, a receiver 370B, a microphone 370C, a headset jack 370D, a display 380, a sensor module 390, and the like.

It may be understood that the structure shown in FIG. 4 constitutes no specific limitation on the second electronic device 300. In some other embodiments of this application, the second electronic device 300 may include more or fewer components than those shown in the figure, or combine some of the components, or split some of the components, or have different arrangements of the components. The components shown in the figure may be implemented by using hardware, software, or a combination of software and hardware. In addition, an interface connection relationship between the modules that is shown in FIG. 4 is merely an example for description, and constitutes no limitation on the structure of the second electronic device 300. In some other embodiments of this application, the second electronic device 300 may alternatively use an interface connection manner different from that in FIG. 4, or use a combination of a plurality of interface connection manners.

The processor 310 may include one or more processing units. For example, the processor 310 may include an application processor (application processor, AP), a modem processor, a graphics processing unit (graphics processing unit, GPU), an image signal processor (image signal processor, ISP), and a video codec, and a digital signal processor (digital signal processor, DSP). Different processing units may be independent components, or may be integrated into one or more processors.

The memory 320 may be configured to store computer-executable program code. The executable program code includes instructions. For example, the memory 320 may further store data processed by the processor 310. In addition, the memory 320 may include a high-speed random access memory, and may further include a non-volatile memory, for example, at least one magnetic disk storage component, a flash memory component, or a universal flash storage (universal flash storage, UFS). The processor 310 runs the instructions stored in the memory 320 and/or instructions stored in a memory disposed in the processor, to perform various function applications of the second electronic device 300 and data processing.

The USB interface 330 is an interface that conforms to a USB standard specification, and may be specifically a mini USB interface, a micro USB interface, a USB Type-C interface, or the like. The USB interface 330 may be configured to connect to a charger to charge the second electronic device 300, or may be configured to transmit data between the second electronic device 300 and a peripheral device.

The power supply module 340 is configured to supply power to components of the second electronic device 300, for example, the processor 310 and the memory 320.

The UWB module 350 may provide a solution that is applied to the second electronic device 300 and includes wireless communication based on a UWB technology. For example, the UWB module 350 is configured to implement a function of the foregoing UWB tag.

The wireless communication module 360 may provide a solution that is applied to the second electronic device 300 and includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and ZigBee (ZigBee). The wireless communication module 360 may be one or more components integrating at least one communication processing module. The wireless communication module 360 receives an electromagnetic wave through an antenna, performs frequency modulation and filtering processing on an electromagnetic wave signal, and sends a processed signal to the processor 310. The wireless communication module 360 may further receive a to-be-sent signal from the processor 310, perform frequency modulation and amplification on the to-be-sent signal, and convert a processed signal into an electromagnetic wave for radiation through the antenna. The wireless communication module 360 and the UWB module 350 may be integrated together or disposed separately. This is not limited in this application.

The second electronic device 300 may implement an audio function by using the audio module 370, the loudspeaker 370A, the receiver 370B, the microphone 370C, the headset jack 370D, the application processor, and the like, for example, audio playing or recording.

The audio module 370 is configured to convert digital audio information into an analog audio signal output, and is further configured to convert an analog audio input into a digital audio signal. The audio module 370 may be further configured to: encode and decode an audio signal. In some embodiments, the audio module 370 may be disposed in the processor 310, or some functional modules of the audio module 370 are disposed in the processor 310.

The loudspeaker 370A, also referred to as a "speaker", is configured to convert an audio electrical signal into a sound signal. The second electronic device 300 may be for listening to an audio through the loudspeaker 370A.

The receiver 370B, also referred to as an "earpiece", is configured to convert an audio electrical signal into a sound signal.

The microphone 370C, also referred to as a "mike" or a "mic", is configured to convert a sound signal into an electrical signal. A user may make a sound near the microphone 370C through the mouth of the user, to input a sound signal to the microphone 370C.

The headset jack 370D is configured to connect to a wired headset. The headset jack 370D may be a USB interface 330, or may be a 3.5 mm open mobile terminal platform (open mobile terminal platform, OMTP) standard interface or cellular telecommunications industry association of the USA (cellular telecommunications industry association of the USA, CTIA) standard interface.

The display 380 is configured to display an image, a video, and the like. The display 380 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like.

Optionally, the sensor module 390 includes an inertial measurement unit (inertial measurement unit, IMU) module and the like. The IMU module may include a gyroscope, an accelerometer, and the like. The gyroscope and the accelerometer may be configured to determine a motion attitude of the second electronic device 300. In some embodiments, angular velocities of the second electronic device 300 around three axes may be determined by using the gyroscope. The accelerometer may be configured to detect magnitude of accelerations of the second electronic device 300 in various directions (generally on three axes). When the second electronic device 300 is still, magnitude and a direction of gravity may be detected. In an embodiment of this application, a device attitude of the second electronic device 300 may be obtained based on the angular speed and the acceleration that are measured by the IMU module. Optionally, some second electronic devices each may include an IMU module, and some second electronic devices each include no IMU module.

Optionally, the second electronic device 300 further includes a filter (for example, a Kalman filter). For example, an output of the IMU module and the output of the UWB module 350 may be superimposed, and a signal obtained after the output of the MU module and the output of the UWB module 350 are superimposed may be input to the Kalman filter for filtering, to reduce an error.

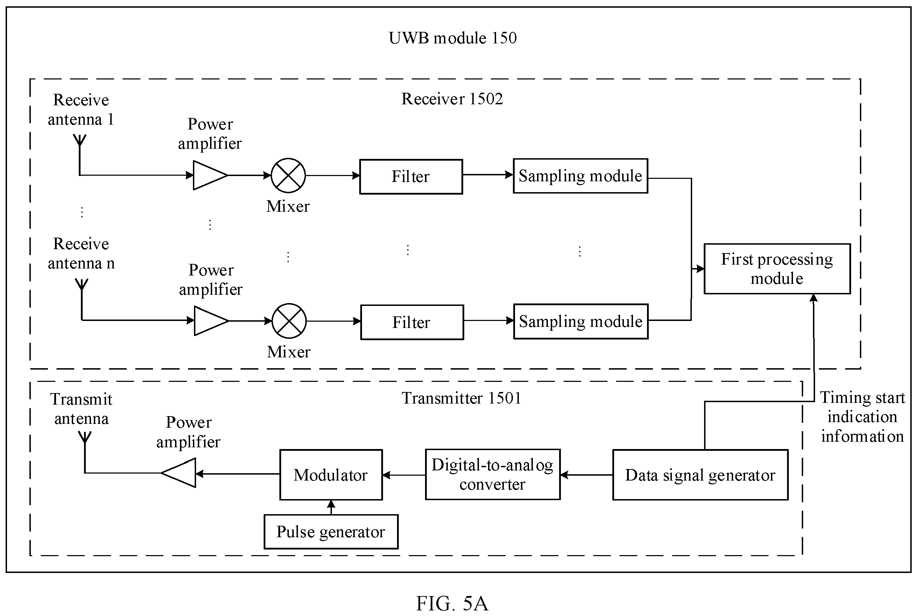

For example, FIG. 5A shows a structure of the UWB module in the first electronic device according to an embodiment of this application. As shown in FIG. 5A, the UWB module 150 includes a transmitter 1501 and a receiver 1502. The transmitter 1501 and the receiver 1502 may run independently. The transmitter 1501 includes a data signal generator, a pulse generator, a modulator, a digital-to-analog converter, a power amplifier, a transmit antenna, and the like. The data signal generator is configured to generate a data signal, and is further configured to send timing start indication information to the receiver 1502 when starting to generate the data signal. The pulse generator is configured to generate cyclical pulse signals. The digital-to-analog converter is configured to convert a digital signal into an analog signal. A data signal that needs to be sent is modulated by the modulator to the pulse signal generated by the pulse generator, and undergoes power amplification performed by the power amplifier. Then, a UWB signal is transmitted through the transmit antenna. The receiver 1502 includes a receive antenna, a mixer, a filter, a sampling module, a first processing module, and the like. Any receive antenna receives the UWB signal (for example, in a form of a pulse sequence). The received UWB signal is mixed by the mixer, filtered and amplified by the filter, and undergoes analog-to-digital conversion performed by the sampling module, to obtain a baseband digital signal. The first processing module is configured to process the baseband digital signal, to detect the UWB signal. For example, the first processing module calculates time of flight (time of flight, ToF) of the UWB signal based on the timing start indication information and a moment at which the pulse sequence is received, and calculates, based on the ToF and a rate (for example, a light speed) at which the UWB signal is transmitted in the air, a distance between the first electronic device 100 and the second electronic device 300 including the UWB module 350. For another example, the first processing module calculates, based on a phase difference between pulse sequences received by a plurality of receive antennas, a signal coming direction of the second electronic device 300 including the UWB module 350. It should be noted that, in FIG. 5A, a pulse sequence received by each receive antenna passes through a power amplifier, a mixer, a filter, and a sampling module that are in a group, which indicates a procedure of processing the pulse sequence. Optionally, the receiver 1502 may include only a power amplifier, a mixer, a filter, and a sampling module that are in one group. In an implementation, one antenna may implement a function of one transmit antenna in the transmitter 1501 and a function of one receive antenna in the receiver 1502, that is, the transmit antenna and the receive antenna are integrated into a same antenna.

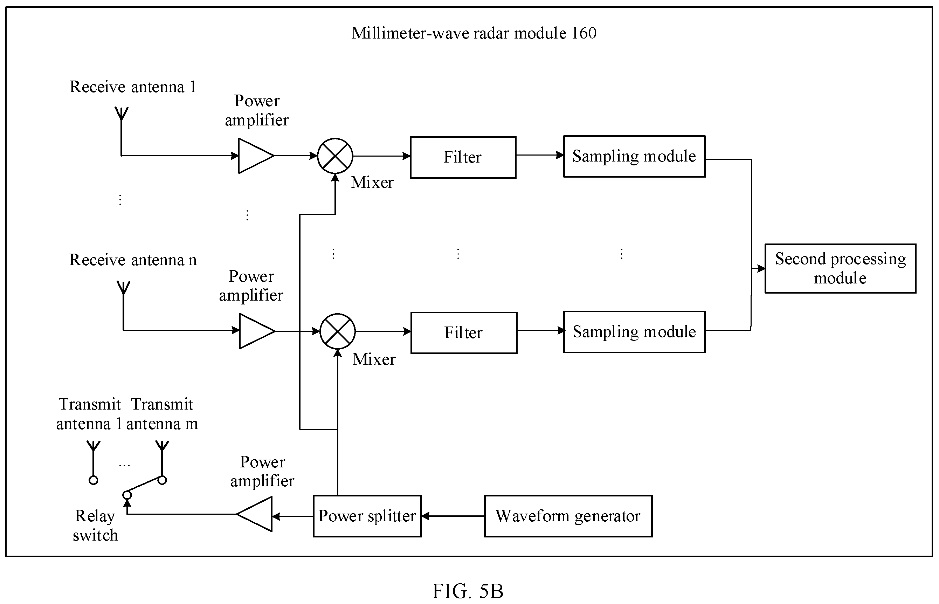

For example, FIG. 5B shows a structure of the millimeter-wave radar module in the first electronic device according to an embodiment of this application. As shown in FIG. 5B, the millimeter-wave radar module 160 includes a transmit antenna, a relay switch, a receive antenna, a waveform generator, a mixer, a filter, a second processing module, and the like. The waveform generator is configured to generate a to-be-transmitted signal. For example, the to-be-transmitted signal is a linear frequency-modulated continuous signal (linear frequency-modulated continuous wave, LFMCW). After the to-be-transmitted signal passes through a power splitter, one part of the to-be-transmitted signal undergoes power amplification performed by the power amplifier. Then, the relay switch selects a transmit antenna to transmit a millimeter-wave signal. The other part of the transmitted signal is used as a local oscillator signal, and is mixed, by the mixer, with a millimeter-wave signal received by the receive antenna. A signal output by the mixer is a difference frequency signal. The difference frequency signal is filtered and amplified by the filter, and undergoes analog-to-digital conversion (sampling) performed by the sampling module, to become a digital difference frequency signal. The second processing module detects a target by processing the digital difference frequency signal, and obtains information such as a distance and a signal coming direction of the target. In FIG. 5B, n and m are positive integers greater than or equal to 1.

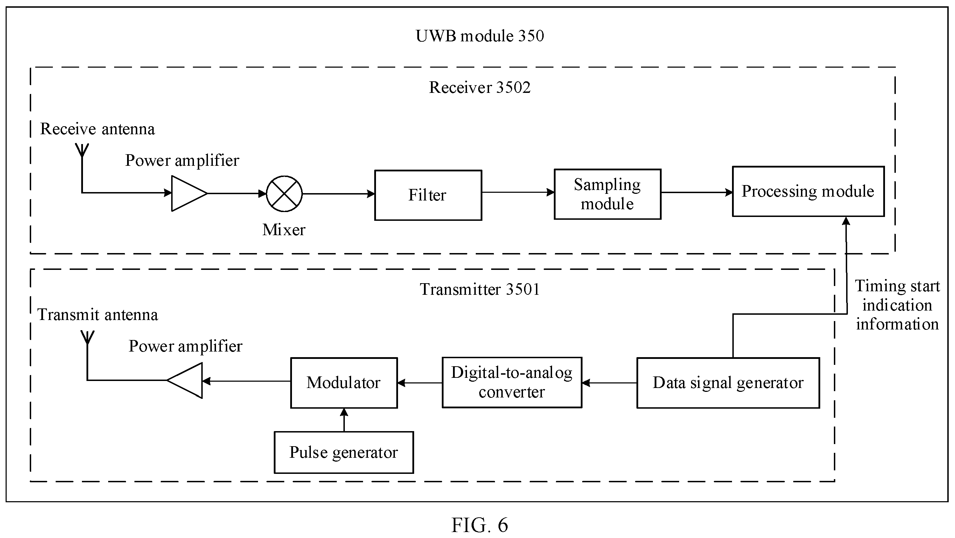

For example, FIG. 6 shows a structure of the UWB module in the second electronic device. As shown in FIG. 6, the UWB module 350 includes a transmitter 3501 and a receiver 3502. The transmitter 3501 and the receiver 3502 may run independently. The transmitter 3501 includes a data signal generator, a pulse generator, a modulator, a digital-to-analog converter, a power amplifier, a transmit antenna, and the like. The data signal generator is configured to generate a data signal. The pulse generator is configured to generate cyclical pulse signals. The digital-to-analog converter is configured to convert a digital signal into an analog signal. A data signal that needs to be sent is modulated by the modulator to the pulse signal generated by the pulse generator, and undergoes power amplification performed by the power amplifier. Then, a UWB signal is transmitted through the transmit antenna. The receiver 3502 includes a receive antenna, a mixer, a filter, a sampling module, a processing module, and the like. The receive antenna receives the UWB signal (for example, in a form of a pulse sequence). The received UWB signal is mixed by the mixer, filtered and amplified by the filter, and undergoes analog-to-digital conversion performed by the sampling module, to obtain a baseband digital signal. The processing module is configured to process the baseband digital signal, to detect the UWB signal. In an implementation, the transmit antennas in the transmitter 3501 and the receive antennas in the receiver 3502 may be integrated into a same antenna.

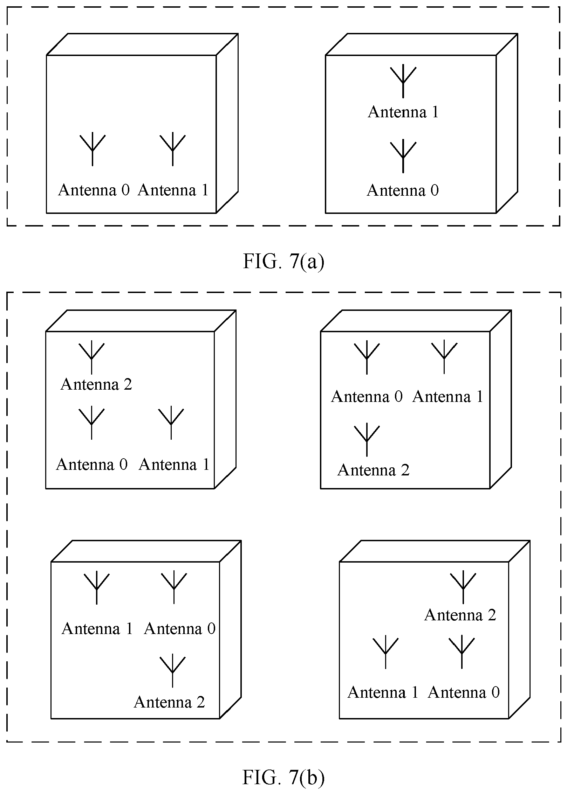

For example, FIG. 7(a) to FIG. 7(e) show several antenna distributions of the UWB module in the first electronic device according to an embodiment of this application. FIG. 7(a) shows examples of two two-antenna structures. One two-antenna structure is a transverse (for example, horizontal) antenna structure, and the other two-antenna structure is a longitudinal (for example, vertical) antenna structure. Preferably, a distance between an antenna 0 and an antenna 1 is $\lambda/2$, and $\lambda$ is a wavelength of the UWB signal. The transverse antenna structure may be configured to measure a transverse coming direction (for example, a horizontal coming direction) of the UWB signal. The longitudinal antenna structure may be configured to measure a longitudinal coming direction (for example, a vertical coming direction) of the UWB signal. In an implementation, a first electronic device on the left shown in FIG. 7(a) may cooperate with a first electronic device on the right (for example, the two first electronic devices are arranged at a specific angle), to detect a signal coming direction of the second electronic device including the UWB module.

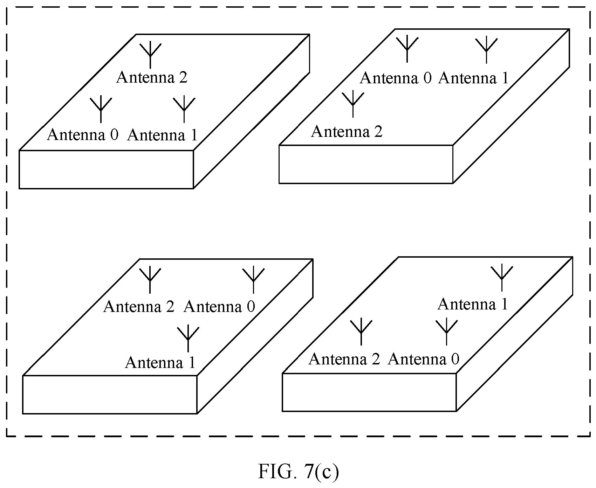

FIG. 7(b) and FIG. 7(c) show examples of a three-antenna structure. As shown in FIG. 7(b) and FIG. 7(c), three antennas have a structural relationship in an L shape (or referred to as a right triangle). As shown in FIG. 7(b), an antenna 0 and an antenna 1 are aligned in a transverse direction (for example, a horizontal direction). The antenna 0 and an antenna 2 are aligned in a longitudinal direction (for example, a vertical direction). To be specific, a plane on which the antenna 0, the antenna 1, and the antenna 2 are located is a longitudinal plane (for example, a longitudinal plane), and has a distribution relationship in the L shape on the longitudinal plane. As shown in FIG. 7(c), a plane on which an antenna 0, an antenna 1, and an antenna 2 are located is a transverse plane (for example, a horizontal plane), and a connection line between the antenna 0 and the antenna 1 (it is assumed that there is a connection line between the antenna 0 and the antenna 1) is perpendicular to a connection line between the antenna 0 and the antenna 2 (it is assumed that there is a connection line between the antenna 0 and the antenna 2). To be specific, the antenna 0, the antenna 1, and the antenna 2 have a distribution relationship in the L shape on the transverse plane. For example, when the antenna 0, the antenna 1, and the antenna 2 are distributed in the L shape, a distance between the antenna 0 and the antenna 1 and a distance between the antenna 0 and the antenna 2 may be less than or equal to $\lambda/2$, where $\lambda$ is a wavelength of the UWB signal. The distance between the antenna 0 and the antenna 1 and the distance between the antenna 0 and the antenna 2 may be the same or different.

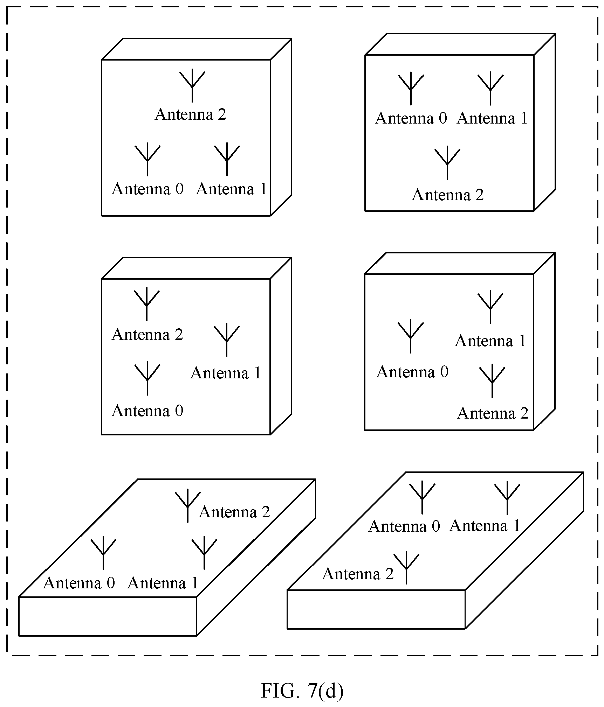

FIG. 7(d) shows examples of some other three-antenna structures. As shown in FIG. 7(d), three antennas have a structural relationship in shape of a triangle (for example, an equilateral triangle or an isosceles triangle). For example, a plane on which an antenna 0, an antenna 1, and an antenna 2 are located is a longitudinal plane (for example, a vertical plane), and are distributed in the shape of the triangle on the longitudinal plane. For another example, an antenna 0, an antenna 1, and an antenna 2 are distributed in the shape of the triangle on a transverse plane (for example, a horizontal plane). For example, when the antenna 0, the antenna 1, and the antenna 2 are distributed in the shape of the triangle, a distance between any two of the antenna 0, the antenna 1, and the antenna 2 may be less than or equal to $\lambda/2$, where $\lambda$ is a wavelength of the UWB signal. In addition, distances between any two of the antenna 0, the antenna 1, and the antenna 2 may be the same or different. For example, a distance between the antenna 0 and the antenna 1 is $\lambda/2$, and a distance between the antenna 0 and the antenna 2 is $\sqrt{3}\lambda/2$.

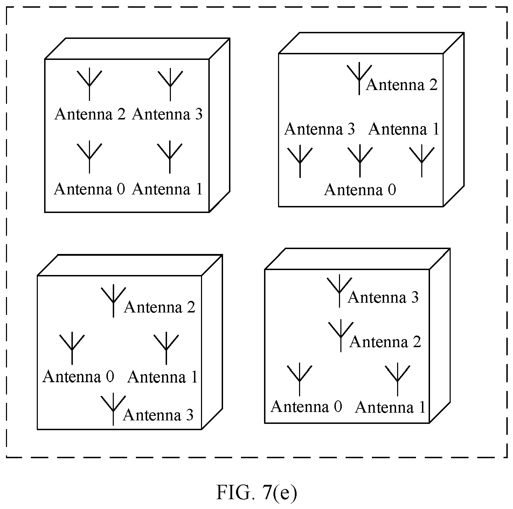

It may be understood that a case in which there are more than three antennas also falls within the scope of this application. For example, as shown in FIG. 7(e), four antennas, namely, an antenna 0, an antenna 1, an antenna 2, and an antenna 3, are distributed in a shape of a rectangle. Any three of the four antennas are distributed in the foregoing L shape or distributed in the forging shape of the triangle.

For example, the first electronic device 100 obtains a transverse coming direction of the UWB signal based on a phase difference obtained when the UWB signal from the second electronic device 300 reaches two transversely distributed antennas of the UWB module 150, and obtains a longitudinal coming direction of the UWB signal based on a phase difference obtained when the UWB signal from the second electronic device 300 reach two longitudinally distributed antennas of the UWB module 150. Further, the first electronic device 100 obtains a coming direction of the UWB signal based on the transverse coming direction and the longitudinal coming direction.

In some other examples, the UWB module 150 of the first electronic device 100 may include only one antenna. In this case, at least three first electronic devices 100 need to be used. The at least three first electronic devices 100 need to be distributed in an L shape or in a shape of a triangle, and cooperate with each other to obtain a coming direction of the UWB signal. A specific principle is similar to the foregoing descriptions. Details are not described herein again.

A quantity and a distribution of antennas in the UWB module of the first electronic device 100 are not limited in embodiments of this application provided that the coming direction of the UWB signal can be obtained.

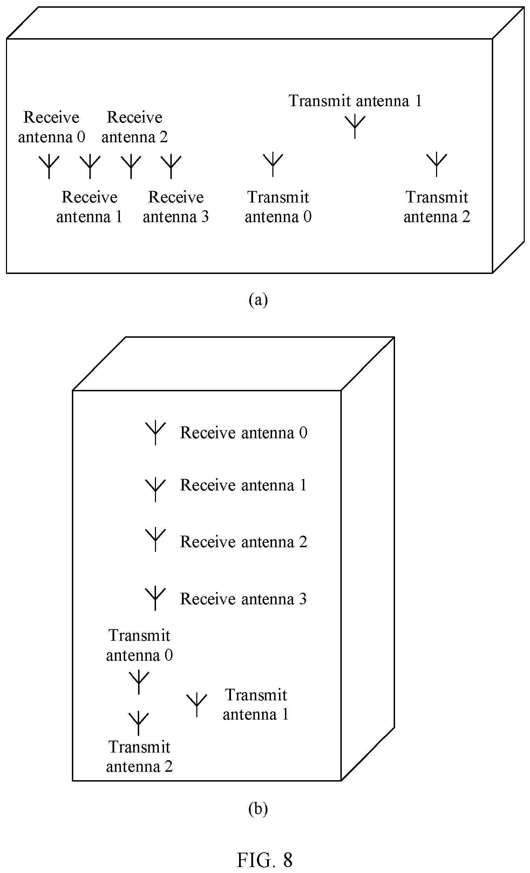

For example, FIG. 8 shows several antenna distributions of the millimeter-wave radar module in the first electronic device according to an embodiment of this application. For example, the transmit antenna includes a transmit antenna 0, a transmit antenna 1, and a transmit antenna 2. The receive antenna includes a receive antenna 0, a receive antenna 1, a receive antenna 2, and a receive antenna 3. A distribution of the transmit antenna 0, the transmit antenna 1, and the transmit antenna 2, and a distribution of the receive antenna 0, the receive antenna 1, the receive antenna 2, and the receive antenna 3 may be shown in (a) or (b) in FIG. 8. The transmit antenna is configured to transmit an electromagnetic signal (for example, an LFMCW) operating in a millimeter-wave band. The receive antenna is configured to receive a signal that is reflected by a reflector (an object or a human body) and that is of the electromagnetic signal operating in the millimeter-wave band. The millimeter-wave radar module 160 obtains a difference frequency signal based on the transmitted signal and the received signal, and determines a position of the object or the human body based on the difference frequency signal.

As shown in FIG. 8, three transmit antennas and four receive antennas are located on a same longitudinal plane (for example, a vertical plane). The three transmit antennas are distributed in a shape of a triangle on the longitudinal plane. In an example, as shown in (a) in FIG. 8, the transmit antenna 0 and the transmit antenna 2 are located on a same transverse plane (for example, a horizontal plane). The four receive antennas are located on a same transverse line (for example, a horizontal line). For example, distances between any two receive antennas are equal (for example, are $\lambda L/2$). A distance between the transmit antenna 0 and the transmit antenna 2 is equal (for example, is $2\lambda L$). A distance between the transmit antenna 1 and the transmit antenna 0 and a distance between the transmit antenna 1 and the transmit antenna 2 in a longitudinal direction are both equal (for example, are both $\lambda L/2$). Herein, $\lambda L$ is a wavelength of a highest frequency of the linear frequency-modulated continuous signal. In another example, as shown in (b) in FIG. 8, the transmit antenna 0 and the transmit antenna 2 are located on a same longitudinal line (for example, a vertical line). The four receive antennas are located on a same longitudinal line (for example, a vertical line). Distances between any two receive antennas are equal (for example, are $\lambda L/2$). A distance between the transmit antenna 0 and the transmit antenna 2 is equal (for example, is $2\lambda L$). A distance between the transmit antenna 1 and the transmit antenna 0 and a distance between the transmit antenna 1 and the transmit antenna 2 in a transverse direction are both equal (for example, are both $\lambda L/2$). It may be understood that a quantity and a distribution of transmit antennas and/or a quantity and a distribution of receive antennas may be in other forms. This is not limited in embodiments of this application.

A plurality of transmit antennas and a plurality of receive antennas are configured to: accurately measure a direction of a reflected signal, namely, a coming direction of the reflected signal, including a transverse coming direction (for example, a horizontal coming direction) and a longitudinal coming direction (for example, a vertical coming direction), and increase a receiving aperture of the millimeter-wave radar as much as possible. The millimeter-wave radar module 160 may calculate a transverse coming direction of the target based on a phase difference of the reflected signal on the plurality of receive antennas in the transverse direction (for example, the horizontal direction), and calculate a longitudinal coming direction of the target based on a phase difference of the reflected signal on the plurality of receive antennas in the longitudinal direction (for example, the vertical direction).

Optionally, there may be more than or fewer than three transmit antennas. Optionally, there may be more than or fewer than four receive antennas. This is not limited in this application. In an implementation, there is at least one transmit antenna, and there are at least three receive antennas.

In an implementation, there is one transmit antenna, and there are three receive antennas. The three receive antennas, namely, the receive antenna 0, the receive antenna 1, and the receive antenna 2, are distributed in the shape of the triangle. For ease of description, it is assumed that a connection line (actually, there is no connection line) between the receive antenna 0 and the receive antenna 1 is located in the transverse direction, and a connection line (actually, there is no connection line) between the receive antenna 0 and the receive antenna 2 is located in the longitudinal direction. In this way, after a transmitted signal of the transmit antenna is reflected by the reflector (the object or the human body), the three receive antennas separately receive reflected signals. The millimeter-wave radar module 160 may obtain a transverse coming direction (for example, a horizontal coming direction) of the reflected signal based on a phase difference between the reflected signals respectively received by the receive antenna 0 and the receive antenna 1, and obtain a longitudinal coming direction (for example, a vertical coming direction) of the reflected signal based on a phase difference between the reflected signals respectively received by the receive antenna 0 and the receive antenna 2. Further, a coming direction of the reflected signal may be determined based on the transverse coming direction and the longitudinal coming direction.

In another implementation, there are at least two transmit antennas, and there are at least two receive antennas. For example, there are two transmit antennas: the transmit antenna 0 and transmit antenna 1, and there are two receive antennas: the receive antenna 0 and the receive antenna 1. It is assumed that a connection line (actually, there is no connection line) between the transmit antenna 0 and the transmit antenna 1 is located in the transverse direction, and a connection line (actually, there is no connection line) between the receive antenna 0 and the receive antenna 1 is located in the longitudinal direction. After respective transmitted signals of the transmit antenna 0 and the transmit antenna 1 are separately reflected by the reflector (the object or the human body), at least one receive antenna receives reflected signals. The millimeter-wave radar module 160 may calculate a transverse coming direction (for example, a horizontal coming direction) of a signal (which may also be referred to as the reflected signal in this case), that is obtained after the transmitted signal is reflected, based on a phase difference obtained when the signals respectively transmitted by the transmit antenna 0 and the transmit antenna 1 reach a same receive antenna. After the transmitted signals of the transmit antennas are reflected by the reflector (the object or the human body), the two receive antennas respectively receive the reflected signals. A longitudinal coming direction (for example, a vertical coming direction) of the reflected signal is obtained based on a phase difference between the reflected signals respectively received by the receive antenna 0 and the receive antenna 1. Further, a coming direction of the reflected signal may be determined based on the transverse coming direction and the longitudinal coming direction.

In another implementation, there are at least two transmit antennas, and there are at least two receive antennas. For example, there are two transmit antennas: the transmit antenna 0 and transmit antenna 1, and there are two receive antennas: the receive antenna 0 and the receive antenna 1. It is assumed that a connection line (actually, there is no connection line) between the transmit antenna 0 and the transmit antenna 1 is located in the longitudinal direction, and a connection line (actually, there is no connection line) between the receive antenna 0 and the receive antenna 1 is located in the transverse direction. After transmitted signals of the two transmit antennas are separately reflected by the reflector (the object or the human body), at least one receive antenna receives reflected signals. The millimeter-wave radar module 160 may calculate a longitudinal coming direction (for example, a horizontal coming direction) of a signal (which may also be referred to as the reflected signal in this case), that is obtained after the transmitted signal is reflected, based on a phase difference obtained when the signals respectively transmitted by the transmit antenna 0 and the transmit antenna 1 reach a same receive antenna, and obtain a transverse coming direction (for example, a horizontal coming direction) of the reflected signal based on a phase difference between the reflected signals respectively received by the receive antenna 0 and the receive antenna 1. Further, a coming direction of the reflected signal may be determined based on the transverse coming direction and the longitudinal coming direction.

In another implementation, there are at least three transmit antennas, and there are at least one receive antenna. For example, there are three transmit antennas: the transmit antenna 0, the transmit antenna 1, and the transmit antenna 2, and there are one receive antenna: the receive antenna 0. The transmit antenna 0, the transmit antenna 1, and the transmit antenna 2 are distributed in the shape of the triangle. It is assumed that a connection line (actually, there is no connection line) between the transmit antenna 0 and the transmit antenna 1 is located in the transverse direction (for example, the horizontal direction), and a connection line (actually, there is no connection line) between the transmit antenna 0 and the transmit antenna 2 is located in the longitudinal direction. After transmitted signals of the transmit antenna 0, the transmit antenna 1, and the transmit antenna 2 are separately reflected by the reflector (the object or the human body), the receive antenna 0 receives reflected signals. The millimeter-wave radar module 160 may calculate a transverse coming direction (for example, a horizontal coming direction) of a signal (which may also be referred to as the reflected signal in this case), that is obtained after the transmitted signal is reflected, based on a phase difference obtained when the signals respectively transmitted by the transmit antenna 0 and the transmit antenna 1 reach a same receive antenna, and calculate a longitudinal coming direction (for example, a vertical coming direction) of a signal (which may also be referred to as the reflected signal in this case), that is obtained after the transmitted signal is reflected, based on a phase difference obtained when the signals respectively transmitted by the transmit antenna 0 and the transmit antenna 2 reach a same receive antenna.

## 3. Description of a locating principle

For ease of description, the following describes a specific locating principle in detail by using an example in which the first electronic device 100 includes the UWB module 150 and the millimeter-wave radar module 160.

It should be noted that locating means obtaining a position. In an embodiment of this application, coordinates in a coordinate system indicate a position. For example, coordinates of the first electronic device indicate a position of the first electronic device, coordinates of the second electronic device indicate the position of the second electronic device, and coordinates of the user indicates the position of the user. It may be understood that, in some other embodiments, a position may alternatively be indicated in another manner. This is not limited in embodiments of this application.

(1) Establishment of the first coordinate system (first electronic device coordinate system)

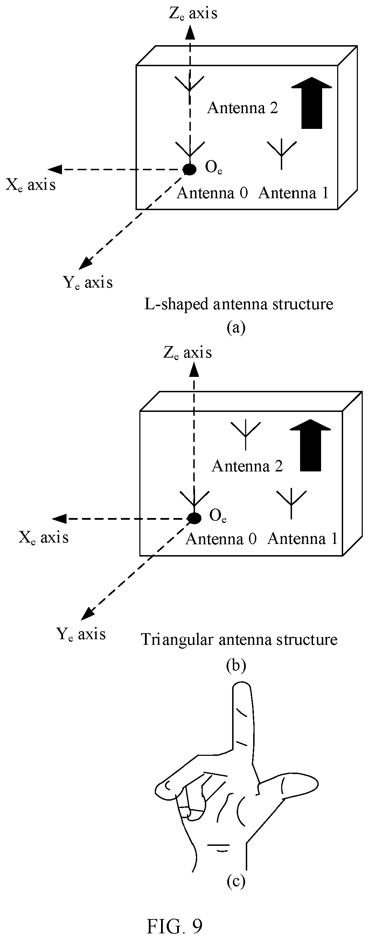

To accurately perform locating, the UWB module 150 needs to establish the first coordinate system, and specifically perform locating by using coordinates in the first coordinate system. With reference to FIG. 9, the following describes in detail a process of establishing the first coordinate system. For example, in (a) and (b) in FIG. 9, one UWB module includes three antennas. A distance between an antenna 0 and an antenna 1 and a distance between the antenna 0 and an antenna 2 are both preset distances. It is assumed that a point (for example, a center point or an end point at one end) on the antenna 0 is a coordinate origin Oe. A connection line between the antenna 0 and the antenna 1 is used as an Xe axis, and a direction in which the antenna 1 points to the antenna 0 is a positive direction of the Xe axis. In a plane on which the antenna 0, the antenna 1, and the antenna 2 are located, a straight line perpendicular to the Xe axis is used as a Ze axis, and a projection of the antenna 2 on the Ze axis is located in a positive direction of the Ze axis. In this way, the positive direction of the Ze axis can be determined. In (a) in FIG. 9, the antenna 2 is located in the positive direction of the Ze axis. In (b) in FIG. 9, the projection of the antenna 2 on the Ze axis is in the positive direction of the Ze axis. Finally, a direction of a Ye axis is determined according to a rule of a right-hand rectangular coordinate system based on directions of the Xe axis and the Ze axis. The right-hand rectangular coordinate system may be referred to as a right-hand system for short, and is one of methods for specifying a rectangular coordinate system in space. As shown in (c) in FIG. 9, positive directions of an Xe axis, a Ye axis, and a Ze axis in the right-hand rectangular coordinate system are defined as follows: The right hand is placed at a position of an origin, the thumb, the index finger, and the middle finger are at right angles to each other, when the thumb and index finger are on a same plane, the thumb points to the positive direction of the Xe axis, and the middle finger points to the positive direction of the Ze axis, a direction to which the index finger points is the positive direction of the Ye axis.

In some examples, to facilitate calculation and reduce a calculation error, the Ze axis may be set on a vertical plane, and the positive direction of the Ze axis is opposite to a gravity direction. Optionally, prompt information may be marked on an outer surface of the first electronic device 100, and indicates a correct installation manner or placement manner. In this way, the Ze axis of the first coordinate system is located on the vertical plane, and the positive direction of the Ze axis is opposite to the gravity direction. For example, as shown in (a) in FIG. 9 or (b) in FIG. 9, an arrow is marked on an outer surface of the UWB base station, and is for prompting to install or place the first electronic device 100 in a direction indicated by the arrow (a direction of the arrow faces upward). In this way, the Ze axis of the first coordinate system is located on the vertical plane, and the positive direction of the Ze axis is opposite to the gravity direction. For example, when installing the first electronic device, the user may make an arrow on an outer surface of the first electronic device parallel to a wall surface, and a direction of the arrow face upward. In this way, the Ze axis of the first coordinate system is located on the vertical plane, and the positive direction of the Ze axis is opposite to the gravity direction. For example, when installing the first electronic device, the user may use an instrument, for example, a plumb bob, to make an arrow on an outer surface of the first electronic device parallel to a vertical line determined by the plumb bob, and a direction of the arrow face upward. In this way, the Ze axis of the first coordinate system is located on the vertical plane, and the positive direction of the Ze axis is opposite to the gravity direction.

Alternatively, the first electronic device 100 may include only one UWB module, and the UWB module 150 may include only one antenna. As a result, three first electronic devices 100 need to cooperate with each other to establish the first coordinate system. In this case, for a detailed process of establishing the first coordinate system, refer to the Chinese Patent Application No. 202110872916.6. Details are not described herein again. It should be noted that the Chinese Patent Application No. 202110872916.6 is incorporated into this application by reference in its entirety, and falls within the scope of this application.

For example, a positive direction of a Ye axis is alternatively determined according to a rule of a left-hand rectangular coordinate system based on directions of the Xe axis and the Ze axis. The left-hand rectangular coordinate system may be referred to as a left-hand system for short, and is one of methods for specifying a rectangular coordinate system in space. Positive directions of an Xe axis, a Ye axis, and a Ze axis in the left-hand rectangular coordinate system are defined as follows: The left hand is placed at a position of an origin, the thumb, the index finger, and the middle finger are at right angles to each other, when the thumb and index finger are on a same plane, the thumb points to the positive direction of the Xe axis, and the middle finger points to the positive direction of the Ze axis, a direction to which the index finger points is the positive direction of the Ye axis.

For ease of description, in embodiments of this application, the Ye axis, a Yb axis, and a Yt axis, and positive directions of the Ye axis, the Yb axis, and the Yt axis are determined according to the rule of the right-hand rectangular coordinate system. A person skilled in the art should understand that determining the Ye axis, the Yb axis, the Yt axis, and the positive direction of the Ye axis, the Yb axis, and the Yt axis according to the rule of the left-hand rectangular coordinate system or in another manner also falls within the scope of this application. In addition, names of any two or more axes in any one of the first coordinate system, the second coordinate system, and a third coordinate system may be switched provided that the foregoing rule or manner is satisfied. Certainly, the positive directions of the three axes in the first coordinate system may alternatively be determined according to another rule. Details are not described herein again.

Optionally, the first coordinate system may be automatically established after a specific input is received, or may be pre-established.

For example, after the first electronic device 100 is installed according to a requirement of the prompt information, when the first electronic device 100 receives the specific input, the first electronic device 100 automatically establishes the first coordinate system. The specific input may be a user input, or may be a non-user input (for example, an instruction message from another device, for example, a remote control, is received).

For example, after the first electronic device 100 is installed according to a requirement of the prompt information, when the first electronic device 100 receives the specific input, the first electronic device 100 automatically invokes related information locally or from a server, to invoke the pre-established first coordinate system. Unless otherwise specified, the server in this application may be a hub device in a home, or may be a cloud server.

It should be noted that the point on the antenna 0 is used as the origin of the first coordinate system. This is merely an example. A point on another antenna (for example, the antenna 1) may alternatively be the origin of the first coordinate system.

## (2) Establishment of the second coordinate system

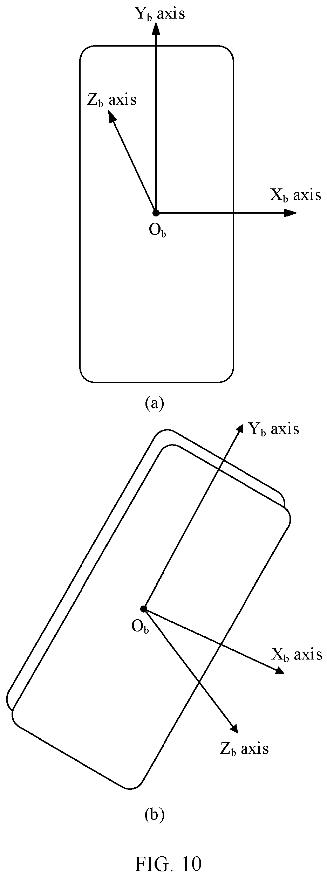

For example, FIG. 10 shows a process of establishing the second coordinate system according to an embodiment of this application. As shown in (a) in FIG. 10, an edge contour of the second electronic device includes four sides: two vertical sides and two horizontal sides. Ob is the gravity center or the center of the second electronic device. An axis that includes the point Ob and parallel to the transverse edge of the second electronic device is an Xb axis. A positive direction of the Xb axis points to the right side of the second electronic device. An axis that includes the point Ob and is parallel to the vertical edge of the second electronic device is a Yb axis. A positive direction of the Yb axis points to the upper side of the second electronic device. A pointing direction of the second electronic device is the positive direction of the Yb axis. A Zb axis is perpendicular to a plane on which the Xb axis and the Yb axis are located. A positive direction of the Zb axis is determined according to a rule of a right-hand rectangular coordinate system. Optionally, Ob may be the center of the second electronic device, or Ob may be the center of an IMU module of the second electronic device (on a premise that the second electronic device includes the IMU module). (b) in FIG. 10 is a three-dimensional diagram of the second electronic device in (a) in FIG. 10.

It should be noted that FIG. 10 shows only an example of the second coordinate system. The second coordinate system may alternatively be defined according to another rule. For example, a coordinate origin Ob may alternatively be any point on the second electronic device, or any point outside the second electronic device. In addition, directions of the three axes of the second coordinate system are not limited to the positive directions of the Xb axis, the Yb axis, and the Zb axis shown in (a) or (b) in FIG. 10.

Optionally, the second coordinate system may be pre-established. For example, during delivery of the second electronic device, the second coordinate system has been established, and related information of the second coordinate system is stored locally or on a server. When the second electronic device is started or when the first electronic device receives a specific input, the second electronic device invokes the related information of the second coordinate system locally or from the server.

## (3) Establishment of the third coordinate system

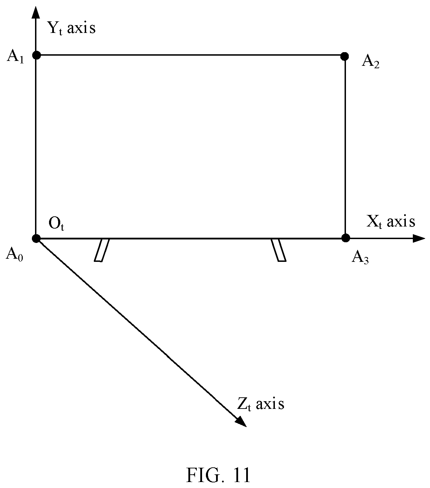

For example, FIG. 11 shows a process of establishing the third coordinate system according to an embodiment of this application. As shown in FIG. 11, an edge contour of the second electronic device includes four sides: a first side A0A1, a second side A1A2, a third side A2A3, and a fourth side A3A0. The first side A0A1 and the third side A2A3 are vertical sides, and the second side A1A2 and the fourth side A3A0 are horizontal sides. Optionally, an intersection (namely, the lower left corner of a display region of the second electronic device) at which the leftmost side of the display region of the second electronic device intersects with the bottommost side of the display region of the second electronic device is a coordinate origin Ot. An axis that includes the point Ot and is parallel to A3A0 is an Xt axis, and a positive direction of the Xt axis is a pointing direction from a point A0 to a point A3. An axis that includes the point Ot and is parallel to A0A1 is a Yt axis, and a positive direction of the Yt axis is a pointing direction from the point A0 to a point A1. A Zt axis is perpendicular to a plane on which the Xt axis and the Yt axis are located. A positive direction of the Zt axis is determined according to a rule of a right-hand rectangular coordinate system.

It should be noted that FIG. 11 shows only an example of the third coordinate system. The third coordinate system may alternatively be defined according to another rule. Optionally, Ot may be the center of the display region of the second electronic device, or any point of the display region of the second electronic device. In addition, the forward directions of the three axes of the third coordinate system are not limited to the forward direction indicated by the Xt axis, the Yt axis, and the Zt axis shown in FIG. 11.

It should be noted that, when the edge contour of the display region of the second electronic device is an edge contour of the second electronic device, the point A0 of the second electronic device coincides with the point Ot. When the edge contour of the display region of the second electronic device is not an edge contour of the second electronic device, for example, when there is a frame outside the display region of the second electronic device, the point A0 of the second electronic device does not coincide with the point Ot.

Optionally, the third coordinate system may be pre-established. For example, during delivery of the second electronic device, the third coordinate system has been established, and related information of the third coordinate system is stored locally or on a server. When the second electronic device is started, or when the second electronic device receives a trigger, the second electronic device invokes the third coordinate system locally or from the server.

**(4) Calculation of coordinates in the first coordinate system**

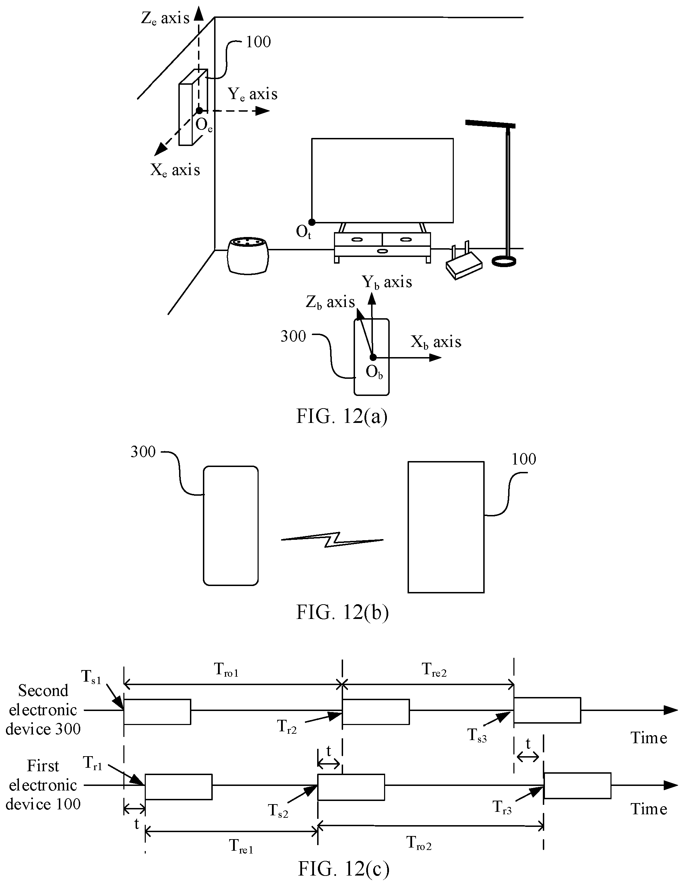

With reference to FIG. 12(a) to FIG. 12(f), the following specifically describes a calculation principle of locating coordinates of the second electronic device 300 by the first electronic device 100 in the first coordinate system. In FIG. 12(a) to FIG. 12(f), the second electronic device 300 includes a UWB module. For example, the second electronic device 300 is a mobile device (for example, a smartphone or a remote control). As shown in FIG. 12(a), the first electronic device 100 and the second electronic device 300 are located in a same room or region. The first electronic device 100 has established the first coordinate system, and the second electronic device 300 has established the second coordinate system. As shown in FIG. 12(b), the first electronic device 100 and the second electronic device 300 may perform UWB communication. Accordingly, a distance between the second electronic device 300 and the first electronic device 100 and a direction of the second electronic device 300 relative to the first electronic device 100 may be determined. As a result, the coordinates of the second electronic device 300 in the first coordinate system may be determined.

1: Measure a distance L between the first electronic device and the second electronic device.

For example, as shown in FIG. 12(c), the distance L between the first electronic device and the second electronic device may be obtained in the following manner.

The first electronic device 100 may measure the distance L between the first electronic device 100 and the second electronic device 300 by using a two-way ranging method. The two-way ranging method includes a single-sided two-way ranging (Single-sided Two-way Ranging, SS-TWR) method and a double-sided two-way ranging (Double-sided Two-way Ranging, DS-TWR) method. The DS-TWR method is used as an example herein to briefly describe the ranging method.

In the DS-TWR method, a timestamp of a round trip between the first electronic device 100 and the second electronic device 300 is recorded, and finally time of flight is obtained. In the DS-TWR method, although response duration increases, a ranging error is reduced. The double-sided two-way ranging method includes two methods, namely, a four-message manner and a three-message manner, based on different quantities of sent messages.

The three-message manner is used as an example. The second electronic device 300 sends a ranging request packet (namely, a 1st packet), and records a sending time point Ts1. After receiving the request packet, the first electronic device 100 records a receiving time point Tr1. A time difference t between Tr1 and Ts1 is transmission duration of the packet between the two devices. It takes Tre1 for the first electronic device 100 to process the request packet. Then, the first electronic device 100 sends a response packet (that is, a 2nd packet), and records a sending time point Ts2. After receiving the response packet, the second electronic device 300 records a receiving time point Tr2. A time difference between Tr2 and Ts2 is t. A time difference between the time point at which the second electronic device 300 sends the 1st packet and the time point at which the second electronic device 300 receives the 2nd packet is a time difference Tro1. It takes Tre2 for the second electronic device 300 to process the response packet. The second electronic device 300 sends a last packet (namely, a 3rd packet), and records a sending time point Ts3. The first electronic device 100 receives the 3rd packet, and records a receiving time point Tr3. A time difference between Tr3 and Ts3 is t. In addition, a time difference from the time point at which the first electronic device 100 starts to send the 2nd packet to the time point at which the first electronic device 100 receives the 3rd packet is Tro2. Consequently, transmission duration t of the packet between the two devices may be calculated according to the following formula (1), and the distance L between the first electronic device 100 and the second electronic device 300 may be calculated according to formula (2).

$$t = \frac{T_{ro1} \times T_{ro2} - T_{re1} \times T_{re2}}{T_{ro1} \times T_{ro2} + T_{re1} \times T_{re2}} \quad \text{formula (1)}$$

$$L = c \times t \quad \text{formula (2)}$$

Herein, c is a transmission rate of a UWB signal in a medium, and c is generally a light speed through selection.

Optionally, a ranging request packet may alternatively be sent by the first electronic device 100. Correspondingly, a response packet may alternatively be sent by the second electronic device 300. Correspondingly, a last packet may alternatively be sent by the first electronic device 100. The first electronic device 100 or the second electronic device 300 may calculate L according to formula (1) and formula (2).

It should be noted that the distance L between the first electronic device 100 and the second electronic device 300 may alternatively be obtained through calculation in another manner, without being limited to the manner enumerated above.

2: Determine the signal coming direction of the second electronic device.

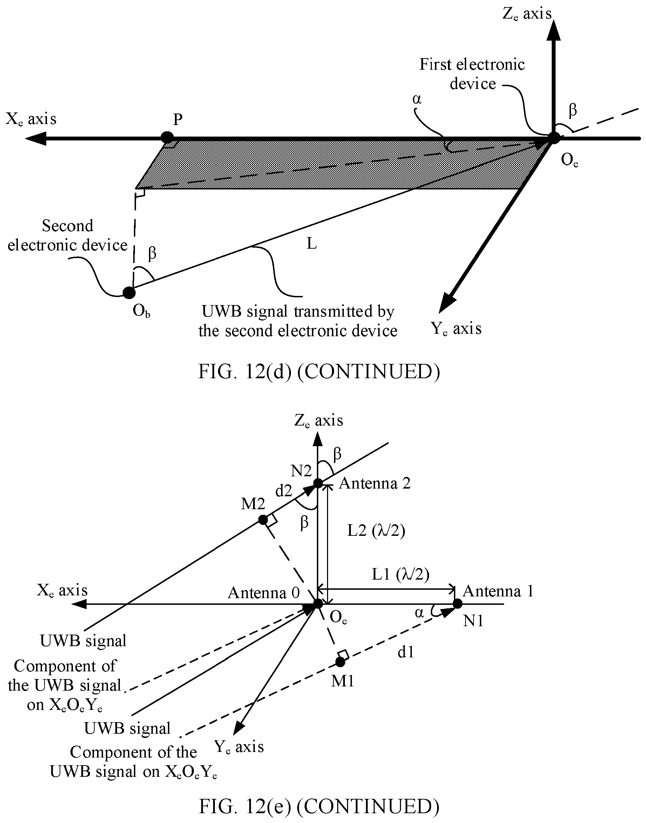

A direction of the second electronic device 200 may be indicated by using a coming direction of a signal that is transmitted by the second electronic device 200 and that is measured by the first electronic device 100. In this application, two angles $\alpha$ and $\beta$ may indicate the coming direction of the signal transmitted by the second electronic device 200. For example, as shown in FIG. 12(d), $\alpha$ is an included angle between a component that is of the UWB signal transmitted by the second electronic device and that is on a plane XeOeYe of the first coordinate system and a negative axis of the Xe axis. Usually, $\alpha \in [0, \pi]$. Herein, $\alpha$ may alternatively be understood, when it is assumed that a vector is constituted from the UWB module of the second electronic device to the UWB module of the first electronic device, as an included angle between a component of the vector on a plane XeOeYe and a negative axis of the Xe axis. Herein, $\beta$ is an included angle between the UWB signal transmitted by the second electronic device and a positive axis of the Ze axis of the first coordinate system. Usually, $\beta \in [0, \pi]$. $\beta$ may alternatively be understood, when it is assumed that the vector is constituted from the UWB module of the second electronic device to the UWB module of the first electronic device, as an included angle between the vector and a positive axis of the Ze axis.

With reference to two antenna distribution types, namely, the L shape and the triangle, in the UWB module of the first electronic device, the following uses three antennas as an example to describe in detail a process of solving $\alpha$ and $\beta$.

In an example, in FIG. 12(e), the UWB module of the first electronic device uses a three-antenna structure in the L shape. The first electronic device may determine the included angle $\alpha$ based on a UWB signal received by an antenna 1, and may determine the included angle $\beta$ based on a UWB signal received by an antenna 2. Usually, L1 and L2 are far less than the distance L between the second electronic device and the first electronic device. As a result, when reaching the UWB module of the first electronic device, the UWB signals may be considered as being parallel. Similarly, when the UWB signals reach the UWB module of the first electronic device, components of the UWB signals on the plane XeOeYe may also be considered as being parallel. As shown in FIG. 12(e), the UWB signals are represented by using two parallel solid lines, and the components of the UWB signals on the plane XeOeYe are represented by using two parallel dotted lines. A distance between an antenna 0 and the antenna 1 is L1, and a distance between the antenna 0 and the antenna 2 is L2. A straight line on which M1N1 is located and that is perpendicular to OeM1 is drawn passing through the point Oe. A straight line on which M2N2 is located and that is perpendicular to OeM2 is drawn passing through the point Oe. N1 is an intersection of a straight line on which the component of the UWB signal on the plane XeOeYe is located and the Xe axis. N2 is an intersection of a straight line on which the UWB signal is located and the Ze axis. An included angle between the UWB signal and the positive axis of the Ze axis is $\beta$. An included angle between the component of the UWB signal on the plane XeOeYe and the positive axis of the Xe axis is $\alpha$. Preferably, both L1 and L2 are $\lambda/2$. Herein, $\lambda$ is a wavelength of the UWB signal. Phases that are of a same UWB signal and that are measured by the antenna 0, the antenna 1, and the antenna 2 are respectively $\varphi_0$, $\varphi_1$, and $\varphi_2$. A phase difference between the antenna 1 and the antenna 0 is that $\Delta\varphi_1 = \varphi_1 - \varphi_0$. A phase difference between the antenna 2 and the antenna 0 is that $\Delta\varphi_2 = \varphi_2 - \varphi_0$. Because $\varphi_0$, $\varphi_1$, and $\varphi_2$ are obtained through measurement, $\Delta\varphi_1$ and $\Delta\varphi_2$ can be obtained through calculation. Because $\lambda/2$ corresponds to a phase difference $\pi$, $\alpha$ and $\beta$ may be obtained through calculation according to formula (3) and formula (4) with reference to a cosine formula, d1, d2, L1, and L2.

$$\alpha = \arccos\left(\frac{\text{d1}}{L1}\right) = \arccos\left(\frac{\Delta\varphi_1 \times (\lambda/2\pi)}{L1}\right) \quad \text{formula (3)}$$

$$\beta = \arccos\left(\frac{\text{d2}}{L2}\right) = \arccos\left(\frac{\Delta\varphi_2 \times (\lambda/2\pi)}{L2}\right) \quad \text{formula (4)}$$

When

$$L1 \text{ is } \lambda/2, \ \alpha = \arccos\left(\frac{\Delta\varphi_1 \times (\lambda/2\pi)}{\lambda/2}\right) = \arccos(\Delta\varphi_1/\pi).$$

When

$$L2 \text{ is } \lambda/2, \; \beta = \arccos\left(\frac{\Delta\varphi_2 \times (\lambda/2\pi)}{\lambda/2}\right) = \arccos(\Delta\varphi_2/\pi).$$

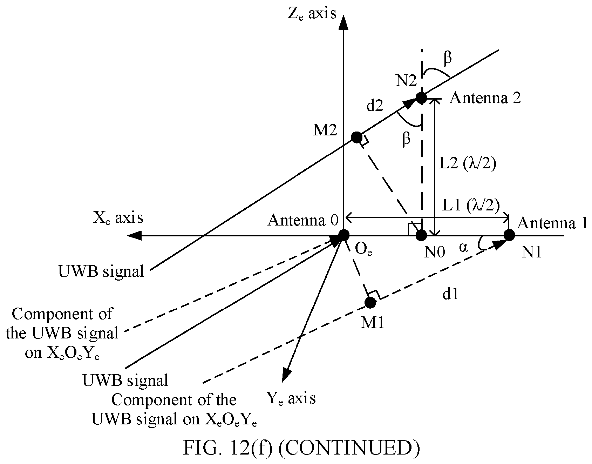

In an example, as shown in FIG. 12(f), the UWB module of the first electronic device uses a three-antenna structure in a shape of the triangle. The same as that in the descriptions in FIG. 12(e), when reaching the UWB module of the first electronic device, UWB signals may be considered as being parallel. Similarly, when the UWB signals reach the UWB module of the first electronic device, components of the UWB signals on the plane XeOeYe may also be considered as being parallel. As shown in FIG. 12(f), the UWB signals are represented by using two parallel solid lines, and the components of the UWB signals on the plane XeOeYe are represented by using two parallel dotted lines. A distance between an antenna 0 and an antenna 1 is L1. A distance between the projections of the antenna 0 and an antenna 2 on the Ze axis is L2. A point N0 is the center point of the antenna 1 and the antenna 0 on the Xe axis. A straight line on which M1N1 is located and that is perpendicular to OeM1 is drawn passing through the point Oe. A straight line on which M2N2 is located and that is perpendicular to N0M2 is drawn passing through the point N0. N1 is an intersection of a straight line on which a component of the UWB signal on the plane XeOeYe is located and the Xe axis. N2 is an intersection of a straight line on which the UWB signal is located and the Ze axis.

An included angle between the UWB signal and the positive axis of the Ze axis is $\beta$. An included angle between the component of the UWB signal on the plane XeOeYe and the negative axis of the Xe axis is $\alpha$. Preferably, both L1 and L2 are $\lambda/2$. Herein, $\lambda$ is a wavelength of the UWB signal.

A calculation formula for $\alpha$ is the same as formula (3). Details are not described herein again. When $\beta$ is calculated, a difference between a phase $\varphi_0 + \Delta\varphi_1/2$ obtained when the UWB signal transmitted by the second electronic device reaches N0 and a phase $\varphi_2$ obtained when the UWB signal transmitted by the second electronic device reaches the antenna 2 is first calculated, that is, $\varphi_2 - (\varphi_0 + \Delta\varphi_1/2) = \varphi_2 - \varphi_0 - \Delta\varphi_1/2 = \Delta\varphi_2 - \Delta\varphi_1/2$.

Then, a wave path difference d2 obtained when the UWB signal transmitted by the second electronic device reaches N0 and the UWB signal transmitted by the second electronic device reaches the antenna 2 is calculated according to formula (5). Next, $\beta$ is obtained through calculation according to formula (6).

$$d2 = (\Delta\varphi_2 - \Delta\varphi_1/2) \times (\lambda/2\pi) \quad \text{formula (5)}$$

$$\beta = \arccos(d2/L2) = \arccos\left(\frac{(\Delta\varphi_2 - \Delta\varphi_1/2) \times (\lambda/2\pi)}{L2}\right) \quad \text{formula (6)}$$

3: Calculate the coordinates of the second electronic device in the first coordinate system based on the distance L between the second electronic device and the first electronic device and the signal coming direction of the second electronic device.

As shown in FIG. 12(d), the first electronic device may calculate, according to formula (7) based on the distance L between the second electronic device and the first electronic device and the signal coming direction (the angle $\alpha$ and the angle $\beta$) of the second electronic device, coordinates $(x_e, y_e, z_e)$ of the second electronic device in the first coordinate system established by the first electronic device.

$$\begin{cases} x^e = L\sin\beta\cos\alpha \\ y^e = L\sin\beta\sin\alpha \\ z^e = -R\cos\beta \end{cases} \quad \text{formula (7)}$$

The first electronic device 100 and the second electronic device 300 may obtain the distance L between the first electronic device 100 and the second electronic device 300 through, for example, communication interaction shown in FIG. 12(c). The first electronic device 100 may determine the coming direction of the received UWB signal based on the UWB signal. In this way, the first electronic device 100 can obtain the direction and the distance of the second electronic device 300 relative to the first electronic device 100, to obtain the coordinates of the second electronic device 300 in the first coordinate system.

When some second electronic devices each include a UWB module, the coordinates of the second electronic device in the first coordinate system may be obtained in real time or cyclically through UWB signal communication between the second electronic device and the first electronic device.

When some second electronic devices each include no UWB module, for example, a smartphone includes a UWB module, a smart speaker includes no UWB module, or a smart air conditioner includes no UWB module, there may be two marking manners.

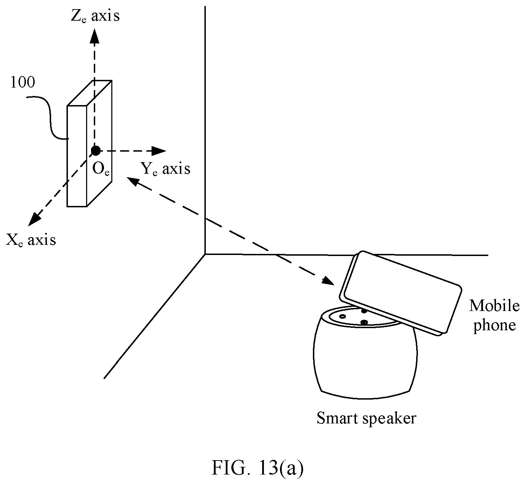

Marking manner 1: As shown in FIG. 13(a), the smartphone is moved to the smart speaker, coordinates of the smartphone in the first coordinate system are obtained through UWB signal communication between the smartphone and the first electronic device. The coordinates are marked as coordinates of the smart speaker in the first coordinate system.

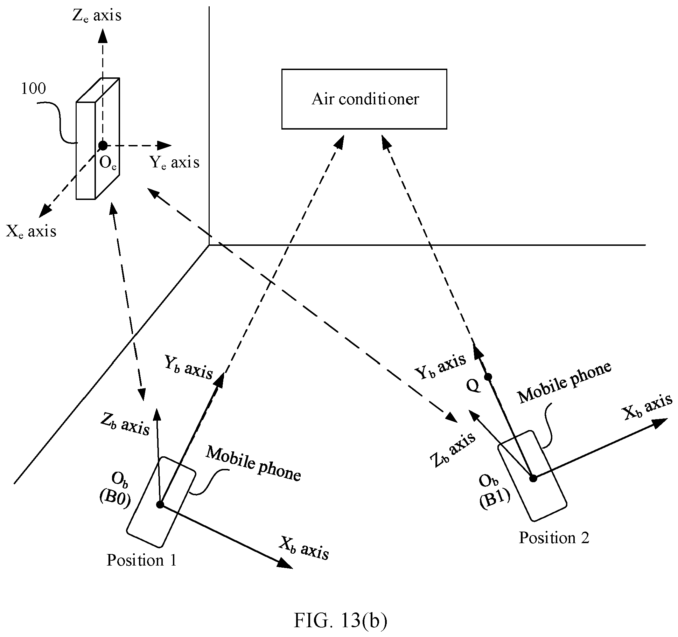

Marking manner 2: As shown in FIG. 13(b), the smartphone is first used to point to the smart air conditioner at a position 1, so that the Yb axis of the second coordinate system faces a first point (for example, a switch button) on the smart air conditioner. Coordinates 1 of the position 1 in the first coordinate system are obtained through UWB signal communication between the smartphone and the first electronic device. The smartphone further includes an IMU module. An attitude angle 1 of the smartphone at the position 1 is determined by using the IMU module. A straight line 1 established when the smartphone points to the first point on the smart air conditioner at the position 1 may be determined based on the coordinates 1 and the attitude angle 1. Then, the smartphone is used to point to the smart air conditioner at a position 2, so that the Yb axis of the second coordinate system faces the first point on the smart air conditioner. Coordinates 2 of the position 2 in the first coordinate system are obtained through UWB signal communication between the smartphone and the first electronic device. An attitude angle 2 of the smartphone at the position 2 is determined by using the IMU module. A straight line 2 established when the smartphone points to a second point on the smart air conditioner at the position 2 may be determined based on the coordinates 2 and the attitude angle 2. Coordinates, namely, coordinates of the smart air conditioner in the first coordinate system, of an intersection of the straight line 1 and the straight line 2 are calculated.

It should be noted that the smart speaker or the smart air conditioner are merely examples. The smart speaker is for representing a second electronic device easily touched by a mobile device, for example, the smartphone, held by the user. The smart air conditioner is for representing a second electronic device uneasily touched by a mobile device, for example, the smartphone, held by the user.

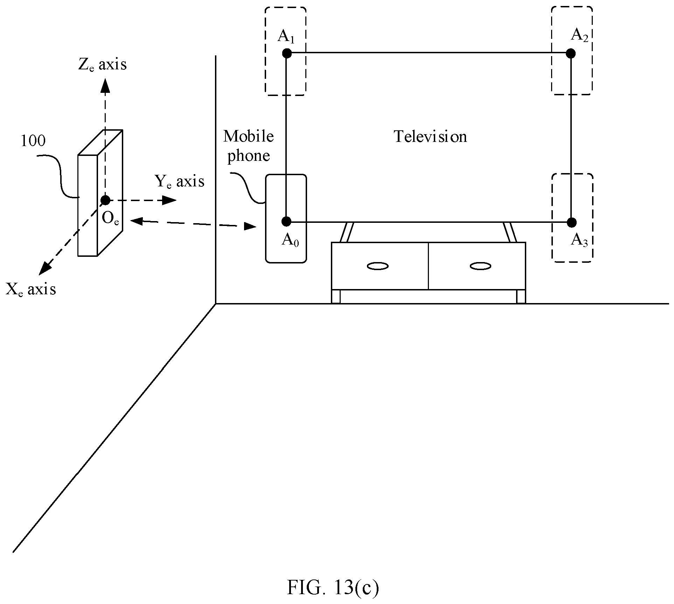

When some second electronic devices each include no UWB module, for example, a smartphone includes a UWB module, and a smart television includes no UWB module, the smart television may be marked a plurality of times by using the smartphone including the UWB module. As shown in FIG. 13(c), the smartphone is moved to a point A0 of the smart television to mark a position. The first electronic device obtains coordinates of a lower left corner contour point of the smart television. Correspondingly, in the foregoing manner, the first electronic device may obtain coordinates of a plurality of contour points (for example, the lower left corner contour point, an upper left corner contour point, and a lower right corner contour point) of the smart television. If A0, A1, A2, and A3 are marked, the first electronic device may obtain coordinates of four corner contour points. If A0, A1, and A2 are marked, the first electronic device may obtain coordinates of three corner contour points. If A0 and A2 are marked, the first electronic device may obtain coordinates of two corner contour points. In this application, which corner contour points are selected from the four corner contour points is not limited provided that a contour range of the smart television can be finally obtained. Optionally, the contour range may be a contour range of a display region of the smart television. Optionally, the display region may include a frame of a display of the smart television, or may include no frame of a display of the smart television.

Preferably, the smartphone may be moved to more than three different positions of the display region of the smart television. When being moved to one position of the display region of the smart television, coordinates of the smartphone are marked as coordinates of the position of the display region of the smart television based on input of the user. In this way, the operation is repeated, and coordinates of the more than three different positions of the display region of the smart television may be marked. Optionally, coordinates of three positions of the display region of the smart television are marked. Similarly, coordinates of a position in a front region of the smart television may be marked. In a process of marking the more than three different positions of the display region of the smart television, pointing directions, orientations, and the like of the smartphone at the more than three different positions are not required to be consistent. In other words, an orientation, a pointing direction, and the like of the smart television during marking are not limited.

Optionally, the more than three positions of the display region of the smart television may be more than three positions (for example, a 1/2 place and a 1/3 place) on an edge contour of the display region (for example, a horizontal side contour or a vertical contour of the display region) of the smart television, or may be at least three positions in a central part of the display region of the smart television.

Optionally, the second electronic device including the UWB module may not only mark the second electronic device including no UWB module, but also mark a spatial region, for example, mark a range of a three-dimensional spatial region. The following uses, as an example, the smartphone including the UWB module.

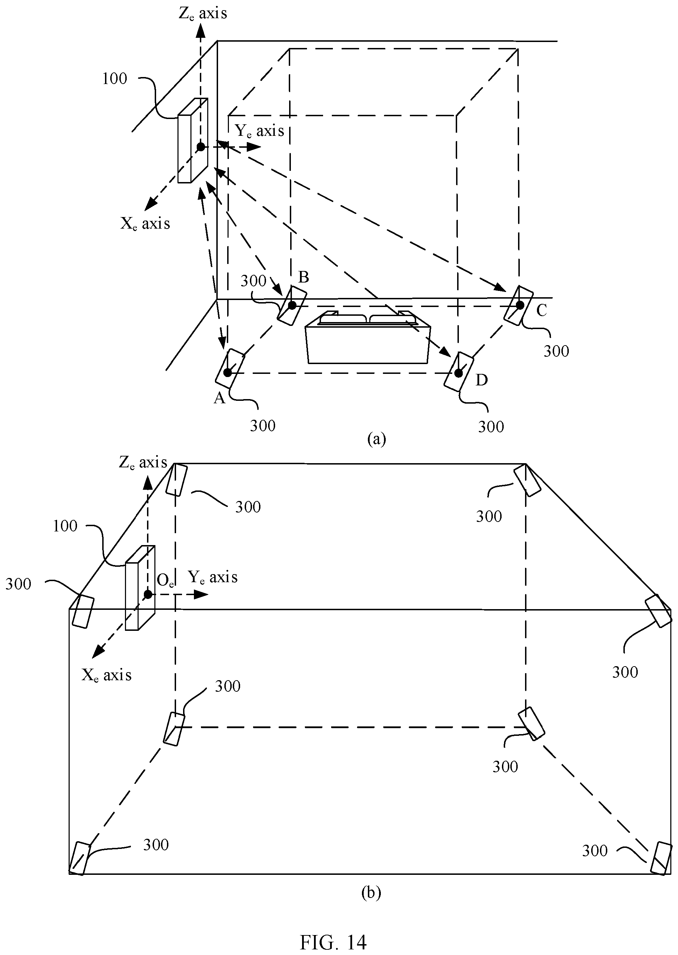

For example, as shown in (a) in FIG. 14, the smartphone is separately placed at four positions A, B, C, and D. The first electronic device 100 separately obtains coordinates $(x_A^e,\ y_A^e,\ z_A^e), (x_B^e,\ y_B^e,\ z_B^e), (x_C^e,\ y_C^e,\ z_C^e)$ , and $(x_D^e,\ y_D^e,\ z_D^e)$ of the four positions A, B, C, and D in the first coordinate system based on the foregoing principle. A vertical line $(x_A^e,\ y_A^e, ze)$ passing through the position A, a vertical line $(x_B^e,\ y_B^e, ze)$ passing through the position B,

a vertical line $(x_C^e,\ y_C^e,\ \mathrm{ze})$ passing through the position C, and a vertical line $(x_D^e,\ y_D^e,\ \mathrm{ze})$ passing through the position D constitute a three-dimensional region through enclosure. Herein, ze may be a preset value, or may be a height of the room or the region.

In another example, as shown in (b) in FIG. 14, the smartphone is separately placed at eight vertex positions of a three-dimensional spatial region. The first electronic device 100 separately obtains coordinates of the eight vertex positions in the first coordinate system based on the foregoing principle. In this way, a coordinate range of the three-dimensional spatial region can be obtained. For example, the three-dimensional spatial region is a room. In other words, a coordinate range of the room in the first coordinate system is obtained. The foregoing uses only the vertex position as an example. An actual region may be determined based on a position in which the smartphone is placed. For example, the smartphone may not be placed at the vertex position. In this way, a determined region is a region less than an entire region of the room.

### (5) UWB-based conversion between different coordinate systems

In this application, coordinate conversion in the different coordinate systems may be performed in a vector manner. Specifically, distances between two points are the same in the different coordinate systems, but direction representations of vectors constituted by the two points may be different in the different coordinate systems. For example, coordinates of the point Oe in the first coordinate system may be converted into coordinates of the point Oe in the second coordinate system in the vector manner. For example, conversion is performed in a manner of $\overrightarrow{O_eO_b}$. Distances (which are both L) of the vector $\overrightarrow{O_eO_b}$ in the first coordinate system and the second coordinate system are the same, but a direction that is of the vector $\overrightarrow{O_eO_b}$ and that is represented by using the first coordinate system is different from a direction that is of the vector $\overrightarrow{O_eO_b}$ and that is represented by using the second coordinate system. By obtaining a relative direction change between the first coordinate system and the second coordinate system, the direction that is of the vector $\overrightarrow{O_eO_b}$ and that is represented by using the second coordinate system may be learned when the direction that is of the vector $\overrightarrow{O_eO_b}$ and that is represented by using the first coordinate system is known. The coordinates of the point Oe in the second coordinate system may be obtained with reference to coordinates of the point Oe and the point Ob in the first coordinate system and coordinates of the point Ob in the second coordinate system.

The foregoing coordinate conversion manner of a same point in the different coordinate systems is merely an example. A coordinate conversion manner is not limited in this application.

A relative direction change of the different coordinate systems may be expressed by using a pitch (pitch) φ, a yaw (yaw) ψ, and a roll (roll) θ that are between the coordinate systems, for example, a pitch, a yaw, and a roll of the second coordinate system relative to the first coordinate system, and a pitch, a yaw, and a roll of the third coordinate system relative to the first coordinate system. The yaw may also be referred to as a drift angle or a heading angle. In order to obtain a pitch, a yaw, and a roll between the three coordinate systems, it is necessary to first assume that the coordinate origins of the three coordinate systems are converged to one point. For example, the coordinate origin Oe of the UWB base station is moved in parallel to the coordinate origin Ob of the second coordinate system. Correspondingly, the first coordinate system is also moved accordingly. Definitions of the pitch, the yaw, and the roll are well known to a person skilled in the art. Details are not described herein again.

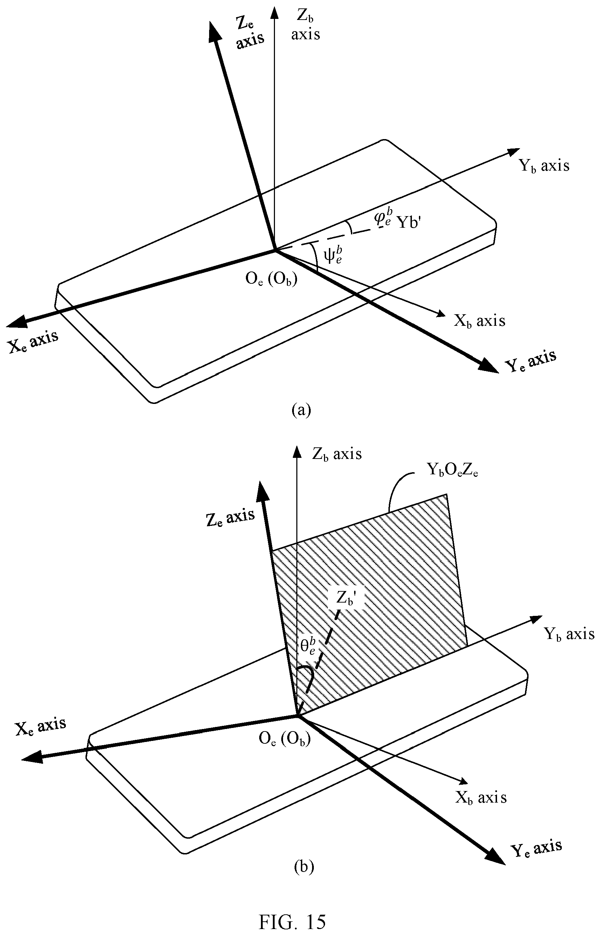

For example, FIG. 15 shows a pitch $\varphi_e^b$, a yaw $\psi_e^b$, and a roll $\theta_e^b$ of the second coordinate system relative to the first coordinate system.

The coordinate origin Ob of the second coordinate system coincides with the coordinate origin Oe of the first coordinate system after parallel movement. The three axes of the second coordinate system are the Xb axis, the Yb axis, and the Zb axis. The three axes of the first coordinate system are the Xe axis, the Ye axis, and the Ze axis. As shown in (a) in FIG. 15, OeYb' (namely, ObYb') is a projection of the Yb axis on the plane XeOeYe of the first coordinate system. As shown in (b) in FIG. 15, OeZb' (namely, ObZb') is a projection of the Zb axis on a plane YbObZe.

The pitch $\varphi_e^b$ of the second coordinate system relative to the first coordinate system is an included angle between the Yb axis of the second coordinate system and the plane XeOeYe of the first coordinate system. In other words, $\varphi_e^b$ is an included angle between ObYb' and the Yb axis. When a component of ObYb on the Ze axis is located on the positive axis of the Ze axis, $\varphi_e^b$ is positive. When a component of ObYb on the Ze axis is located on a negative axis of the Ze axis, $\varphi_e^b$ is negative.

The yaw $\psi_e^b$ of the second coordinate system relative to the first coordinate system is an included angle between the projection of the Yb axis of the second coordinate system on the plane XeOeYe of the first coordinate system and the Ye axis of the first coordinate system. In other words, $\psi_e^b$ is an included angle between ObYb' and the Ye axis. When a component of ObYb' on the Xe axis is located on the positive axis of the Xe axis, $\psi_e^b$ is positive. When a component of ObYb' on the Xe axis is located on the negative axis of the Xe axis, $\psi_e^b$ is negative.

The roll $\theta_e^b$ of the second coordinate system relative to the first coordinate system is an included angle between the Zb axis of the second coordinate system and a plane YbOeZe. In other words, $\theta_e^b$ is an included angle between ObZb' and the Zb axis. When a component that is of a projection of a positive axis of the Zb axis on the plane YbOeZe and that is on the Xb axis is located on a positive axis of the Xb axis, $\theta_e^b$ is positive. When a component that is of a projection of a positive axis of the Zb axis on the plane YbOeZe and that is on the Xb axis is located on a negative axis of the Xb axis, $\theta_e^b$ is negative.

Alternatively, when a component that is of a projection of ObZb' on a plane XbObYb and that is on the Xb axis is located on a positive axis of the Xb axis, $\theta_e^b$ is positive. When a component that is of a projection of ObZb' on a plane XbObYb and that is on the Xb axis is located on a negative axis of the Xb axis, $\theta_e^b$ is negative.

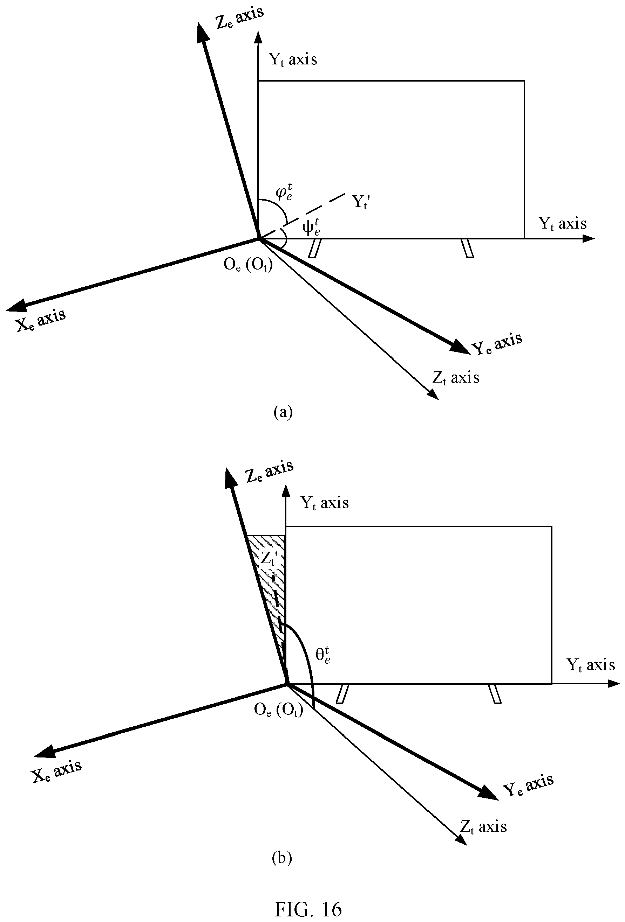

For example, FIG. 16 shows a pitch $\varphi_e^t$, a yaw $\psi_e^t$, and a roll $\theta_e^t$ of the third coordinate system relative to the first coordinate system.

As shown in FIG. 16, the coordinate origin Ot of the third coordinate system coincides with the coordinate origin Oe of the first coordinate system after parallel movement. The three axes of the third coordinate system are the Xt axis, the Yt axis, and the Zt axis. The three axes of the first coordinate system are the Xe axis, the Ye axis, and the Ze axis. As shown in (a) in FIG. 16, OeYt' (namely, OtYt') is a projection of the Yt axis on the plane XeOeYe of the first coordinate system. As shown in (b) in FIG. 16, OeZt' (namely, OtZt') is a projection of the Zt axis on a plane YtOeZe.

The pitch $\varphi_e^t$ of the third coordinate system relative to the first coordinate system is an included angle between the Yt axis of the third coordinate system and the plane XeOeYe of the first coordinate system. In other words, $\varphi_e^t$ is an included angle between OeYt' (namely, OtYt') and the Yt axis. When a component of OeYt on the Ze axis is located on the positive axis of the Ze axis, $\varphi_e^t$ is positive. When a component of OeYt on the Ze axis is located on the negative axis of the Ze axis, $\varphi_e^t$ is negative.

The yaw $\psi_e^t$ of the third coordinate system relative to the first coordinate system is an included angle between the projection of the Yt axis of the third coordinate system on the plane XeOeYe of the first coordinate system and the Ye axis of the first coordinate system. In other words, $\psi_e^t$ is an included angle between OeYt' (namely, OtYt') and the Ye axis. When a component of OeYt' on the Xe axis is located on the positive axis of the Xe axis, $\psi_e^t$ is positive. When a component of OeYt' on the Xe axis is located on the negative axis of the Xe axis, $\psi_e^t$ is negative.

The roll $\theta_e^t$ of the third coordinate system relative to the first coordinate system is an included angle between the Zt axis of the third coordinate system and the plane YtOeZe. In other words, $\theta_e^t$ is an included angle between OtZt' and the Zt axis. When a component that is of a projection of a positive axis of the Zt axis on the plane YtOeZe and that is on the Xt axis is located on a positive axis of the Xt axis, $\theta_e^t$ is positive. When a component that is of a projection of a positive axis of the Zt axis on the plane YtOeZe and that is on the Xt axis is located on a negative axis of the Xt axis, $\theta_e^t$ is negative.

Alternatively, when a component that is of a projection of OtZt' on a plane XtOtYt and that is on the Xt axis is located on a positive axis of the Xt axis, $\theta_e^t$ is positive. When a component that is of a projection of OtZt' on a plane XtOtYt and that is on the Xt axis is located on a negative axis of the Xt axis, $\theta_e^t$ is negative.

A direction change of the third coordinate system relative to the first coordinate system may be expressed by using an attitude matrix $C_e^t$.

$$C_e^t =$$

$$\begin{bmatrix} cos\theta_e^t cos\psi_e^t + sin\varphi_e^t sin\theta_e^t sin\psi_e^t & -cos\theta_e^t sin\psi_e^t + sin\varphi_e^t sin\theta_e^t cos\psi_e^t & -cos\varphi_e^t sin\theta_e^t \\ cos\varphi_e^t sin\psi_e^t & cos\varphi_e^t cos\psi_e^t & sin\varphi_e^t \\ sin\theta_e^t cos\psi_e^t - sin\varphi_e^t cos\theta_e^t sin\psi_e^t & -sin\theta_e^t sin\psi_e^t - sin\varphi_e^t cos\theta_e^t cos\psi_e^t & cos\varphi_e^t cos\theta_e^t \end{bmatrix}$$

formula (8)

The foregoing formula (8) for the attitude matrix $C_e^t$ is the conventional technology, and may be obtained by a person skilled in the art from the conventional technology, for example, the attitude matrix in Chapter 1.2.1 in the book Inertial Navigation (Beijing: Science Press, ISBN 7-03-016428-8, Qin Yongyuan, first edition in May 2006, first printing in May 2006).

The foregoing only shows examples of conversion of the second coordinate system and the third coordinate system relative to the first coordinate system. A person skilled in the art should understand that conversion of another coordinate system is also performed according to the same formula based on the foregoing principle, and only a corresponding parameter is modified.

Optionally, the second electronic device may include the IMU module. Optionally, the IMU module of the second electronic device is first calibrated. To be specific, a coordinate system on which a pitch, a yaw, and a roll that are output by the IMU module of the second electronic device are based is calibrated to the first coordinate system, or $C_b^e$ output by the IMU module of the second electronic device is calibrated to $\begin{bmatrix} 1 & 0 & 0 \\ 0 & 1 & 0 \\ 0 & 0 & 1 \end{bmatrix}$. In this way, as the second electronic device is subsequently moved, the pitch, the yaw, and the roll that are output by the IMU module of the second electronic device are the pitch, the yaw, and the roll of the second coordinate system relative to the first coordinate system. Alternatively, $C_b^e$ output by the IMU module of the second electronic device is transposed, to reflect a direction change of the second coordinate system relative to the first coordinate system.

For example, the second coordinate system of the second electronic device may be enabled to be parallel to the first coordinate system (for example, the Xb axis is parallel to the Xe axis, the Yb axis is parallel to the Ye axis, and the Zb axis is parallel to the Ze axis), and positive directions of corresponding coordinate axes of the two coordinate systems are enabled to be the same (for example, the positive direction of the Xb axis is the same as the positive direction of the Xe axis, the positive direction of the Yb axis is the same as the positive direction of the Ye axis, and the positive direction of the Zb axis is the same as the positive direction of the Ze axis). In this case, a pitch, a yaw, and a roll that are output by the IMU module of the second electronic device are set to 0.

For example, the second coordinate system of the second electronic device may be enabled to be parallel to the first coordinate system, and positive directions of all axes of the two coordinate systems are enabled to be the same. In this case, the IMU module of the second electronic device outputs $C_b^e = \begin{bmatrix} 1 & 0 & 0 \\ 0 & 1 & 0 \\ 0 & 0 & 1 \end{bmatrix}$ 0 through adjustment.

**(6) Establishment of a fourth coordinate system (millimeter-wave radar coordinate system)**

The millimeter-wave radar module 160 of the first electronic device 100 is configured to implement a function of the millimeter-wave radar. A plurality of antennas in the millimeter-wave radar have a distance difference in a transverse direction (for example, a horizontal direction) and/or a longitudinal direction (for example, a vertical direction). A coordinate system (the fourth coordinate system) of the millimeter-wave radar may be established by using the distance difference between the antennas.

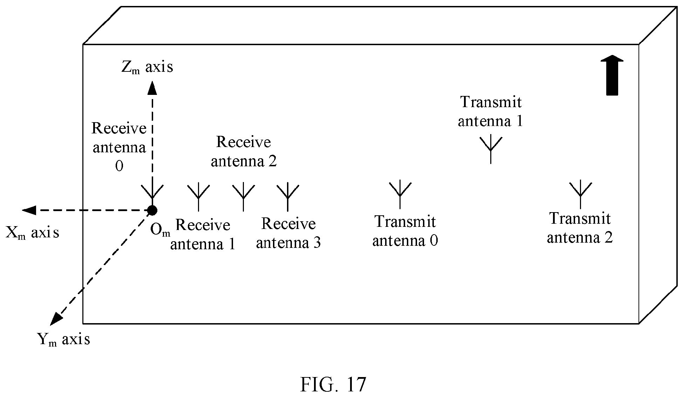

In an example, the millimeter-wave radar module 160 includes three transmit antennas and four receive antennas. For example, as shown in FIG. 17, the three transmit antennas and the four receive antennas are located on a same longitudinal plane (for example, a vertical plane). The three transmit antennas are distributed in a shape of a triangle on the longitudinal plane. A transmit antenna 0 and a transmit antenna 2 are located on a same transverse plane. The four receive antennas are located on a same transverse line (for example, a horizontal line). In an implementation, a point (for example, an end point on one side) on the receive antenna 0 is used as an origin Om of the fourth coordinate system. A connection line between the receive antenna 0 and a receive antenna 1 is used as an Xm axis of the fourth coordinate system. In addition, a direction in which the receive antenna 1 points to the receive antenna 0 is a positive direction of the Xm axis. A straight line that passes through the origin Om and is perpendicular to the Xm axis is a Zm axis of the fourth coordinate system. In addition, a direction pointing to a zenith direction is a positive direction of the Zm axis. Then, a Ym axis of the fourth coordinate system and a positive direction of the Ym axis are determined with reference to a rule of a right-hand rectangular coordinate system. Optionally, prompt information may be marked on the outer surface of the first electronic device 100, and is for prompting a correct installation manner or a correct placement manner. In this way, the three transmit antennas and the four receive antennas of the millimeter-wave radar module 160 in the first electronic device 100 are located on the same longitudinal plane.

Names of the three axes in the fourth coordinate system and positive directions of the three axes may alternatively be defined in another manner. Details are not described herein again. The Xm axis, the Ym axis, and the Zm axis in the fourth coordinate system shown in FIG. 17 are used as an example for description in embodiments of this application.

It should be noted that the point on the receive antenna 0 is used as the origin of the fourth coordinate system, which is merely an example. A point on another antenna (for example, the receive antenna 1) may alternatively be the origin of the fourth coordinate system.

Optionally, the fourth coordinate system may be pre-established. An installation worker only needs to install the first electronic device 100 as required. For example, before delivery of the first electronic device 100, the fourth coordinate system has been established, and related information of the fourth coordinate system is stored locally or on a server. When the first electronic device 100 is started, or when the first electronic device 100 receives a specific trigger, the first electronic device 100 invokes the related information of the fourth coordinate system locally or from the server. Unless otherwise specified, the server in this application may be a hub device 200 in a home, or may be a cloud server.

Preferably, the outer surface of the first electronic device 100 may have only one piece of marked prompt information. The marked prompt information indicates installation of the first electronic device. In this way, the transmit antenna and the receive antenna of the millimeter-wave radar module, and the antenna of the UWB module all meet a preset requirement.

(7) Calculation of coordinates in the fourth coordinate system

1: Determine a distance between a reflection point and the millimeter-wave radar module, and a radial speed of the reflection point.

(1) Determine the distance between the reflection point and the millimeter-wave radar module.

The transmit antenna of the millimeter-wave radar module 160 transmits a signal. The signal is reflected by the reflection point, and then is received by the receive antenna of the millimeter-wave radar module 160. A frequency at which an LFMCW millimeter-wave radar transmits a signal increases linearly as time varies. This type of signal is referred to as a chirp (Chirp) signal. With reference to FIG. 5B, the millimeter-wave radar module 160 receives the chirp signal through the receive antenna. The received signal and a local oscillator signal are mixed by the mixer, and a difference frequency signal is output. The difference frequency signal is filtered and amplified by the filter and the sampling module, and then undergoes analog-to-digital conversion to become a digital difference frequency signal.

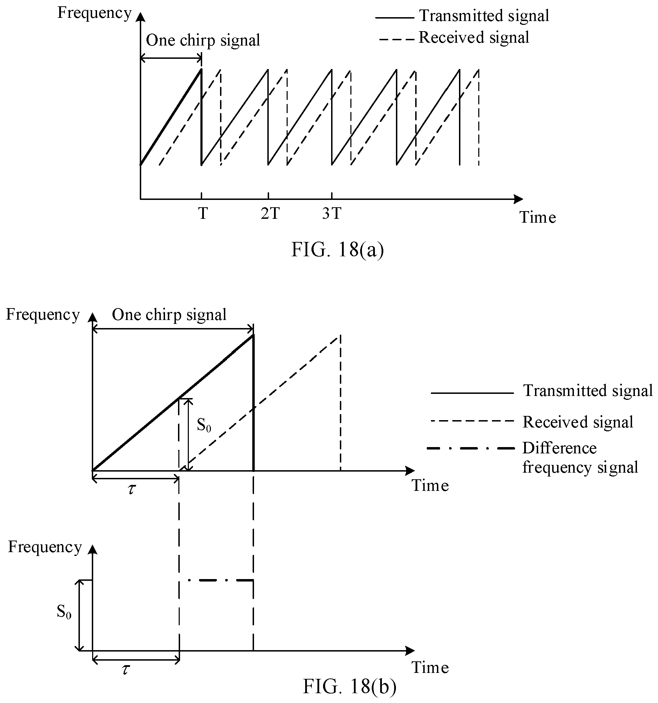

For example, FIG. 18(a) to FIG. 18(e) are a schematic diagram of a principle of determining the distance and the radial speed of the reflection point by the millimeter-wave radar according to an embodiment of this application. As shown in FIG. 18(a), a solid line is the transmitted signal of the millimeter-wave radar module 160, and a dotted line is the received signal of the millimeter-wave radar module 160. For a chirp signal, one frequency sweep cycle Tc is usually at a microsecond ($\mu$s) level, and a frequency modulation rate S0 (namely, a frequency change rate) reaches an order of magnitude of 1012 (unit: Hz/s). In this embodiment of this application, a chirp signal in one frequency sweep cycle Tc is referred to as one chirp signal. Usually, it is considered that a spatial position of the target within one frequency sweep cycle Tc remains unchanged.

As shown in FIG. 18(b), in one frequency sweep cycle Tc, the transmit antenna transmits the chirp signal. After duration $\tau$, the receive antenna receives a signal reflected back from the reflection point. A frequency difference between the received signal and the transmitted signal is $\tau$*S0. The frequency difference between the received signal and the transmitted signal is a frequency f0 of the difference frequency signal. In other words, f0=$\tau$ *S0. Herein, $\tau$=2d/c, d is the distance between the reflection point and the millimeter-wave radar module (which may also be considered as the first electronic device), and c is a rate at which the chirp signal is transmitted in the air, and is generally a light speed through selection. Therefore, a relationship between the distance d of the reflection point and the frequency f0 of the difference frequency signal is shown in formula (9).

$$d = f0 \times c / (2 \times S0) \quad \text{formula (9)}$$

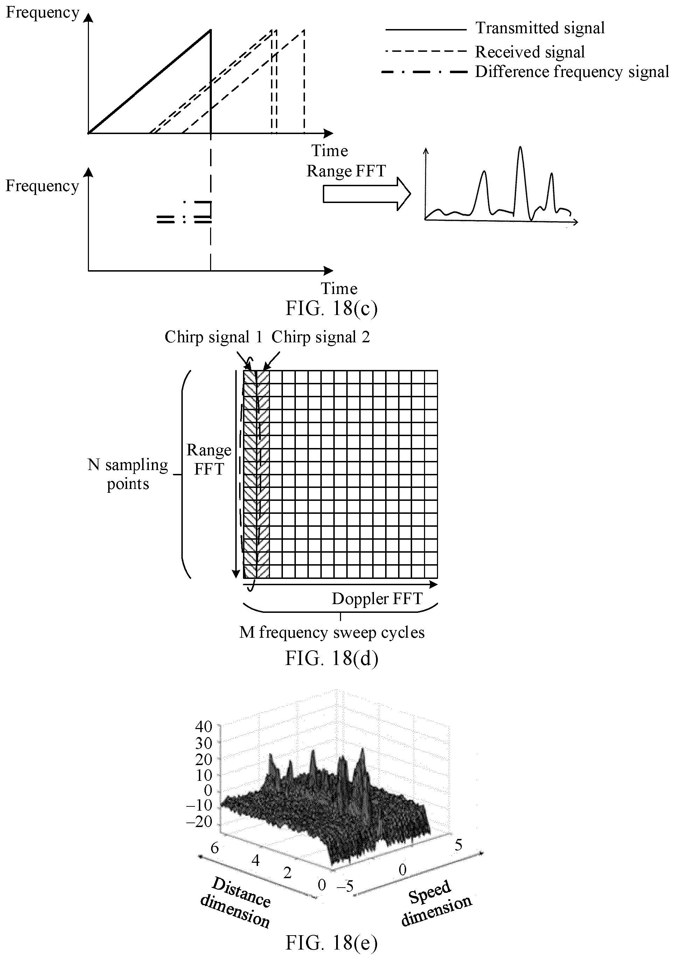

A time-domain signal may be converted into a frequency-domain signal through a Fourier transform. A sine wave in time domain correspondingly generates a peak value in frequency domain. The peak value corresponds to the frequency f0 of the difference frequency signal. For example, as shown in FIG. 18(c), the transmitted signal of the millimeter-wave radar module is reflected back by three reflection points, to obtain three signals. The millimeter-wave radar module receives the three received signals, and separately obtains three corresponding difference frequency signals. A fast Fourier transform (fast Fourier transform, FFT) is performed on the three difference frequency signals to obtain a range (range) curve (referred to as a range FFT (range FFT)), and a spectrum having three different separated peaks may be generated. Each peak value indicates that there is one reflection point in a corresponding place. A frequency of the difference frequency signal may be obtained by calculating a frequency corresponding to the peak value. A distance of the reflection point may be obtained by detecting the frequency of the difference frequency signal.

Similarly, a Doppler FFT (Doppler FFT) is performed on a plurality of difference frequency signals from a same reflection point within different frequency sweep cycles Tc, to obtain a phase difference between the plurality of difference frequency signals. A radial speed of the reflection point may be obtained by detecting the phase difference between the plurality of difference frequency signals. For a detailed principle, refer to the conventional technology. Details are not described herein again.

The millimeter-wave radar module receives the chirp signal, performs mixing, power amplification, and filtering on the transmitted signal and the received signal to obtain the difference frequency signal. The analog-to-digital conversion is performed on the difference frequency signal, to obtain the digital difference frequency signal. The distance and the radial speed of the reflection point may be obtained by detecting the digital difference frequency signal.

For example, as shown in FIG. 18(d), a frame of data of the millimeter-wave radar module is data within one radar scanning cycle. One radar scanning cycle includes M frequency sweep cycles Tc. There are N sampling points of a difference frequency signal in each frequency sweep cycle Tc.

A one-dimensional range FFT may be performed on a digital difference frequency signal within one frequency sweep cycle Tc, to obtain a frequency of the difference frequency signal. In this way, the distance of the reflection point can be calculated based on the frequency of the difference signal. A quantity of points in the range FFT is a quantity N of sampling points of the difference frequency signal corresponding to the chirp signal.

A one-dimensional Doppler FFT may be performed on digital difference frequency signals from a same reflection point within a plurality of adjacent frequency sweep cycles Tc, to obtain a phase difference between the plurality of difference frequency signals. In this way, the radial speed of the reflection point can be calculated based on the phase difference between the plurality of difference frequency signals. A quantity of points in the Doppler FFT is a quantity of frequency sweep cycles included in the frame of data.

A combined operation of the range FFT and the Doppler FFT may be considered as a two-dimensional FFT performed on the frame of data. In embodiments of this application, a frame of data obtained after two-dimensional FFT processing is referred to as a frame of two-dimensional FFT data. For example, FIG. 18(e) is a schematic diagram of the frame of two-dimensional FFT data obtained by the millimeter-wave radar module. As shown in FIG. 18(e), there are a plurality of peak values in the frame of two-dimensional FFT data. Each peak value indicates that there is one reflection point in a corresponding place. A value of the reflection point in a distance dimension or a speed dimension is a distance of the reflection point or a radial speed of the reflection point.

(2) Determine a signal coming direction of the reflected signal from the reflection point.

The signal coming direction of the reflected signal includes a transverse coming direction (for example, a horizontal coming direction) and a longitudinal coming direction (for example, a vertical coming direction). A yaw may be used to represent a transverse coming direction of a signal, and a pitch may be used to represent a longitudinal coming direction of the signal. In an implementation, the yaw and the pitch may be calculated by using a phase difference between received signals of the plurality of receive antennas of the millimeter-wave radar module.

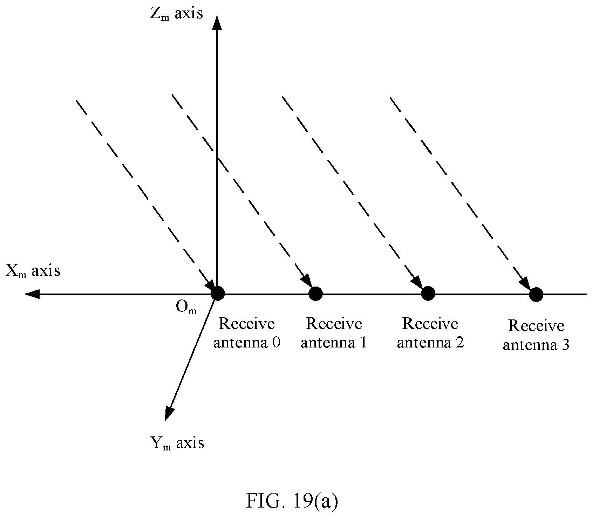

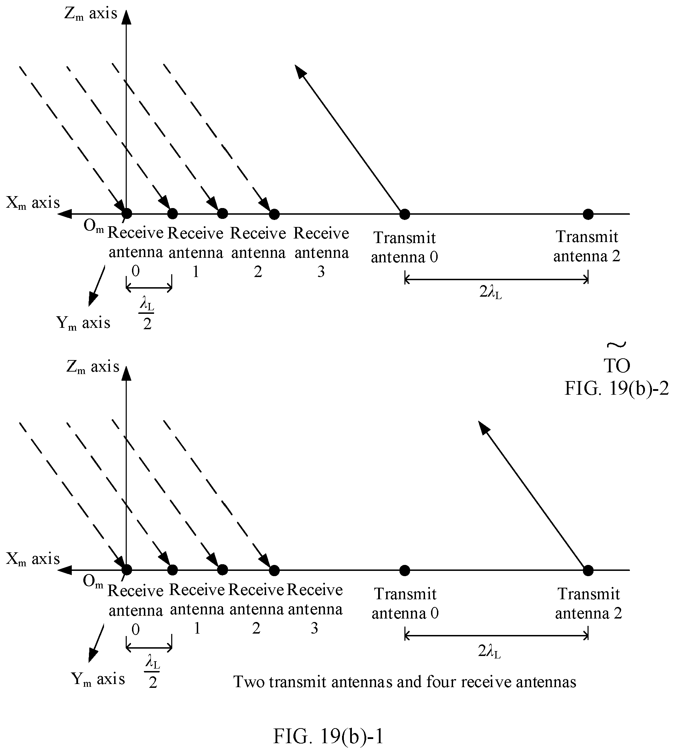

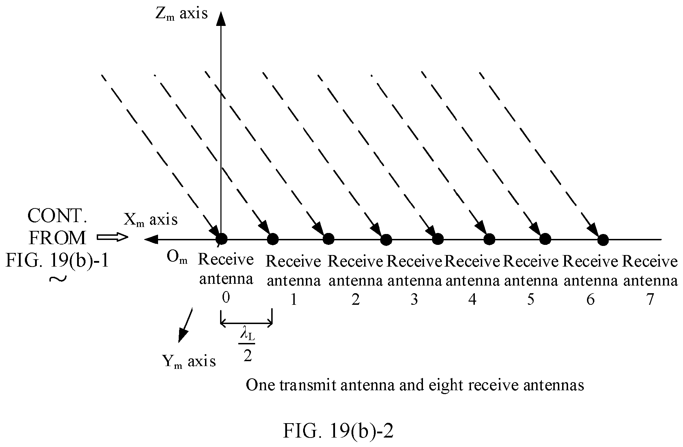

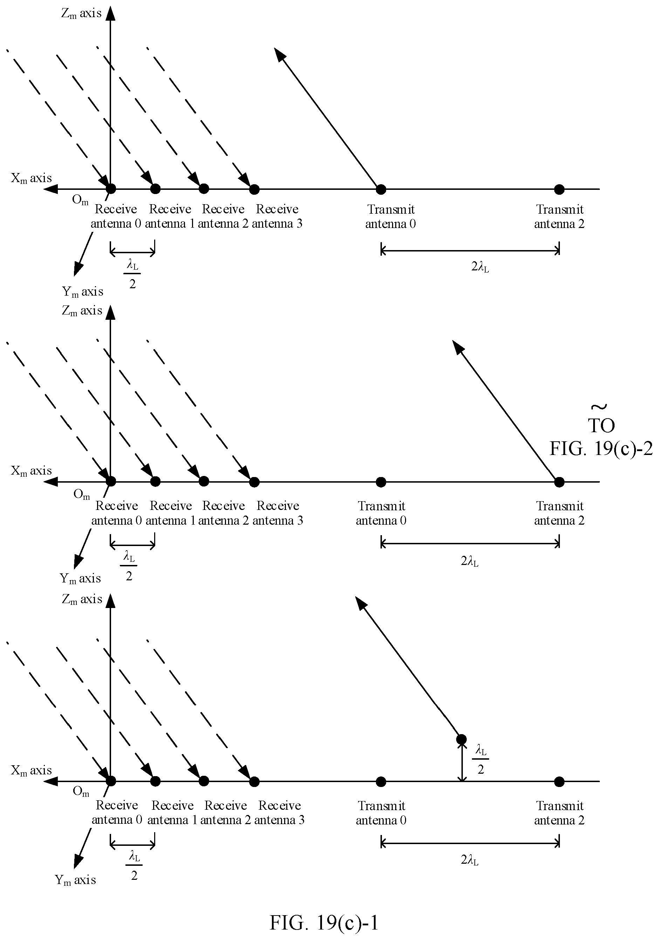

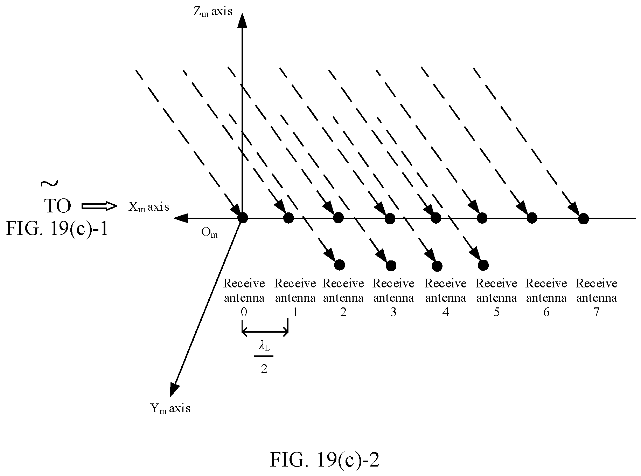

For example, FIG. 19(a) to FIG. 19(c)-2 are a schematic diagram of a principle of determining the signal coming direction of the reflected signal from the reflection point by the millimeter-wave radar according to an embodiment of this application. As shown in FIG. 19(a), the millimeter-wave radar module includes four receive antennas. A phase difference between reflected signals that reach any two different receive antennas after signals transmitted by a same transmit antenna are reflected by the reflection point may be used by the millimeter-wave radar module to measure a yaw of the reflected signal. For a specific manner in which the millimeter-wave radar module determines a transverse coming direction of the reflected signal based on a phase difference obtained when signals reach two adjacent receive antennas, refer to the method for calculating the angle $\alpha$ in FIG. 12(e). Details are not described herein again.

In an implementation, precision of measuring the signal coming direction may be improved by increasing a quantity of antennas. In an example, the antennas of the millimeter-wave radar module are of the distribution structure shown in (a) in FIG. 8. When the millimeter-wave radar module transmits signals, the transmit antenna may be switched by changing the relay switch, to separate signals of different transmit antennas by the receive antennas. For example, as shown in FIG. 19(b)-1 and FIG. 19(b)-2, when a transmit antenna 0 and a transmit antenna 2 alternately transmit signals, an effect that two transmit antennas and four receive antennas are equivalent to one transmit antenna and eight receive antennas may be implemented based on a principle that a phase difference is generated by a position difference between the antennas. For example, in FIG. 19(b)-1 and FIG. 19(b)-2, a distance between the receive antennas is $\lambda L/2$, and a distance between the transmit antenna 0 and the transmit antenna 2 is $2\lambda L$, where $\lambda L$ is a wavelength of a millimeter wave. A signal that is of the transmitted signal of the transmit antenna 2 and that reaches a receive antenna 0 may be equivalent to a received signal of a receive antenna 4. A signal that is of the transmitted signal of the transmit antenna 2 and that reaches a receive antenna 1 may be equivalent to a received signal of a receive antenna 5. A signal that is of the transmitted signal of the transmit antenna 2 and that reaches a receive antenna 2 may be equivalent to a received signal of a receive antenna 6. A signal that is of the transmitted signal of the transmit antenna 2 and that reaches a receive antenna 3 may be equivalent to a received signal of a receive antenna 7. For example, the receive antenna 4, the receive antenna 5, the receive antenna 6, and the receive antenna 7 in the schematic diagram of the transmit antenna and the eight receive antennas in FIG. 19(b)-1 and FIG. 19(b)-2 are equivalently obtained virtual receive antennas.

A phase difference obtained when signals transmitted by transmit antennas between which there is a distance in a longitudinal dimension reach the receive antenna after being reflected by the reflection point may be used by the millimeter-wave radar module to measure a longitudinal coming direction (for example, represented by a pitch) of the reflected signal. In an example, the antennas of the millimeter-wave radar module are of the structure shown in (a) in FIG. 8. There is a distance between a transmit antenna 1 and the transmit antenna 0 in the longitudinal dimension. There is a distance between the transmit antenna 1 and the transmit antenna 2 in the longitudinal dimension. A pitch of a reflected signal may be determined by comparing signals separately received by a same receive antenna from the transmit antenna 1, the transmit antenna 0 and the transmit antenna 2. For example, as shown in FIG. 19(c)-1 and FIG. 19(c)-2, signals between which there is a phase difference in the longitudinal dimension may be compared with reference to a signal that is transmitted by the transmit antenna 0 and received by the receive antenna 2 and the receive antenna 3, a signal that is transmitted by the transmit antenna 2 and received by the receive antenna 0 and the receive antenna 1, and a signal that is transmitted by the transmit antenna 1 and received by the receive antenna 0, the receive antenna 1, the receive antenna 2, and the receive antenna 3, and a longitudinal coming direction (for example, represented by a pitch) of a reflected signal may be obtained through calculation. For example, a signal that is transmitted by the transmit antenna 0 and received by the receive antenna 2 may be compared with a signal that is transmitted by the transmit antenna 1 and received by the receive antenna 0, to obtain a phase difference between the two signals, and a pitch is calculated based on the phase difference. For a specific step of calculating the pitch based on the phase difference between the received signals, refer to the method for calculating the angle $\beta$ in FIG. 12(f). Details are not described herein again.

(3) Determine coordinates of the reflection point in the fourth coordinate system.

The first electronic device may calculate, according to formula (7) based on the distance between the reflection point and the millimeter-wave radar and the signal coming direction (the yaw and the pitch) of the reflected signal, the coordinates of the reflection point in the fourth coordinate system established by the first electronic device.

(4) Determine coordinates of the user in the fourth coordinate system.

In some cases, because different parts of a human body in a large size may be provided with different clothes through wearing and have different bone structures, there may be different detection results. As a result, for detection of the human body, there may be a plurality of reflection points that may not be even distributed quite uniformly. For an object in a large size, different parts may be made from different materials, in different shapes, and the like. As a result, for detection of such an object, there may also be a plurality of reflection points that may not be even distributed quite uniformly. For a human body, because parts such as the head, a hand and a foot of the human body all reflect the transmitted signal of the millimeter-wave radar, the millimeter-wave radar detects the human body as a plurality of reflection points within the detectable range. In this case, clustering processing may be performed on point cloud data of the reflection points. To be specific, the plurality of detected reflection points are aggregated into one category, and the cluster is determined as an object or a human body.

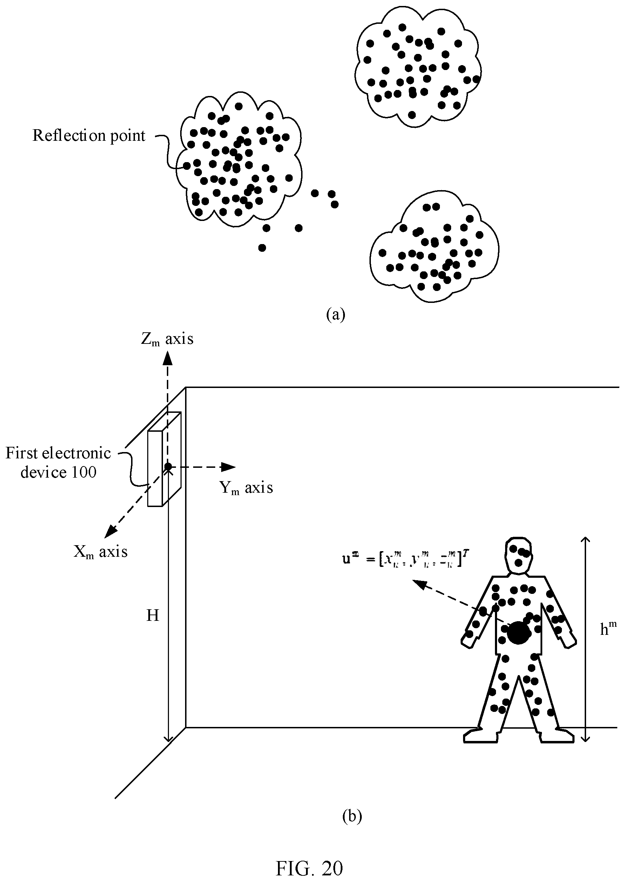

For example, (a) in FIG. 20 is a schematic diagram of an effect of performing clustering processing on the point cloud data. In (a) in FIG. 20, each point represents one reflection point detected by the millimeter-wave radar module, three closed curves respectively represent categories obtained through aggregation, and a point outside the three closed curves represents a reflection point that is not aggregated into any category. In an example, the millimeter-wave radar module clusters the plurality of reflection points into one object or human body (user) according to a clustering algorithm, and may obtain, through calculation, coordinates of the object or the human body (the user) in the fourth coordinate system based on coordinates of a plurality of reflection points obtained after clustering. For example, the coordinates of the object or the human body (the user) in the fourth coordinate system may be coordinates of a gravity center of the object or the human body in the fourth coordinate system. For example, as shown in (b) in FIG. 20, a smaller point in (b) in FIG. 20 represents the reflection point detected by the millimeter-wave radar, and a largest point is a coordinate point of the human body (the user) in the fourth coordinate system. The coordinates of the human body (the user) in the fourth coordinate system are denoted

as $u^m = [x_u^m, y_u^m, z_u^m]\mathrm{T}$.

Further, a height of the object or a height of the human body (the user) may be further obtained through calculation based on a height H of the first electronic device from the ground and the coordinates of the object or the human body (the user) in the fourth coordinate system. For example, a height hm of the human body (the user) may be calculated according to formula (10).

$$\mathrm{hm} = (\mathrm{H} + z_u^m) \times 2 \quad \text{formula (10)}$$

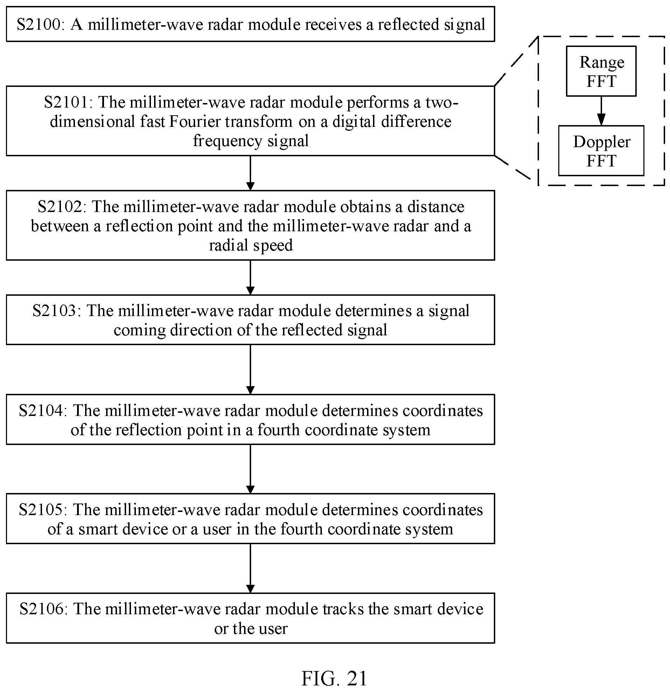

For example, FIG. 21 is a flowchart of a method for determining the coordinates of the user by the first electronic device in the fourth coordinate system according to an embodiment of this application. As shown in FIG. 21, the method may include the following steps.

S2100: The millimeter-wave radar module receives a reflected signal.

S2101: The millimeter-wave radar module performs a two-dimensional fast Fourier transform on a digital difference frequency signal.

The receive antenna of the millimeter-wave radar module receives the reflected signal. The digital difference frequency signal is obtained based on the reflected signal. The two-dimensional fast Fourier transform is performed on the digital difference frequency signal, to obtain two-dimensional FFT data.

S2102: The millimeter-wave radar module obtains a distance between a reflection point and the millimeter-wave radar and a radial speed according to a target detection algorithm.

The millimeter-wave radar may perform target detection on a frame of two-dimensional FFT data according to a target detection algorithm, to obtain a distance and a radial speed of a target.

It should be noted that, in an indoor environment, a multipath effect and clutter interference are generated, and a signal received by the millimeter-wave radar includes a target reflected signal, background noise, clutter interference, and the like. For example, in a test environment for the frame of two-dimensional FFT data shown in FIG. 18(e), there are moving human bodies respectively located in places that are 1 m, 2 m and 4 m away from the millimeter-wave radar. However, it can be learned from FIG. 18(e) that, in addition to three peak values in the places that are 1 m, 2 m and 4 m away from the millimeter-wave radar, there is a larger peak value caused by other reflected signals (the background noise, the clutter interference, and the like). If a reflected signal caused by the background noise, the clutter interference, and the like is detected as a reflection point, a false alarm is generated. In an implementation method, the distance and the radial speed of the reflection point may be obtained according to a constant false alarm rate (constant false alarm rate, CFAR) target detection algorithm, to maintain a constant false alarm rate, and improve target detection precision.

It should be noted that the millimeter-wave radar module may obtain, based on two-dimensional FFT data, the distance and the radial speed of the reflection point according to a target detection algorithm in the conventional technology as required. A used target detection algorithm is not limited in embodiments of this application. A specific implementation method of the target detection algorithm may be obtained from the conventional technology. Details are not described herein again.

S2103: The millimeter-wave radar module determines a signal coming direction of the reflected signal.

For example, a yaw and a pitch may be estimated according to an algorithm, for example, a phase difference method, a sum difference beam method, or a music method. The algorithm, for example, the phase difference method, the sum difference beam method, or the music method, may be obtained from the conventional technology. Details are not described herein again.

S2104: The millimeter-wave radar module determines coordinates of the reflection point in the fourth coordinate system.

The millimeter-wave radar determines the coordinates of the reflection point in the fourth coordinate system based on the distance between the reflection point and the millimeter-wave radar and a signal coming direction of the reflection point.

S2105: The millimeter-wave radar module determines coordinates of a smart device or the user in the fourth coordinate system.

In an implementation, detected reflection points are clustered according to the clustering algorithm, and a plurality of reflection points are clustered into the smart device or the user. The clustering algorithm includes a partition-based clustering method, a density-based partitioning method, a model-based partitioning method, a network-based partitioning method, and the like. For example, common clustering algorithms include density-based spatial clustering of applications with noise (density-based spatial clustering of applications with noise, DBSCAN), a K-means algorithm, a BIRCH algorithm, and the like. Clustering processing may be performed according to any clustering algorithm. This is not limited in embodiments of this application.

The coordinates of the smart device or the user in the fourth coordinate system may be obtained through calculation based on a coordinate average value of a plurality of reflection points of the smart device or the user obtained after clustering.

S2106: The millimeter-wave radar module tracks the smart device or the user.

The millimeter-wave radar module performs target detection on each received frame of data. Further, after an object (a smart device) or a human body in each frame of data is detected according to the target detection algorithm and the clustering algorithm, a detection result in a current frame may be further matched with a detection result in a previous frame one by one according to an association algorithm, to track the object or the human body (that is, obtain a change in a coordinate value of the object or the human body as time varies). For example, a tracking algorithm (a previous frame and subsequent frame association algorithm) is as follows: Calculate a Euclidean distance (a straight line distance between two spatial points) between two targets in two frames, determine two targets with a shortest Euclidean distance as a same target, and then link and track the target according to a Hungarian algorithm.

Further, in an implementation, the millimeter-wave radar module may determine, based on a target tracking result, that the target is stationary or moving. The millimeter-wave radar module may be further configured to detect a physiological feature (for example, a breath frequency or a heartbeat frequency) of a target in a stationary state. If it is determined that the physiological feature of the target satisfies a set condition (for example, the breath frequency falls within a preset range, or the heartbeat frequency falls within a preset range), it is determined that the target or a target obtained after clustering is the human body (the user). The user is tracked.

(8) Detection of the physiological feature, an identity category, a human body attitude, and the like of the user by the millimeter-wave radar module

With reference to accompanying drawings, the following describes in detail a specific method for detecting information such as the physiological feature, the identity category, and the human body attitude by the millimeter-wave radar module.

(1) The millimeter-wave radar module detects the physiological feature of the user.

The physiological feature of the user includes the breath frequency, the heartbeat frequency, and the like of the user. When the user is still (the position of the user does not change), slight displacement of the body of the user caused by a breath and a heartbeat may cause a phase change of the reflected signal of the millimeter-wave radar module. The breath frequency and the heartbeat frequency of the user may be obtained by detecting the phase change of the reflected signal of the millimeter-wave radar module when the user is still.

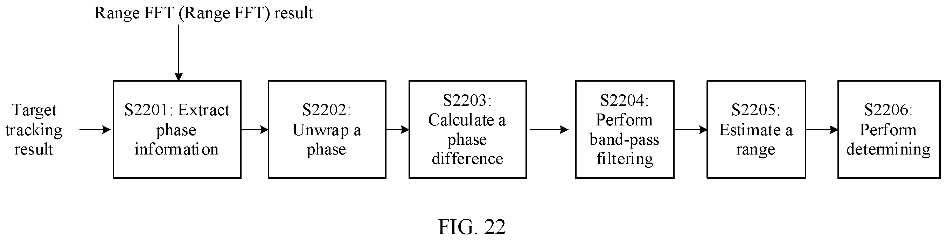

In an implementation, as shown in FIG. 22, a method for obtaining the breath frequency and the heartbeat frequency of the user by the millimeter-wave radar module may include the following steps.

S2201: Extract phase information.

In S2201, a range FFT is performed on each frame of data of the millimeter-wave radar, and a frequency of the difference frequency signal may be obtained based on a range FFT result. To be specific, a phase of the difference frequency signal may be obtained. In S2206, the millimeter-wave radar performs target tracking on the user, and may obtain a change of the position of the user as time changes, that is, may obtain a position of the user at a moment.

If the millimeter-wave radar determines that the user is still (for example a coordinate change amount of the user is less than a specified value within a period of time) based on the target tracking result, the millimeter-wave radar performs phase extraction on a range FFT result obtained at the current position of the user, that is, extracts the phase information of the difference frequency signal. For example, the radar scanning cycle is 100 ms, that is, a cycle of a frame of data is 100 ms. The phase information of the difference frequency signal is extracted once from each frame of data. Phase information of a plurality of frames of data is continuously extracted, to obtain a relationship that the phase changes with a quantity of the frames, that is, a relationship that the phase changes with time. The phase is denoted as a vibration signal v(j), where j is the quantity of the frames.

S2202: Unwrap the phase.

The phase is unwrapped, to obtain an actual displacement curve. It is specified that a phase value falls within $[-\pi, \pi]$. If the phase value obtained through calculation in S2201 is greater than $\pi$, phase unwrapping is performed by subtracting $2\pi$ from the phase value. If the phase value obtained through calculation in S2201 is less than $-\pi$, phase unwrapping is performed by adding $2\pi$ to the phase value.

S2203: Calculate a phase difference.

A subtraction is performed on consecutive phase values, and a phase difference operation is performed on the unwrapped phase, to obtain a phase difference $\Delta v$. This can enhance a heartbeat signal and eliminates any phase drift. Herein, $\Delta v(k)=v(k)-v(k-1)$.

S2204: Perform band-pass filtering.

The phase value is filtered by a band-pass filter for distinguishing separately based on the heartbeat frequency and the breath frequency. For example, a passband range of the band-pass filter is set to 0.8 Hz to 4 Hz, and the phase value is filtered, to detect heartbeat. The passband range of the band-pass filter is set to 0.1 Hz to 0.6 Hz, and the phase value is filtered, to detect a breath.

S2205: Estimate a range.

An FFT is performed on a phase difference signal, and a breath frequency and a heartbeat frequency within N frames of time are obtained based on a magnitude of a peak value and a harmonic feature.

S2206: Perform determining.

A breath frequency and a heartbeat frequency within a period of time are recorded. Obtained breath frequency and heartbeat frequency values are screened based on a preset confidence indicator (for example, an accuracy rate of 95% or a false alarm rate of 5%), and a relationship that the breath frequency and the heartbeat frequency changes with time is output.

(2) The millimeter-wave radar module detects the identity category of the user.

The millimeter-wave radar module may determine the identity category of the user based on the height hm (of the user) obtained through calculation. The identity category of the user includes adult, child, and the like.

In an implementation, when the user is within a detection range of the millimeter-wave radar module, if it is detected that the user is a moving state, the millimeter-wave radar module calculates a height of a user detected in each frame of data. The height is denoted as hm(t), indicating a height value at a moment t. An average value Hm of the height of the user may be further calculated based on hm(t), and the identity category of the user may be determined based on Hm. For example, a correspondence between the height of the user and the identity category of the user is shown in Table 1.

**Table 1**

| Identity category | Height |
|---|---|
| Adult | $H^m>120$ centimeters |
| Child | 120 centimeters$\geq H^m>50$ centimeters |
| Pet | $H^m\leq50$ centimeters |

(3) The millimeter-wave radar module detects the human body attitude of the user.

The millimeter-wave radar module may determine the human body attitude of the user based on a change of the height hm (of the user) obtained through calculation. The human body attitude includes standing, sitting, lying, and the like.

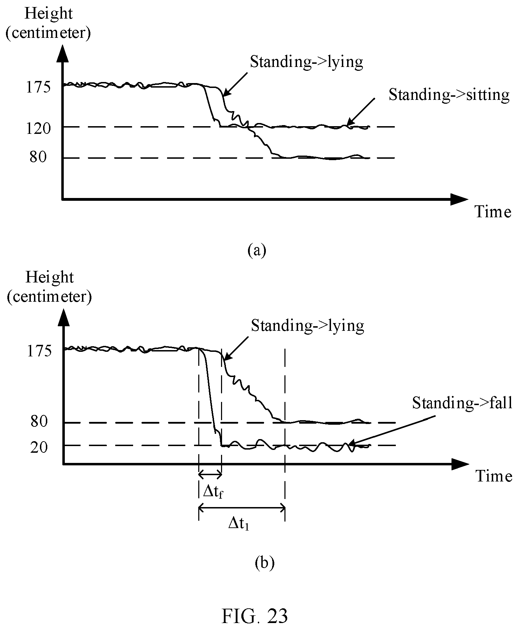

**In** an implementation, the millimeter-wave radar module performs target tracking on the user, and if it is determined that the height of the user changes, a value of a height change is greater than a preset height difference threshold, and maintenance duration obtained after the height changes is greater than preset duration, determines that the human body attitude of the user changes. For example, as shown in (a) in FIG. 23, if the millimeter-wave radar module detects that the height of the user changes from 175 centimeters to 80 centimeters and remains at 80 centimeters for a period of time, the millimeter-wave radar module determines that the user changes from standing to lying. If the millimeter-wave radar module detects that the height of the user changes from 175 centimeters to 120 centimeters and remains at 120 centimeters for a period of time, the millimeter-wave radar module determines that the user changes from standing to sitting.

**In** an example, the millimeter-wave radar module determines the human body attitude of the user based on a height difference Δh between a current height of the user and a height obtained when the user stands. For example, Δh(t) may be obtained through calculation according to formula (11), and Δh(t) indicates a height difference between a height of the user at the moment t and the height obtained when the user stands.

$$\Delta h(t)=Hm-hm(t) \quad \text{formula (11)}$$

For example, if the millimeter-wave radar module determines that Δh at a plurality of consecutive moments (that are greater than the preset duration) satisfies the preset height difference threshold, the millimeter-wave radar module determines that the human body attitude of the user changes. For example, a correspondence between the height difference Δh and the human body attitude is shown in Table 2.

**Table 2**

| Identity category | Human body attitude | Height difference Δh |
|---|---|---|
| Adult | Sitting | 30 centimeters$\leq\Delta h<60$ centimeters |
| | Lying | 60 centimeters$\leq\Delta h<120$ centimeters |

(continued)

| Identity category | Human body attitude | Height difference Δh |
|---|---|---|
| Child | Sitting | 20 centimeters≤Δh<40 centimeters |
| | Lying | 40 entimeters≤Δh<80 centimeters |

Further, the millimeter-wave radar may further identify a fall behavior of the user by monitoring the height change of the user. For example, (b) in FIG. 23 shows a height change between a fall and normal lying of the user. As shown in (b) in FIG. 23, compared with that obtained during normal lying, the height of the user changes faster during the fall (that is, a height difference generated within same duration is large), and the height obtained after the fall is lower.

In an implementation, if the millimeter-wave radar module determines that the height difference Δh between the current height of the user and the height obtained when the user stands satisfies a preset fall height threshold, and duration Δt taken by the user to change from the height obtained when the user stands to the current height satisfies a preset fall duration threshold, the millimeter-wave radar module determines a user fall. For example, a correspondence between Δh, Δt, and the user fall is shown in Table 3.

**Table 3**

| Identity category | Status | Height difference Δh | Δt |
|---|---|---|---|
| Adult | Fall | 120 centimeters≤Δh | Δt≤0.3 second |
| Child | Fall | 80 centimeters≤Δh | Δt≤0.3 second |

## (9) Conversion between the first coordinate system and the fourth coordinate system

After the first electronic device 100 establishes the first coordinate system and the fourth coordinate system, a coordinate value in the first coordinate system and a coordinate value in the fourth coordinate system need to be converted, to facilitate collaboration. For example, the coordinates of the second electronic device 300 in the first coordinate system are converted into coordinates of the second electronic device 300 in the fourth coordinate system, or coordinates of the user in the fourth coordinate system are converted into coordinates of the user in the first coordinate system. Consequently, conversion between the first coordinate system and the fourth coordinate system is mentioned.

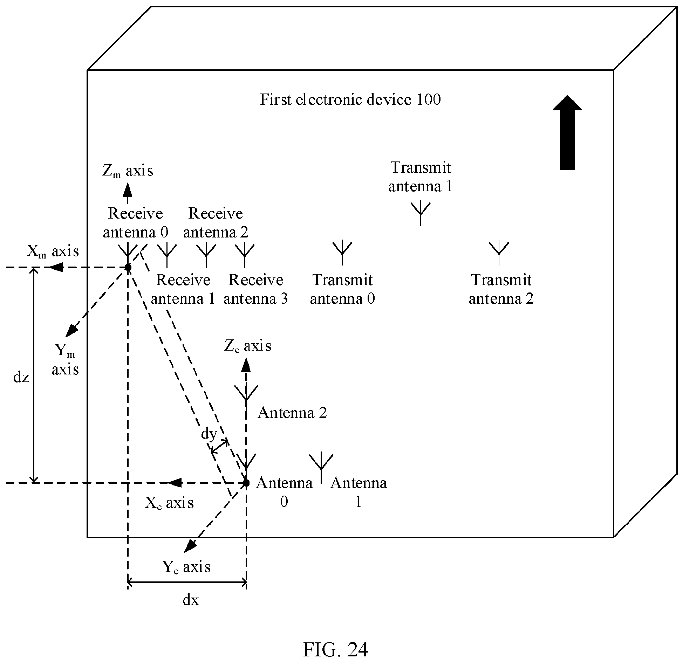

For example, the antenna distributions of both the UWB module 150 and the millimeter-wave radar module 160 of the first electronic device 100 may be set as shown in FIG. 24. The antenna 0, the antenna 1, and the antenna 2 are distributed in an L shape on a longitudinal plane (for example, a vertical plane). The transmit antenna 0, the transmit antenna 1, and the transmit antenna 2 are distributed in a shape of a triangle on a longitudinal plane (for example, a vertical plane). The receive antenna 0, the receive antenna 1, the receive antenna 2, and the receive antenna 3 are on a same horizontal line on a longitudinal plane (for example, a vertical plane). In addition, the three transmit antennas and the four receive antennas are disposed on a same longitudinal plane.

For example, as shown in FIG. 24, an end point (which may alternatively be replaced with the center point or the like) of a tail end the antenna 0 is used as the origin Oe of the first coordinate system, the connection line between the antenna 0 and the antenna 1 is used as the Xe axis of the first coordinate system. The direction in which the antenna 1 points to the antenna 0 is the positive direction of the Xe axis. In the plane in which the antenna 0, the antenna 1, and the antenna 2 are located, the straight line perpendicular to the Xe axis is used as the Ze axis of the first coordinate system, and the antenna 2 is located in the positive direction of the Ze axis. Then, with reference to the rule of the right-hand rectangular coordinate system, the Ye axis of the first coordinate system and the positive direction of the Ye axis are determined. An end point (which may alternatively be replaced with the center point or the like) of a tail end of the receive antenna 0 is used as the origin Om of the fourth coordinate system. The connection line between the receive antenna 0 and the receive antenna 1 is used as the Xm axis of the fourth coordinate system. The direction in which the receive antenna 1 points to the receive antenna 0 is the positive direction of the Xm axis. A longitudinal line (for example, a vertical line) passing through the origin Om is used as the Zm axis of the fourth coordinate system. The direction pointing to the zenith is the positive direction of the Zm axis. Then, with reference to the rule of the right-hand rectangular coordinate system, the Ym axis of the fourth coordinate system and the positive direction of the Ym axis are determined. It can be learned that the Xe axis is parallel to the Xm axis, the Ye axis is parallel to the Ym axis, the Ze axis is parallel to the Zm axis, and the fourth coordinate system and the first coordinate system can be converted to each other only through translation.

For example, as shown in FIG. 24, when the first coordinate system is moved a distance dx in a direction parallel to the Xe axis, then moved a distance dy in a direction parallel to the Ye axis, and next, moved a distance dz in a direction parallel to the Ze axis, the first coordinate system coincides with the fourth coordinate system. For example, if a case in which coordinates of a point in the first coordinate system are (xe, ye, ze) and coordinates of the point in the fourth coordinate system are (xm, ym, zm) is defined, [xm, ym, zm]T=[xe, ye, ze]T-[dx, dy, dz]T.

It may be understood that a relative position between the first coordinate system and the fourth coordinate system of the first electronic device 100 may be set in another manner. A similar method may be used to perform conversion between the fourth coordinate system and the first coordinate system. Details are not described herein again.

## (10) Establishment of a fifth coordinate system (whole-house coordinate system) and conversion between the fifth coordinate system and the first coordinate system

In an example, one first electronic device is disposed in each room or each region. The first electronic device obtains position information of each device and each specified region in the room or the region by using a second electronic device including a UWB module to mark a second electronic device including no UWB module and communicating and interacting with the second electronic device including the UWB module. By using a millimeter-wave radar module, the first electronic device obtains position information of a user in the room or the region, and may further obtain information such as a physiological feature, an identity category, and a human body attitude of the user. The first electronic device controls or notifies, based on the received information, a second electronic device to perform a preset operation. In this example, a separate room or region is used as an example.

In another example, for example, in a whole-house scenario, a hub device may be disposed. Devices such as the hub device, a first electronic device, and a second electronic device constitutes a whole-house system in a wired or wireless manner. The first electronic device obtains position information of each device and each specified region in the room or the region by using a second electronic device including a UWB module to mark a second electronic device including no UWB module and communicating and interacting with the second electronic device including the UWB module. By using a millimeter-wave radar module, the first electronic device obtains position information of a user in the room or the region, and obtain information such as a physiological feature, an identity category, and a human body attitude of the user. The first electronic device sends, to the hub device in a wired or wireless manner, the position information of each device and each specified region, and at least one of information such as a position, the physiological feature, the identity category, and the human body attitude of the user. The hub device controls or notifies, based on the received information, a second electronic device to perform a preset operation.

Optionally, the hub device and a specific first electronic device (for example, the first electronic device in the living room) may be integrated into one device.

In the whole-house scenario, the foregoing information of each room and/or each region needs to be collected in a unified manner. Conversion between different coordinate systems in all rooms is mentioned. For example, position information of the primary bedroom in the first coordinate system and position information of the secondary bedroom in the first coordinate system should be both unified to one coordinate system. In this way, unified control or notification can be performed from a whole-house level. Therefore, the fifth coordinate system (also referred to as the whole-house coordinate system) needs to be established.

For example, the user may input, to the hub device, a floor plan of the whole house, an installation position of the hub device, a position of the installation position of the hub device in the floor plan of the whole house, height information of a whole house, and the like. The floor plan of the whole house is a plane spatial layout of the house, is a drawing for describing a usage function, a relative position, a size, and the like of each piece of independent space of the whole house. The hub device establishes the fifth coordinate system based on the floor plan of the whole house.

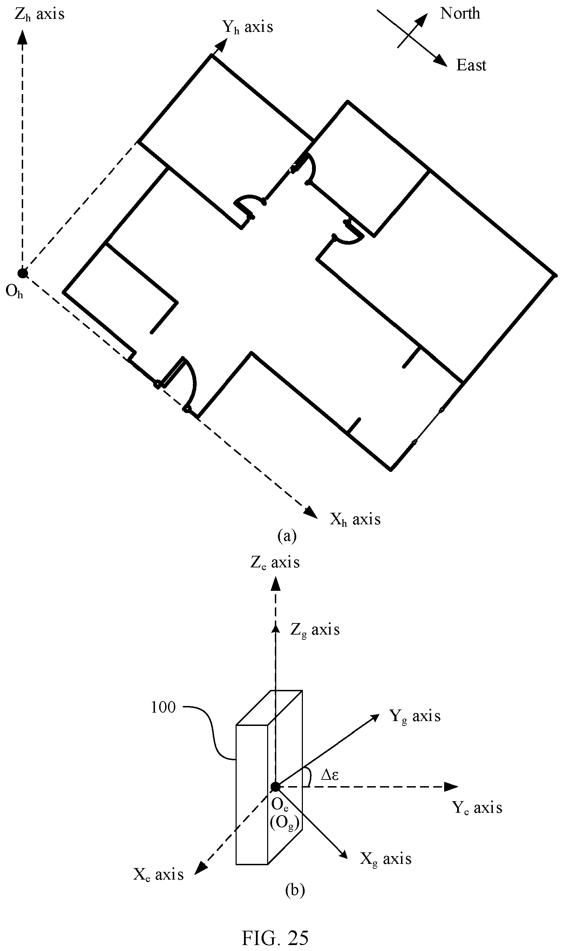

In an example, as shown in (a) in FIG. 25, a projected point that is of the southernmost point of the floor plan of the whole house and that is projected onto a horizontal plane is a first projection point. A first straight line parallel to the east-west direction is drawn passing through the first projected point. A projected point that is of the westernmost point of the floor plan of the whole house and that is projected onto the horizontal plane is a second projected point. A second straight line parallel to the north-south direction is drawn passing through the second projected point. An intersection of the first straight line and the second straight line is used as an origin Oh of the fifth coordinate system. The first straight line is used as an Xh axis, and the due east direction is a positive direction of the Xh axis. The second straight line is used as a Yh axis, and the due north direction is a positive direction of the Yh axis. A Zh axis is perpendicular to the horizontal plane, and a direction pointing to the sky is a positive direction of the Zh axis. Optionally, names of the three axes in the fifth coordinate system and the positive directions of the three axes may alternatively be determined in another manner. Details are not described herein again.

Optionally, the first electronic device includes an IMU module. For example, one hub device is installed in the living room. Both the hub device and the first electronic device in the living room are installed in parallel in a position, for example, a wall or a ceiling. There may be an included angle between the first coordinate system established by the first electronic device and a geographical coordinate system (a sixth coordinate system) on all or some of three axes. The included angle may be output by using the IMU module of the first electronic device, or may be obtained by parsing a result output by the IMU module of the first electronic device, or may be obtained through calculation by using a measurement result of an instrument, for example, a level instrument and/or a plumb bob. For example, (b) in FIG. 25 shows an included angle Δε between a positive direction of a Yg axis and a positive direction of the Ye axis. Conversion between the sixth coordinate system and the fifth coordinate system is well known to a person skilled in the art. Details are not described herein again. In an implementation, three axes of the sixth coordinate system are respectively parallel to the three axes of the fifth coordinate system. In this way, conversion between the first coordinate system and the fifth coordinate system can be implemented.

In another example, when establishing the fifth coordinate system, the hub device makes three axes of the fifth coordinate system respectively parallel to three axes of the sixth coordinate system, and may further determine an origin Oh of the fifth coordinate system according to the method shown in (a) in FIG. 25. In addition, when the first electronic device is installed, an instrument, for example, a level instrument and/or a plumb bob or a device including an IMU module is used for assistance, so that the three axes of the first coordinate system established by the first electronic device are respectively parallel to the three axes of the sixth coordinate system. In this way, the three axes of the first coordinate system are respectively parallel to the three axes of the fifth coordinate system. Conversion does not need to be performed between the first coordinate system and the fifth coordinate system.

A distance difference between the coordinate origins of the first coordinate system and the fifth coordinate system may be obtained by using two coordinate values of a same hub device in the first coordinate system and the fifth coordinate system. Specifically, the hub device may obtain coordinate information of the hub device in the fifth coordinate system. The coordinate information of the hub device in the first coordinate system may be obtained in two manners. (i) If the hub device includes a UWB module, the coordinate information of the hub device in the first coordinate system may be obtained through UWB communication between the hub device and the first electronic device. (ii) If the hub device includes no UWB module, the second electronic device including the UWB module may mark the hub device, to obtain the coordinate information of the hub device in the first coordinate system. The distance difference between the coordinate origins of the first coordinate system and the fifth coordinate system can be obtained by using the two coordinate values of the same hub device in the first coordinate system and the fifth coordinate system.

### 4. Human sensing-based automatic control method

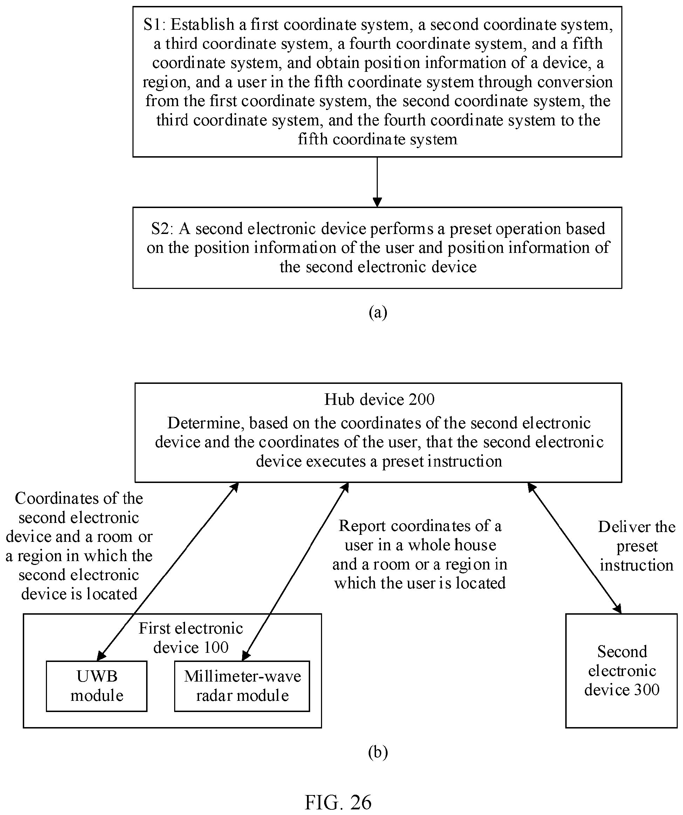

As described above, in a whole-house scenario, one first electronic device is disposed in each room in all or some rooms, one first electronic device is disposed in all or some regions, and one or more second electronic devices are disposed in a single room. For example, (a) in FIG. 26 shows general steps of the human sensing-based automatic control method. As shown in (a) in FIG. 26, the method may include the following steps.

**S1: The first electronic device establishes a first coordinate system and a fourth coordinate system. The second electronic device establishes a second coordinate system. A hub device establishes a fifth coordinate system. Position information of each device, region, and user, and the like in the fifth coordinate system is obtained through conversion from the first coordinate system, the second coordinate system, a third coordinate system, and the fourth coordinate system to the fifth coordinate system.**

S1 is specifically described in the following steps.

**(1) The first electronic device establishes the first coordinate system and the fourth coordinate system. The second electronic device establishes the second coordinate system. The hub device establishes the fifth coordinate system.**

Optionally, a second electronic device including a UWB module establishes the second coordinate system. A second electronic device including no UWB module establishes the third coordinate system.

For establishment of the first coordinate system and the fourth coordinate system by the first electronic device, establishment of the second coordinate system by the second electronic device, and establishment of the fifth coordinate system by the hub device, refer to the foregoing principles. Details are not described herein again.

**(2) Correct an installation error of the first electronic device, and obtain the position information of each device, region, and user, and the like in the fifth coordinate system through conversion from the first coordinate system, the second coordinate system, the third coordinate system, and the fourth coordinate system to the fifth coordinate system.**

There may be an error during installation of the first electronic device. As a result, locating for the second electronic device or the user by the first electronic device deviates. In an implementation, the first electronic device may be corrected during first use, to reduce or even avoid the error caused by installation.

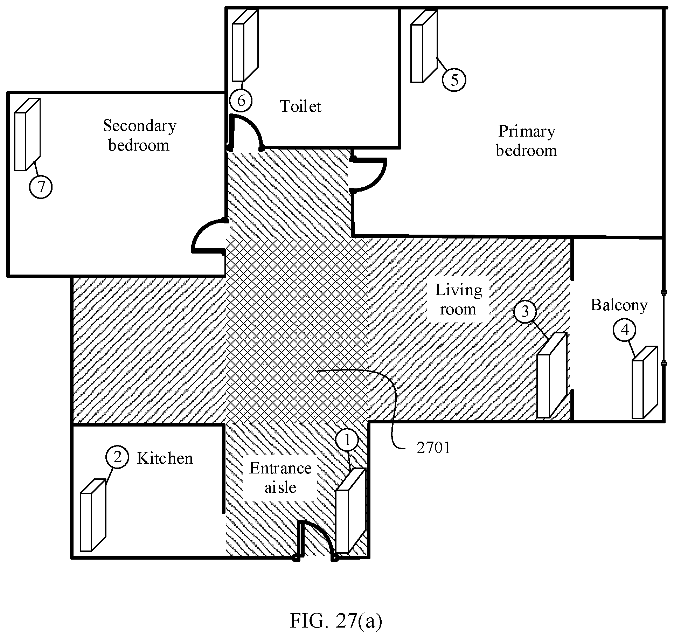

The installation error of the first electronic device may reduce measurement precision of a UWB system. For example, as shown in FIG. 27(a), at least one of a first electronic device ① located in the entrance aisle and a first electronic device ③ located in the living room may have an installation error. For a same second electronic device, the first electronic device ① determines that the second electronic device is located in a position 1, and the first electronic device ③

**EP 4 383 031 B1**

determines that the second electronic device is located in a position 2. The first electronic device ① and the first electronic device ③ determine, based on an identifier of the second electronic device, that electronic devices respectively located in the position 1 and the position 2 are actually the same second electronic device. Consequently, it is indicated that there is an installation error, which reduces measurement precision.

The first electronic device includes a UWB module and a millimeter-wave radar module. Installation error correction may be separately performed on the UWB module and the millimeter-wave radar module. In an implementation, antennas in the UWB module 150 and the millimeter-wave radar module 160 of the first electronic device 100 are distributed as shown in FIG. 24. Hardware is disposed to ensure that a relative position of the UWB module and the millimeter-wave radar in the first electronic device is fixed. Therefore, installation error correction may be performed on only the UWB module or the millimeter-wave radar module. In another implementation, installation error correction may be performed on both the UWB module and the millimeter-wave radar module of the first electronic device. Correction precision is improved through a plurality of times of corrections.

In an embodiment of this application, an example in which the UWB module of the first electronic device is corrected is used for description. It may be understood that a procedure of correcting the millimeter-wave radar module of the first electronic device is similar to that of correcting the UWB module of the first electronic device. Details are not described herein again. The following method is merely an example, and is not intended to limit a correction method. Another correction method also falls within the scope of this application.

**Step 11: Correct an installation error of a reference first electronic device by using the hub device, to obtain a first correction parameter.**

The reference first electronic device is one of a plurality of first electronic devices. For example, the hub device is installed in the living room, and the first electronic device in the living room may be used as the reference first electronic device. A first coordinate system of the reference first electronic device is denoted as a system e1.

Optionally, the hub device may display a whole-house map. The hub device may indicate the user to hold a second electronic device including a UWB module, and move from a known and easily identified position 1 to another known and easily identified position 2 based on a first track. The reference first electronic device detects a movement track of the second electronic device (by using the UWB module) or a movement track of the user (by using the millimeter-wave radar module). The movement track of the second electronic device is used as an example. There is a deviation between the detected movement track of the second electronic device and the first track.

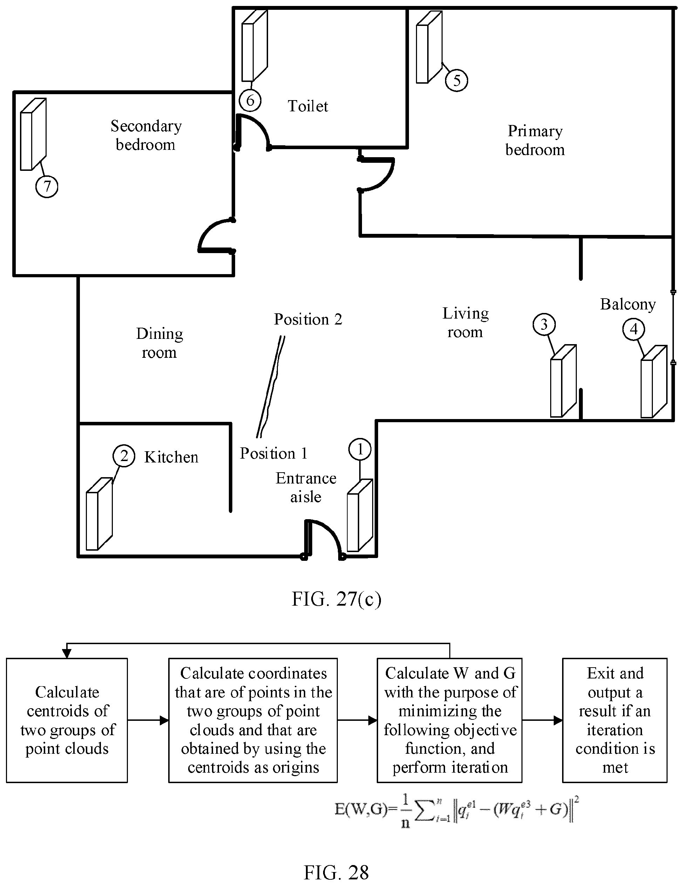

For example, as shown in FIG. 27(c), the hub device may indicate the user to hold the second electronic device including the UWB module, and move from a position 1 with known coordinates to a position 2 with known coordinates along a straight line. The first electronic device ① may obtain an actual movement track of the second electronic device based on detection performed by the UWB module. As shown in FIG. 27(c), there is a specific deviation between a movement track of the user detected by the first electronic device ① and an actual movement track of the user.

Then, an attitude error rotation matrix W and a position error vector G may be obtained through calculation according to an algorithm. For example, the algorithm may be an ICP algorithm shown in FIG. 28. An optimal matching attitude error rotation matrix W and position error vector G may be obtained through calculation according to the ICP algorithm. In this way, an error function is minimized. For specific content of the ICP algorithm, refer to the conventional technology. Details are not described herein again. The first correction parameter includes the current optimal matching attitude error rotation matrix W and position error vector G.

After the reference first electronic device is corrected, the installation error of the first electronic device is corrected based on the reference first electronic device.

**Step 12: Correct the installation error of the first electronic device by using the reference first electronic device, to obtain a second correction parameter.**

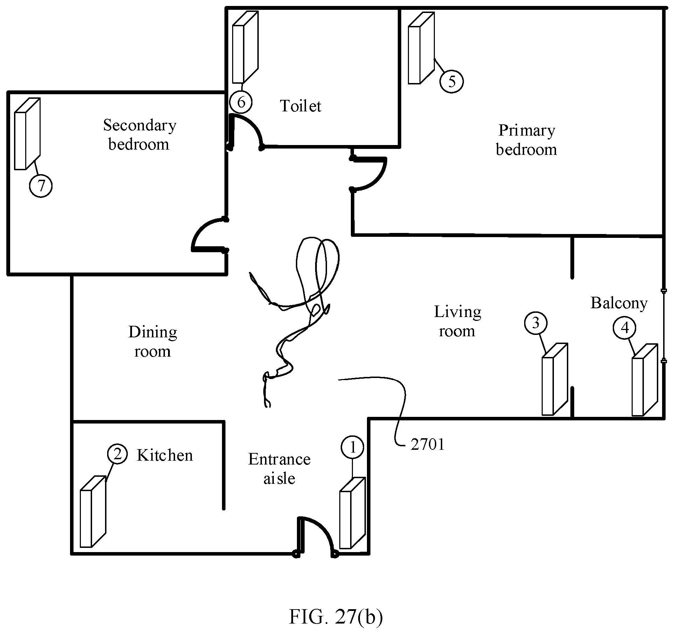

In an example, the user holds the second electronic device including the UWB module, and moves in each room of a whole house. Each first electronic device in the whole house locates the second electronic device. For example, as shown in FIG. 27(a), there is an overlapping region 2701 between a signal coverage region of the first electronic device ① and a signal coverage region of the first electronic device ③. When the user moves in the overlapping region 2701, as shown in FIG. 27(b), there is a specific deviation between movement tracks of the second electronic device that are obtained by the first electronic device ① and the first electronic device ③. The first electronic device ① is the reference first electronic device.

In an implementation, installation errors of two first electronic devices are corrected based on movement tracks of the second electronic device that are respectively detected by the two first electronic devices. For example, the correction parameter includes an attitude error rotation matrix W and a position error vector G. For example, the first electronic device ① obtains a movement track $qe1=[q_{t1}^{e1}, q_{t2}^{e1}, q_{t3}^{e1}, ..., q_{tn}^{e1}]$ of the second electronic device in the first coordinate system (the system e1) established by the first electronic device ①. The first electronic device ③ obtains a movement track $qe3=[q_{t1}^{e3}, q_{t2}^{e3}, q_{t3}^{e3}, ..., q_{tn}^{e3}]$ of the second electronic device in a first coordinate system (a system e3) established by the first electronic device ③. Herein, $q_{tn}^{e1}$ represents coordinates of the second electronic device in the system e1 that are detected by the first electronic device ① at a moment tn, and $q_{tn}^{e3}$ represents coordinates of the second electronic device in the system e3 that are detected by the first electronic device ③ at the moment tn. The movement tracks qe1 and qe3 of the user may be converted to the fifth coordinate system according to a subsequent formula (13), and are respectively denoted as qe1->h and qe3->h.

Herein, qe1->h and qe3->h are point clouds that record a movement track of the user. An attitude error rotation matrix We3->e1 and a position error vector Ge3->e1 between the two point clouds qe1->h and qe3->h may be calculated according to an iterative closest point (iterative closest point, ICP) algorithm, to minimize a three-dimensional spatial error between a corrected point cloud qe1->h and the point cloud qe3->h. A basic principle of the ICP algorithm is shown in FIG. 28. A closest point ( $q_i^{e1}$, $q_i^{e3}$ ) is found in a to-be-matched target point cloud qe3->h and a reference point cloud qe1->h based on a constraint condition $E(W, G) = \frac{1}{n}\sum_{i=1}^{n}\left\|q_i^{e1} - (Wq_i^{e3} + G)\right\|^2$ . Then an optimal matching attitude error rotation matrix W and position error vector G are obtained through calculation, to minimize an error function. For a specific step of the ICP algorithm, refer to the conventional technology. Details are not described again in embodiments of this application. The second correction parameter includes the current optimal matching attitude error rotation matrix W and position error vector G.

Optionally, an order between step 11 and step 12 may be changed. In addition, the foregoing step 11 and step 12 are merely examples. In another example, correction of all first electronic devices is implemented by using the hub device, instead of using the reference first electronic device.

When the user moves without holding the second electronic device including the UWB module, each first electronic device may detect a movement track of the user. A related manner is similar to a manner of processing the movement track of the second electronic device. Details are not described herein again.

**Step 13: Convert, to coordinates in the fifth coordinate system, coordinates of the second electronic device in the first coordinate system or coordinates of the user in the fourth coordinate system that are obtained by the first electronic device through calculation.**

In an example, an attitude error rotation matrix and a position error vector that are of the reference first electronic device relative to the hub device are obtained by performing the foregoing step 11. For example, the first electronic device ① is used as the reference first electronic device. An attitude error rotation matrix and a position error vector of the first electronic device ① relative to the hub device are denoted as [We1->h, Ge1->h].

An attitude error rotation matrix and a position error vector of another first electronic device relative to the reference first electronic device are corrected by performing the foregoing step 12. For example, the first electronic device ① is used as the reference first electronic device. An attitude error rotation matrix and a position error vector of the another first electronic device relative to the first electronic device ① are denoted as [Wek->e1, Gek->e1], where k ∈ 2, ..., n.

In an example, the first electronic device ① is used as the reference first electronic device. Coordinates that are of an origin of a first coordinate system of a kth other first electronic device other than the reference first electronic device and that are in the fifth coordinate system are expressed as $[x_o^{kh}, y_o^{kh}, z_o^{kh}]$ . Any point in space is selected as a point q. Coordinates of the point q in the first coordinate system established by the kth first electronic device are expressed as qek=$[x_q^{ek}, y_q^{ek}, z_q^{ek}]$ . Coordinates of the point q in the fifth coordinate system that are obtained after installation error correction are expressed as $q'^h = [x_q'^h, y_q'^h, z_q'^h]$ . The coordinates of the point q in the first coordinate system established by the kth first electronic device may be converted to the fifth coordinate system according to formula (12) after undergoing installation error correction.

$$[x_q'^h, y_q'^h, z_q'^h]\text{T=We1->h(Wek->e1}(C_e^h \cdot [x_q^{ek}, y_q^{ek}, z_q^{ek}]\text{T+}[x_o^{kh}, y_o^{kh}, z_o^{kh}]\text{T)+Gek->e1)+Ge1->h} \quad \text{formula (12)}$$

Coordinates, of an origin of the first coordinate system established by the reference first electronic device, in the fifth coordinate system are expressed as $[x_o^{1h}, y_o^{1h}, z_o^{1h}]$ . Coordinates of the point q in the first coordinate system established by the reference first electronic device are expressed as qe1=$[x_q^{e1}, y_q^{e1}, z_q^{e1}]$ . Coordinates of the point q in the fifth coordinate system that are obtained after installation error correction are expressed as $q'^h = [x'^h_q, y'^h_q, z'^h_q]$.

The coordinates of the point q in the first coordinate system established by the reference first electronic device may be converted to the fifth coordinate system according to formula (13) after undergoing installation error correction.

$$[x'^h_q, y'^h_q, z'^h_q]T = \text{We1->h}(C^h_e \cdot [x^{e1}_q, y^{e1}_q, z^{e1}_q]T + [x^{1h}_o, y^{1h}_o, z^{1h}_o]T) + \text{Ge1->h} \quad \text{formula (13)}$$

**In** another example, coordinates detected by the first electronic device are directly converted to the fifth coordinate system after undergoing installation error correction, without using the reference first electronic device. For example, the attitude error rotation matrix and the position error vector between two point clouds of the movement track of the user detected by the first electronic device and the actual movement track of the user are respectively denoted as We->h and Ge->h. Coordinates, of an origin of the first coordinate system established by the first electronic device, in the fifth coordinate system are expressed as $[x^h_o, y^h_o, z^h_o]$. Coordinates of the point q in the first coordinate system established by the first electronic device are expressed as $qe = [x^e_q, y^e_q, z^e_q]$. Coordinates of the point q in the fifth coordinate system that are obtained after installation error correction are expressed as $q'^h = [x'^h_q, y'^h_q, z'^h_q]$. The coordinates of the point q in the first coordinate system established by the first electronic device may be converted to the fifth coordinate system according to formula (14) after undergoing installation error correction.

$$[x'^h_q, y'^h_q, z'^h_q]T = \text{We->h}(C^h_e \cdot [x^e_q, y^e_q, z^e_q]T + [x^h_o, y^h_o, z^h_o]T) + \text{Ge->h} \quad \text{formula (14)}$$

It may be understood that a method for converting, to the fifth coordinate system, the coordinates of the user in the fourth coordinate system that are detected by the first electronic device and that undergo installation error correction is similar to a method for converting, to the fifth coordinate system, the coordinates of the user in the first coordinate system that are detected by the first electronic device and that undergo installation error correction. Details are not described herein again.

During first use, the second electronic device in the whole house may be located by using the UWB module of the first electronic device. A first electronic device in each room or region may determine coordinates of a second electronic device in the room or the region in a first coordinate system of the first electronic device. Optionally, for a plurality of first electronic devices whose signal coverage regions have an overlapping region, one of the plurality of first electronic devices may locate a second electronic device in the overlapping region.

Further, in an implementation, each first electronic device in the whole house converts obtained coordinates of one or more second electronic devices in a first coordinate system to the fifth coordinate system, and sends coordinates of the one or more second electronic devices in the fifth coordinate system to the hub device. In another implementation, each first electronic device in the whole house sends obtained coordinates of one or more second electronic devices in first coordinate system to the hub device, and the hub device converts, to the fifth coordinate system, the coordinates of the second electronic device in the first coordinate system that are received from each first electronic device. Optionally, converting the coordinates of the second electronic device in the first coordinate system to the fifth coordinate system includes: converting, to the fifth coordinate system, the coordinates of the second electronic device in the first coordinate system that undergo installation error correction. The hub device may store the obtained coordinates of the second electronic device in the fifth coordinate system.

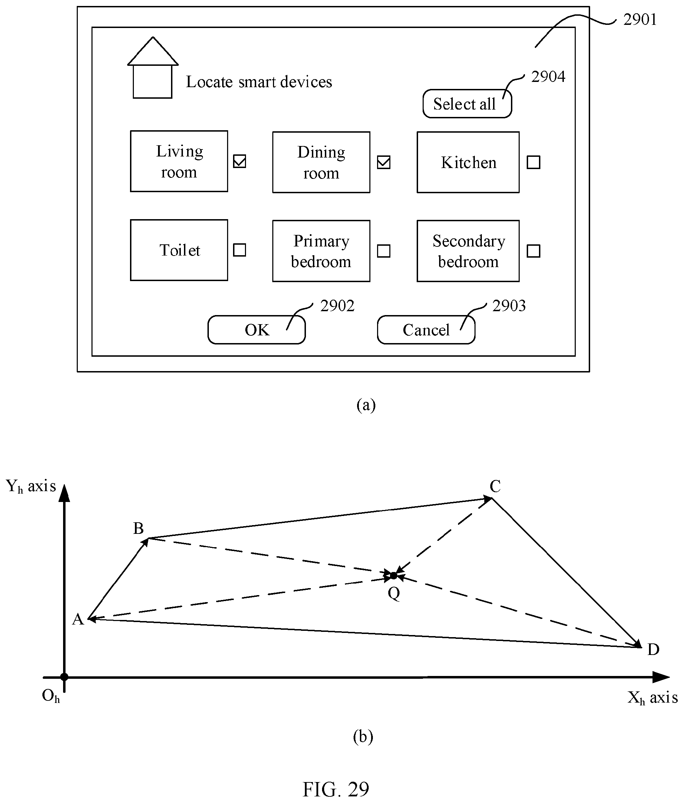

Optionally, after first use, a second electronic device may be added to or removed from the whole house, or a position of the second electronic device may change. In an implementation, the hub device cyclically locates the second electronic device by using the first electronic device in each room or each region, and updates the coordinates of the second electronic device that are stored in the hub device. In another implementation, when detecting the second electronic device newly added to the whole house, the hub device triggers locating the second electronic device by using the first electronic device, and updates the coordinates of the second electronic device that are stored in the hub device. For example, the hub device stores configuration information of all devices such as the first electronic device and the second electronic device in the whole house. The second electronic device accesses the hub device, and corresponding configuration information is newly added. If the hub device determines, based on the configuration information, that the second electronic device is newly added, the hub device triggers the first electronic device to locate the second electronic device. In another implementation, after the second electronic device is added to or removed from the whole house, or the position of the second electronic device changes, the user may manually trigger the first electronic device to locate the second electronic device, and update the coordinates of the second electronic device that are stored in the hub device. For example, the user starts, through a human-machine interaction interface displayed on a control panel, the first electronic device to locate the second electronic device. For example, as shown in (a) in FIG. 29, a "Locate a hub device" interface 2901 is displayed on the control panel. The "Locate a hub device" interface 2901 includes room options such as the living room, a dining room, and a kitchen. The user may select one or more of the room options, and click an "OK" button 2902, to enable a first electronic device in a corresponding room to locate a hub device in the room. The "Locate a hub device" interface 2901 further includes a "Cancel" button 2903, used to cancel performing of locating an IoT device. Optionally, the "Locate an IoT device" interface 2901 further includes a "Select all" button 2904. The user may tap the "Select all" button 2904 to select all rooms in the house, and tap the "OK" button 2902, to enable the first electronic device in the whole house to separately locate the second electronic devices.

Optionally, after first use, the first electronic device in each room or each region may be used to cyclically locate the user in the whole house and track a movement track of each user. For example, a cycle is 1 second. The first electronic device performs detection at a frequency of 10 Hz (hertz) (10 times per second), and sends a detection result to the hub device at a frequency of 1 Hz (once per second). Each first electronic device in the whole house may locate (obtain the coordinates of the user in the fourth coordinate system) and track (obtain a movement track of the user in the fourth coordinate system) the user in a signal coverage region of the first electronic device. Optionally, for the plurality of first electronic devices whose signal coverage regions have the overlapping region, one of the plurality of first electronic devices may locate and track a user in the overlapping region. Further, in an implementation, each first electronic device in the whole house converts obtained coordinates or movement tracks of one or more users in the fourth coordinate system to coordinates or movement tracks in the fifth coordinate system, and sends the coordinates or the movement tracks of the one or more users in the fifth coordinate system to the hub device. In another implementation, each first electronic device in the whole house sends obtained coordinates or movement tracks of one or more users in the fourth coordinate system to the hub device. The hub device converts, to coordinates or movement tracks in the fifth coordinate system, the coordinates or the movement track that is of the user in the fourth coordinate system and that is received from each first electronic device. Optionally, converting the coordinates or the movement track of the user in the fourth coordinate system to the fifth coordinate system includes: converting, to the coordinates or the movement track in the fifth coordinate system after, the coordinates or the movement track that is of the user in the fourth coordinate system and that undergoes installation error correction. The hub device may store and cyclically update an obtained position of the user (for example, the coordinates of the user in the fifth coordinate system) or movement track (a coordinate track in the fifth coordinate system).

It should be noted that step (2) is not mandatory and is optional. For example, at the beginning of installation, correction is performed once. Later, correction is generally not required, or correction is performed once again after a long period of use. When step (2) is performed, step (3) does not need to be performed. When step (2) is not performed, step (3) is performed. That is, either step (2) or step (3) is performed.

**(3) Obtain the position information of each device, region, and user, and the like in the fifth coordinate system through conversion from the first coordinate system, the second coordinate system, the third coordinate system, and the fourth coordinate system to the fifth coordinate system.**

Conversion from the first coordinate system, the second coordinate system, the third coordinate system, and the fourth coordinate system to the fifth coordinate system may be specifically implemented as follows: Conversion between the second coordinate system, the third coordinate system, and the first coordinate system may be implemented by obtaining $C_e^b$ and $C_e^t$ based on the foregoing principle. The conversion between the fourth coordinate system and the first coordinate system is described in the foregoing principle part. After conversion from all the second coordinate system, the third coordinate system, and the fourth coordinate system to the first coordinate system, $C_e^h$ may be obtained based on the foregoing principle. Then, conversion from the first coordinate system to the fifth coordinate system is implemented.

$$C_e^h = \begin{bmatrix} cos\theta_e^h cos\psi_e^h + sin\varphi_e^h sin\theta_e^h sin\psi_e^h & cos\varphi_e^h sin\psi_e^h & sin\theta_e^h cos\psi_e^h - sin\varphi_e^h cos\theta_e^h sin\psi_e^h \\ -cos\theta_e^h sin\psi_e^h + sin\varphi_e^h sin\theta_e^h cos\psi_e^h & cos\varphi_e^h cos\psi_e^h & -sin\theta_e^h sin\psi_e^h - sin\varphi_e^h cos\theta_e^h cos\psi_e^h \\ -cos\varphi_e^h sin\theta_e^h & sin\varphi_e^h & cos\varphi_e^h cos\theta_e^h \end{bmatrix}$$

formula (15)

Herein, $\psi_e^h$, $\varphi_e^h$, and $\theta_e^h$ are respectively a heading angle, a pitch, and a roll of the fifth coordinate system relative to the first coordinate system. For the any point q in the space of the whole house, coordinates $q^h = [x_q^h, y_q^h, z_q^h]$ of the any point q in the fifth coordinate system are obtained, the coordinates $q^e = [x_q^e, y_q^e, z_q^e]$ of the any point q in the first coordinate system are obtained, and coordinates of an origin $O_e$ of the first coordinate system in the fifth coordinate system are $[x_o^h, y_o^h, z_o^h]$ . The coordinates of the point q in the first coordinate system may be converted to the fifth coordinate system according to formula (16).

$$[x_q^h, y_q^h, z_q^h]^{\mathrm{T}} = C_e^{\mathrm{h}} \cdot [x_q^e, y_q^e, z_q^e]^{\mathrm{T}} + [x_o^h, y_o^h, z_o^h]^{\mathrm{T}} \qquad \text{formula (16)}$$

Optionally, the first electronic device may convert coordinates of the first electronic device in the first coordinate system or the fourth coordinate system to the fifth coordinate system. To be specific, the coordinates in the fourth coordinate system do not need to be first converted into coordinates in the first coordinate system, and then the coordinates in the first coordinate system are converted into coordinates in the fifth coordinate system. Instead, the coordinates in the fourth coordinate system may be directly converted into the coordinates in the fifth coordinate system.

Then, the converted coordinates in the fifth coordinate system are sent to the hub device. $C_m^{\mathrm{h}}$ may be obtained based on the foregoing principle. Then, conversion from the fourth coordinate system to the fifth coordinate system is implemented.

$$C_m^{\mathrm{h}} = \begin{bmatrix} cos\theta_m^h cos\psi_m^h + sin\varphi_m^h sin\theta_m^h sin\psi_m^h & cos\varphi_m^h sin\psi_m^h & sin\theta_m^h cos\psi_m^h - sin\varphi_m^h cos\theta_m^h sin\psi_m^h \\ -cos\theta_m^h sin\psi_m^h + sin\varphi_m^h sin\theta_m^h cos\psi_m^h & cos\varphi_m^h cos\psi_m^h & -sin\theta_m^h sin\psi_m^h - sin\varphi_m^h cos\theta_m^h cos\psi_m^h \\ -cos\varphi_m^h sin\theta_m^h & sin\varphi_m^h & cos\varphi_m^h cos\theta_m^h \end{bmatrix}$$

formula (17)

Herein, $\psi_m^h$, $\varphi_m^h$, and $\theta_m^h$ are respectively a heading angle, a pitch, and a roll of the fifth coordinate system relative to the fourth coordinate system. For the any point q in the space of the whole house, the coordinates $qh = [x_q^h, y_q^h, z_q^h]$ of the any point q in the fifth coordinate system are obtained, coordinates $qm = [x_q^m, y_q^m, z_q^m]$ of the any point q in the fourth coordinate system are obtained, and coordinates of an origin Om of the fourth coordinate system in the fifth coordinate system are $[x_o^h, y_o^h, z_o^h]$ . Coordinates of the point q in the first coordinate system may be converted to the fifth coordinate system according to formula (18).

$$[x_q^h, y_q^h, z_q^h]^{\mathrm{T}} = C_m^{\mathrm{h}} \cdot [x_q^m, y_q^m, z_q^m]^{\mathrm{T}} + [x_o^h, y_o^h, z_o^h]^{\mathrm{T}} \qquad \text{formula (18)}$$

Optionally, the foregoing conversion is performed by the hub device. The first electronic device separately sends coordinates of the first electronic device in the first coordinate system or the fourth coordinate system to the hub device. The hub device converts the coordinates, that are based on the first coordinate system or the fourth coordinate system of each first electronic device, into coordinates in the fifth coordinate system.

Optionally, one reference first electronic device is set in the plurality of first electronic devices. Another first electronic device other than the reference first electronic device sends coordinate information of the another first electronic device in a first coordinate system or a fourth coordinate system to the reference first electronic device. The reference first electronic device converts coordinates, that are based on the first coordinate system or the fourth coordinate system of each first electronic device, into coordinates in the fifth coordinate system, and sends, to the hub device, the coordinates in the fifth coordinate system that are obtained after conversion.

**S2: The second electronic device performs a preset operation based on the position information of the user and the position information of the second electronic device.**

In an embodiment of this application, the whole house is divided into one or more rooms and/or one or more regions, which do not overlap each other. The hub device may locate the room or the region by using the first electronic device, and obtain and store a coordinate range of each room or region. For example, the coordinate range of each room or region may be obtained according to the method in (b) in FIG. 14.

The hub device may determine a room or a region in which each first electronic device and each second electronic device are located. In an implementation, the user may query by using the hub device, for example, input a device name (a name of the first electronic device or a name of the second electronic device), a room or a region in which a device is located, or the like. In an implementation, at least one first electronic device is installed in each room or region. The hub device determines, based on an input of the user, a room or a region in which each first electronic device is located. In an implementation, the hub device determines, based on coordinates of the first electronic device or the second electronic device and the coordinate range of each room or region in the whole house, a room or a region in which each first electronic device or each second electronic device is located.

For example, as shown in (b) in FIG. 29, for a room whose horizontal direction is a quadrilateral, a smartphone may be separately placed at four positions in the room, namely, a point A, a point B, a point C, and a point D according to the method shown in (a) in FIG. 14. Coordinates $(x_A^h, \ y_A^h, \ 0)$, $(x_B^h, \ y_B^h, \ 0)$, $(x_C^h, \ y_C^h, \ 0)$, and $(x_D^h, \ y_D^h, \ 0)$ of the four positions, namely, the point A, the point B, the point C, and the point D, in the fifth coordinate system are separately obtained by using the first electronic device 100. A vertical line passing through the position A, a vertical line passing through the position B, a vertical line passing through the position C, and a vertical line passing through the position D may determine a region range of a region obtained, through division, in the room. Coordinates of the second electronic device in the fifth coordinate system are $(x_Q^h, \ y_Q^h, \ z_Q^h)$, and $(x_Q^h, \ y_Q^h, \ 0)$ are coordinates of a projected point Q of the second electronic device in a plane $X_hO_hY_h$. A convex quadrilateral is obtained by connecting A, B, C, and D in sequence in the clockwise direction. Four sides of the convex quadrilateral are respectively $\overrightarrow{AB}$, BC, *CD,* and DA. If it is determined that the point Q is on the right side of the four sides AB, BC, *CD,* and DA, it is determined that the point Q is located in the convex quadrilateral including the point A, the point B, the point C, and the point D. To be specific, it is determined that the second electronic device is located in the room. For example, if the coordinates $(x_Q^h, \ y_Q^h, \ 0)$ of the point Q and the coordinates of the point A, the point B, the point C, and the point D satisfies formula (19), it is determined that the point Q is located in a region range including the point A, the point B, the point C, and the point D.

$$\overrightarrow{AB} \times \overrightarrow{AQ} < 0$$

$$\overrightarrow{BC} \times \overrightarrow{BQ} < 0 \hspace{4cm} \text{formula (19)}$$

$$\overrightarrow{CD} \times \overrightarrow{CQ} < 0$$

$$\overrightarrow{DA} \times \overrightarrow{DQ} < 0$$

Herein, $\times$ indicates a vector cross product. $\overrightarrow{AB} \times \overrightarrow{AQ}$ indicates a vector cross product of *AB* and $\overrightarrow{AQ}$. $BC \times \overrightarrow{BQ}$ indicates a vector cross product of *BC and* $\overrightarrow{BQ}$. $CD \times \overrightarrow{CQ}$ indicates a vector cross product of *CD and* $\overrightarrow{CQ}$. $\overrightarrow{DA} \times \overrightarrow{DQ}$ indicates a vector cross product of *DA and* $\overrightarrow{DQ}$. A vector cross product of two vectors is a scalar.

For example,

$$\overrightarrow{AB} = ((x_B^h - x_A^h), (y_B^h - y_A^h)), \ \overrightarrow{AQ} = ((x_Q^h - x_A^h), (y_Q^h - y_A^h)),$$

$$\overrightarrow{BC} = ((x_C^h - x_B^h), (y_C^h - y_B^h)), \ \overrightarrow{BQ} = ((x_Q^h - x_B^h), (y_Q^h - y_B^h)),$$

$$\overrightarrow{CD} = ((x_D^h - x_C^h), (y_D^h - y_C^h)), \ \overrightarrow{CQ} = ((x_Q^h - x_C^h), (y_Q^h - y_C^h)),$$

$$\overrightarrow{DA} = ((x_A^h - x_D^h), (y_A^h - y_D^h)), \ \overrightarrow{DQ} = ((x_Q^h - x_D^h), (y_Q^h - y_D^h)),$$

$$\overrightarrow{AB} \times \overrightarrow{AQ} = (x_B^h - x_A^h)(y_Q^h - y_A^h) - (x_Q^h - x_A^h)(y_B^h - y_A^h),$$

$$\overrightarrow{BC} \times \overrightarrow{BQ} = (x_C^h - x_B^h)(y_Q^h - y_B^h) - (x_Q^h - x_B^h)(y_C^h - y_B^h),$$

$$\overrightarrow{CD} \times \overrightarrow{CQ} = (x_D^h - x_C^h)(y_Q^h - y_C^h) - (x_Q^h - x_C^h)(y_D^h - y_C^h),$$

and

$$\overrightarrow{DA} \times \overrightarrow{DQ} = (x_A^h - x_D^h)(y_Q^h - y_D^h)\text{-}(x_Q^h - x_D^h)(y_A^h - y_D^h).$$

In an example, the hub device may store a device information table in the whole house. The device information table includes information about one or more devices (including but not limited to the first electronic device, the second electronic device, and the like) in the whole house. For example, the information about the device includes a device name and a room or a region (room) in which the device is located, and optionally, may further include coordinates (for example, coordinates in the fifth coordinate system) of the device. For example, the device information table is shown in Table 4.

Table 4

| Room | Device name | Coordinates |
|---|---|---|
| Living room | Home theater (left) | $(x_1^h,\ y_1^h,\ z_1^h)$ |
| Living room | Home theater (right) | $(x_2^h,\ y_2^h,\ z_2^h)$ |
| Living room | Router 1 | $(x_3^h,\ y_3^h,\ z_3^h)$ |
| Living room | Living-room television | $(x_4^h,\ y_4^h,\ z_4^h)$ |
| Primary bedroom | Bedside speaker | $(x_5^h,\ y_5^h,\ z_5^h)$ |
| Primary bedroom | Control panel 1 | $(x_6^h,\ y_6^h,\ z_6^h)$ |
| Secondary bedroom | Escritoire speaker | $(x_7^h,\ y_7^h,\ z_7^h)$ |
| Balcony | Balcony speaker | $(x_8^h,\ y_8^h,\ z_8^h)$ |
| ... | ... | ... |

The hub device may further determine a room or a region in which the user is located. In an implementation, the at least one first electronic device is installed in each room or region. The hub device determines the room or the region in which each first electronic device is located. The room or the region in which each first electronic device is located is the room or the region in which the user that can be detected by the first electronic device is located. In an implementation, the hub device determines the room or the region in which each user is located based on coordinates of the user and the coordinate range of each room or region in the whole house. For a specific method, refer to the method of determining, by the hub device based on the coordinates of the second electronic device and the coordinate range of each room or region in the whole house, the room or the region in which each second electronic device is located. Further, the hub device cyclically obtains the coordinates of the user, and determines, based on the coordinates of the user, the room or the region in which the user is located. In another implementation, the hub device obtains a coordinate range of the whole house and the coordinate range of each room or each region in the whole house based on a floor plan of the whole house, an installation position of the hub device, a position of the installation position of the hub device in the floor plan of the whole house, height information of the whole house, and the like. Then, the hub device may know, based on obtained coordinates of the user through comparison, the room or the region in which the user is located and that is in the whole house. The hub device may determine, based on a room or a region in which the user is currently located and a room or a region in which the user is located within a previous cycle, that the user enters another room or region from one room or region, or leaves the whole house, enters the whole house, or the like.

Optionally, the hub device may further obtain at least one of information such as a physiological feature, an identity category, and a human body attitude from the first electronic device in each room or each region, and then may subsequently notify or control, based on the at least one of the information such as the position information, the physiological feature, the identity category, and the human attitude, a corresponding second electronic device in a corresponding room or a corresponding region to perform the preset operation.

Specific content of S2 may be further described subsequently with reference to a specific scenario.

For example, (b) in FIG. 26 shows an implementation of the human sensing-based automatic control method according to an embodiment of this application. As shown in (b) in FIG. 26, the UWB module of the first electronic device locates the device, the room, the region, and the like in the whole house, obtains coordinates of the device in the whole house and the room or the region in which the device is located, and reports the coordinates and room or the region to the hub device. The millimeter-wave radar module of the first electronic device performs target tracking on the user in the whole house, and cyclically reports, to the hub device, the coordinates of the user in the whole house and the room or the region in which the user is located. The hub device sends a corresponding preset instruction to the second electronic device based on the coordinates of the second electronic device and the coordinates of the user. In an implementation, if it is determined that a relative position between a first user and the second electronic device satisfies a preset condition, the second electronic device is controlled to execute the preset instruction. Coordinates of the first user may be coordinates of one user or an average value of coordinates of a plurality of users. The second electronic device executes the preset instruction. In this way, for example, when the user approaches a smart lamp, the second electronic device can execute the preset instruction, for example, turn on the smart lamp, by performing a procedure shown in (b) in FIG. 26.

It should be noted that, in the human sensing-based automatic control method provided in embodiments of this application, the hub device may determine, based on the coordinates of the second electronic device and the coordinates of the user, that the second electronic device executes the preset instruction. Alternatively, another device other than the hub device may determine, based on the coordinates of the second electronic device and the coordinates of the user, that the second electronic device executes the preset instruction. Alternatively, the hub device sends the coordinates of the second electronic device and the coordinates of the user to the second electronic device, and the second electronic device determines, based on the coordinates, to execute the preset instruction. It may be understood that an execution body of the human sensing-based automatic control method is not limited in embodiments of this application.

## 5. Description of specific embodiments

After the general descriptions of the overall scenario, the hardware structure of the electronic device, the locating principle, and the human sensing-based automatic control method are provided, the following further describes, with reference to accompanying drawings and specific scenarios, the human sensing-based automatic control method by using a plurality of embodiments. In this way, how a user is enabled to perform automatic control on an IoT device more conveniently according to the technical solutions provided in embodiments of this application is more clearly described, to further improve user experience. In this process, the user does not need to carry any electronic device.

It should be noted that some embodiments include communication and interaction between a plurality of different second electronic devices and a hub device, and even further include communication interaction between the plurality of different second electronic devices. For ease of subsequent description, the following uses a first device, a second device, a third device, and the like to indicate different second electronic devices.

It should be noted that, in specific embodiments, the human sensing-based automatic control method provided in embodiments of this application may be separately refined into a human sensing-based method for intelligent linkage between devices, a human sensing-based method for counting an activity of a user in a house, and the like. The following specifically provides descriptions with reference to the specific embodiments.

### Embodiment 1: Intelligent linkage between smart devices

In embodiments of this application, the smart device may be, for example, specifically the second electronic device 300 in (a) in FIG. 1. Intelligent linkage between the smart devices may be, for example, intelligent linkage between two or more second electronic devices 300.

In a smart home system, each smart device can perform linkage and control between the smart devices based on an IFTTT (if this then that) rule. Herein, "this" is a trigger condition, and "that" is a to-be-performed task of the smart device, and may also be referred to as a to-be-performed operation or a to-be-performed event. For example, if it is detected that a user taps a control for a sleeping scenario on a smart home application on a mobile phone, in a bedroom, a lighting lamp is turned off, and a temperature of an air conditioner is automatically adjusted to 26°C. For another example, if a smart door lock detects that a user unlocks a door outside, lighting lamps in a porch and a living room are automatically turned on. For another example, if a smart door lock detects that a user goes out, all lighting lamps in a house are automatically turned off.

It should be noted that an existing IFTTT rule triggers a corresponding action based on a condition in a single service scenario, for example, a sleeping scenario, a coming-home scenario, or a leaving-home scenario. However, an actual life scenario is often more intricate. For example, a family member just comes home from outside (the coming-home scenario), and a family member is sleeping (the sleeping scenario) at this time. For another example, a family member goes out from home (the leaving-home scenario), and a family member stays at home (a staying-at-home scenario) at the same time. Therefore, a problem often occurs when the corresponding action is triggered based only on the condition in the single scenario in the IFTTT rule. For example, the IFTTT rule is as follows: If a smart door lock detects that a user goes out, all lighting lamps in a house are automatically turned off. If an actual scenario is that only one of family members goes out, and another family member is still in the house at the same time. In this case, inconvenience is caused to the another family member in the house when all the lighting lamps in the house are automatically turned off based on this IFTTT rule. For another example, the IFTTT rule is as follows: If a smart door lock detects that a user unlocks a door outside, lighting lamps in a porch and a living room are automatically turned on. If an actual scenario is that another family member falls asleep on a sofa in a living room at this time, the sleeping family member may be disturbed when a lighting lamp in the living room is automatically turned on based on the IFTTT rule.

Therefore, in embodiments of this application, service scenarios (namely, a multi-service scenario), that all family members are in, in a whole-house scenario can be detected based on a whole-house sensing system, and then an action to be performed by each linkage device is determined based an IFTTT rule corresponding to each service scenario. In some embodiments, in IFTTT rules corresponding to different service scenarios, to-be-performed tasks corresponding to a same device may conflict. A specific task to be performed by the device can be determined based on a conflict resolution mechanism provided in this embodiment of this application. The following describes in detail the technical solutions provided in this embodiment of this application.

(1) Setting an IFTTT rule for intelligent scenario triggering based on the whole-house sensing system

The whole-house sensing system includes the first electronic device 100 in (a) in FIG. 1, configured to locate the user and/or obtain a position of each smart device (for example, the second electronic device 300) in a whole house, and the like. As described above, some first electronic devices 100 each are equipped with a UWB module, and may detect, by using the UWB module, information such as a position of a smart device in each room in the whole house, an orientation and a distance between the smart devices, a display region of a display smart device (for example, a large-screen device), and an audio playing region of an audio playing smart device (for example, a smart speaker). Some first electronic devices 100 each are equipped with a millimeter-wave radar, and may further detect, by using the millimeter-wave radar, a position of a human body in any room in the whole house, a movement track of the human body in the whole house, a distance and an orientation between the human body and a terminal, and the like. In this embodiment of this application, a current scenario may be intelligently determined based on a user position detected by the first electronic device 100, the position of each smart device in the whole house obtained by the first electronic device 100, and/or the like, and intelligent linkage between the smart devices is implemented based on the scenario. For example, intelligent linkage between two or more second electronic devices 300 may be implemented. Details are described below.

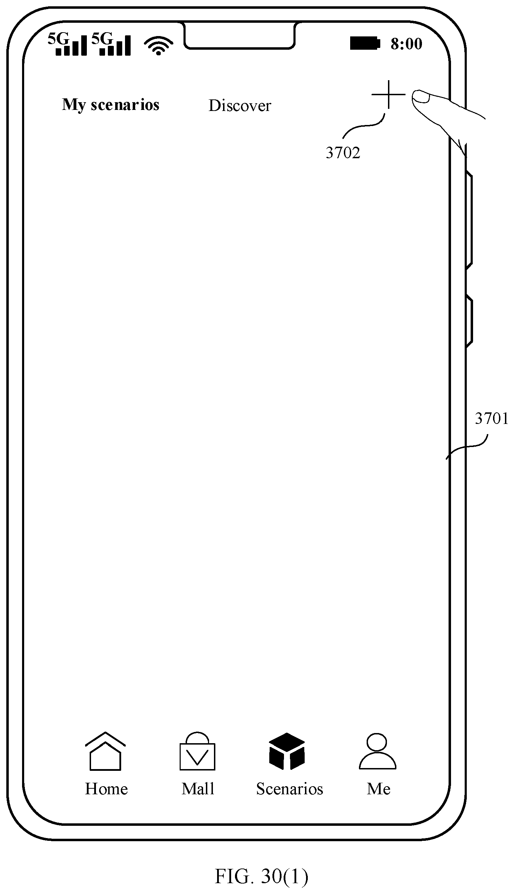

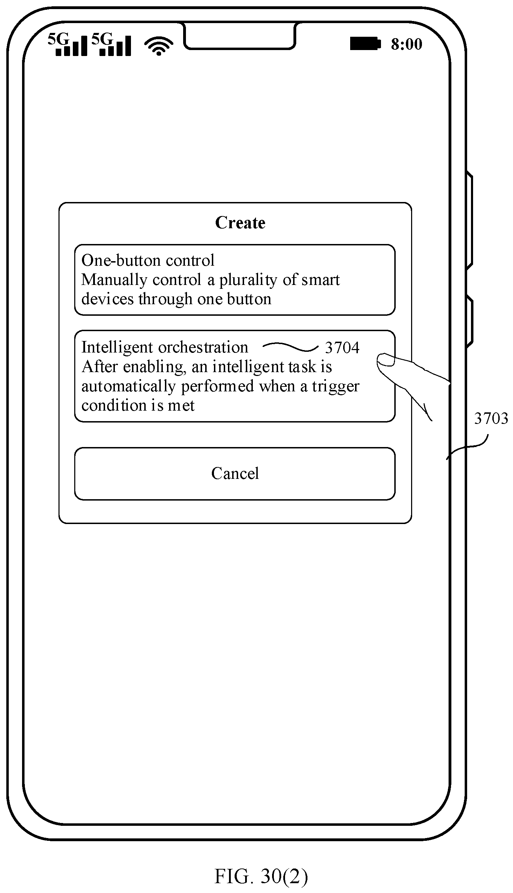

In some embodiments, the user may manually set the IFTTT rule for intelligent scenario triggering. For example, the user sets the IFTTT rule for intelligent scenario triggering by using a smart home application installed on a control device of the smart device. In an example, an example in which the mobile phone is used as the control device of the smart device is used for description. The user starts the smart home application on the mobile phone, and enters a setting interface 3701 of "Scenarios" shown in FIG. 30(1). In response to operating a scenario adding control 3702 on the setting interface 3701 of "Scenarios" by the user, the mobile phone displays a creation interface 3703 shown in FIG. 30(2). The creation interface 3703 includes a "One-button control" option and an "Intelligent orchestration" option 3704. The "One-button control" option is for creating an IFTTT rule for manually controlling a plurality of smart devices through one button. The "Intelligent orchestration" option 3704 is for creating an IFTTT rule for automatically performing an intelligent task when a trigger condition is met. Optionally, the creation interface 3703 may further include a cancel control that is for exiting the creation interface 3703.

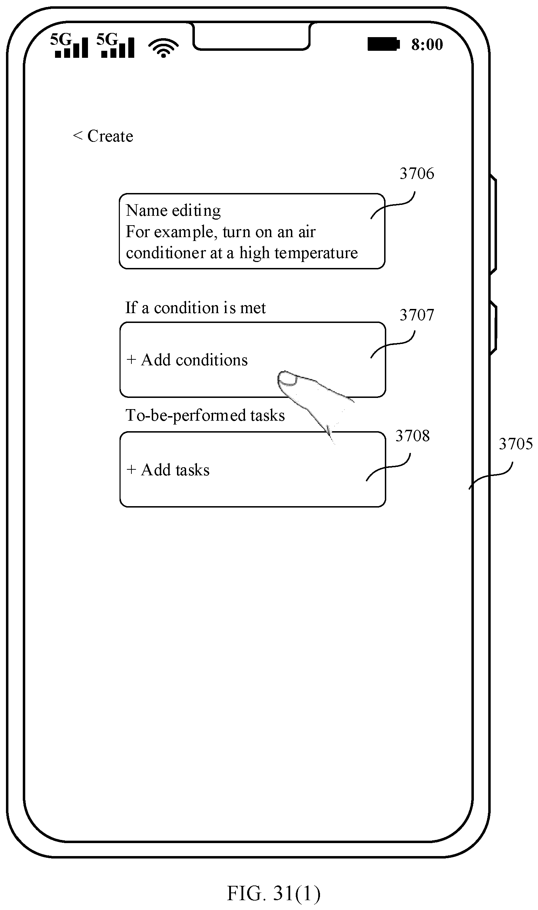

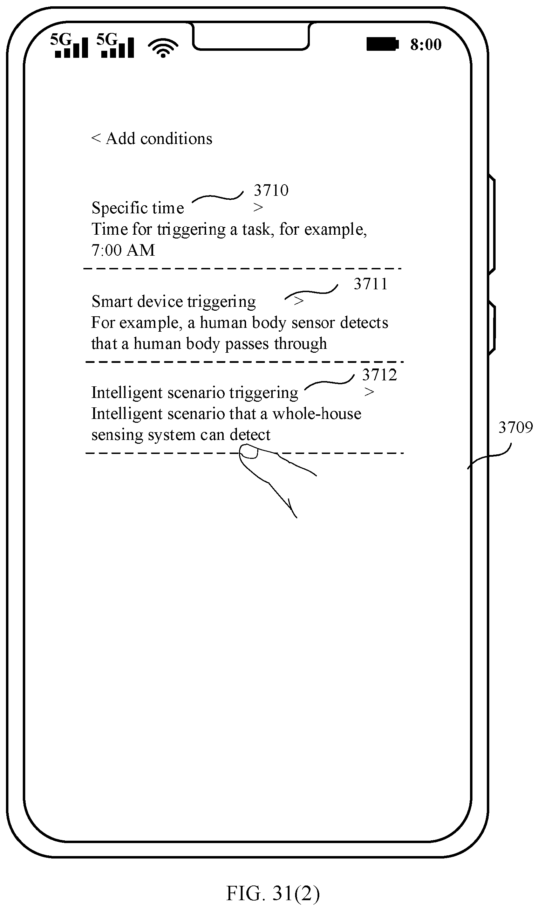

In response to operating the "Intelligent orchestration" option 3704 on the creation interface 3703 by the user, the mobile phone displays an interface 3705 shown in FIG. 31(1). The interface 3705 includes a name editing control 3706, a condition adding control 3707, and a task adding control 3708. The user may edit a name of a newly added IFTTT rule by using the name editing control 3706, to facilitate subsequent viewing, management, and the like. The user may set a condition in the newly added IFTTT rule by using the condition adding control 3707. For example, in response to operating the condition adding control 3707 on the creation interface 3705 by the user, the mobile phone displays an interface 3709 shown in FIG. 31(2). The interface 3709 includes options of a plurality of condition types, such as an option 3710 of a specific time type, an option 3711 of a smart device triggering type, and an option 3712 of an intelligent scenario triggering type. The specific time type means that a condition for triggering a task is a specific time. The smart device triggering type means that the condition for triggering the task is a specific status of one or more smart devices (for example, the lighting lamp is in an on state or an off state) or is that data detected by one or more smart devices meets a specific condition (for example, a temperature and humidity sensor detects that a temperature is greater than 28°C, or detects that humidity is greater than 50%), or the like. The intelligent scenario triggering type means that the condition for triggering the task is that one or more scenarios are detected (for example, the whole-house sensing system detects that a human body sleeps in a room).

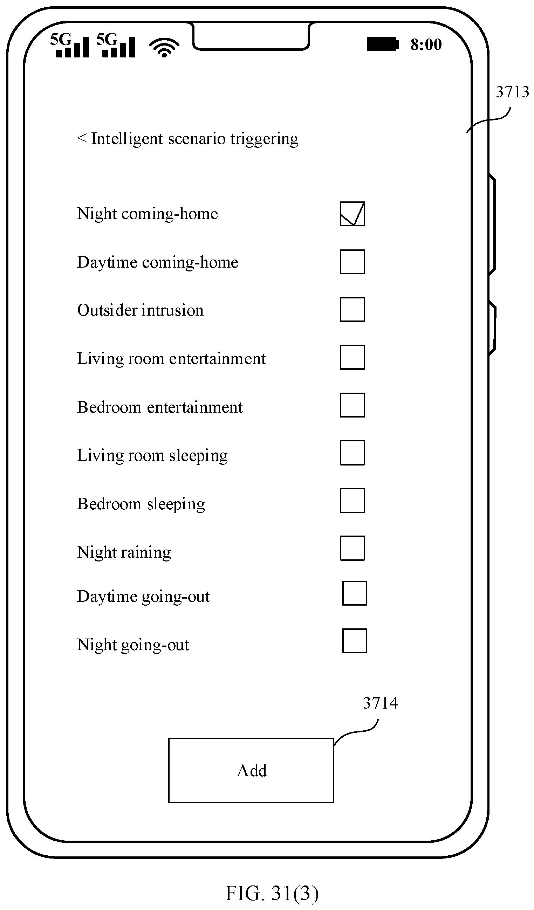

In response to detecting that the user operates the option 3712 of the intelligent scenario triggering type on the interface 3709, the mobile phone displays an interface 3713 shown in FIG. 31(3). The interface 3713 includes various scenarios that can be detected by the whole-house sensing system, such as a night coming-home scenario, a daytime coming-home scenario, an outsider intrusion scenario, a living room entertainment scenario, a bedroom entertainment scenario, a living room sleeping scenario, a bedroom sleeping scenario, a night raining scenario, a daytime going-out scenario, a night going-out scenario, and the like. It should be noted that the scenarios herein are merely examples. In an actual scenario, different scenarios may be determined based on a detection capability of the first electronic device and a data processing capability of a hub device in the whole-house sensing system and according to a specific algorithm set on the hub device, and the like. For another example, the hub device may further detect, based on the whole-house sensing system, a scenario in which a person is in the house, a scenario in which no person is in the house, dining scenario, a video watching scenario, a reading scenario, a cooking scenario, and the like.

It should be further noted that the hub device herein may be, for example, the hub device 200 in (a) in FIG. 1, and is configured to centrally manage all smart devices in a home network. In some examples, a device that is powered on for a long time and has a specific storage capability and computing capability may be selected as the hub device in the home network, for example, a router, a mobile phone, a smart speaker, or a set-top box. In some other embodiments, the hub device may alternatively be one or more second electronic devices 300 or first electronic devices 100. For example, the one or more second electronic devices 300 are equipped with a hub apparatus, and the hub apparatus is configured to centrally manage all the smart devices in the home network. Alternatively, the one or more first electronic devices 100 are equipped with a hub apparatus, and the hub apparatus is configured to centrally manage all the smart devices in the home network.

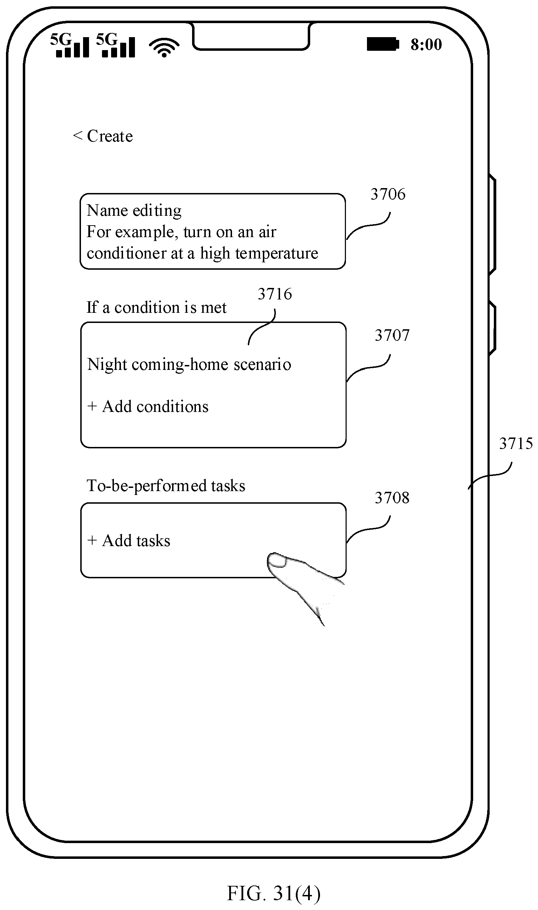

After selecting one or more of the scenarios, the user may complete, by operating an adding control 3714, adding of the condition. In response to detecting that the user taps the adding control 3714, the mobile phone displays an interface 3715 shown in FIG. 31(4). On the interface 3715, the condition, for example, "Night coming-home", that is added by the user is displayed in a condition list of the IFTTT rule.

It should be noted that one IFTTT rule may include a condition of one condition type, or may include conditions of a plurality of condition types. This is not limited in embodiments of this application.

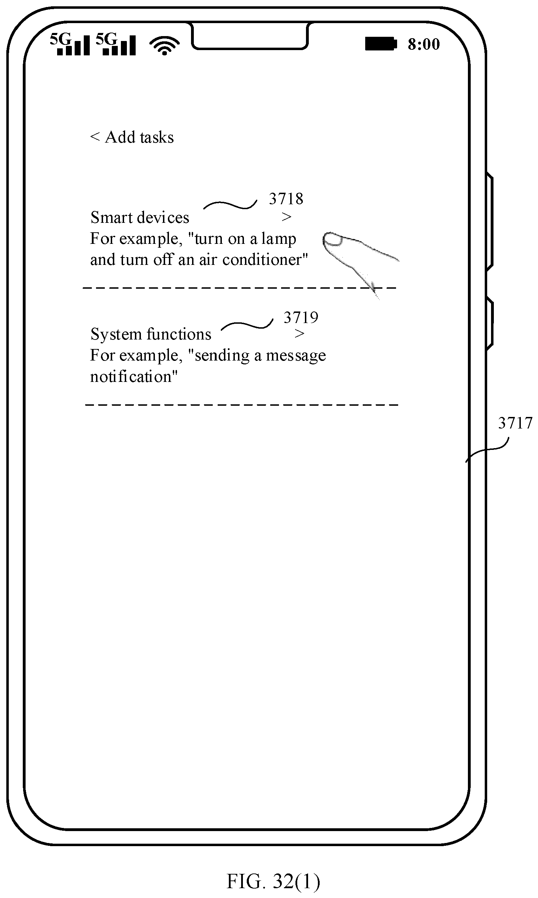

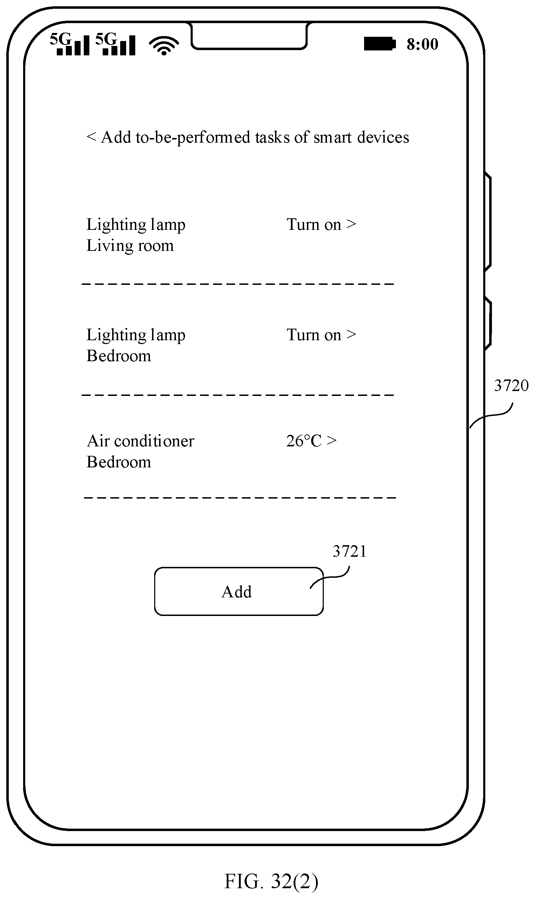

Further, in response to operating the task adding control 3708 on the interface 3715 by the user, the mobile phone displays an interface 3717 shown in FIG. 32(1). The interface 3717 includes options of a plurality of task types, for example, a control 3718 of a smart device type and a control 3719 of a system function type. The smart device type means that a smart device or some smart devices perform the task. The system function type means that the mobile phone performs some system functions, for example, sends a message notification. The user may add, based on an actual requirement, a corresponding task by using the control 3718 of the smart device type and/or the control 3719 of the system function type. For example, FIG. 32(2) shows a task list 3720 added by the user for the IFTTT rule. Then, the user may operate adding confirmation 3721 to complete adding of the task. In this way, a process of manually setting the IFTTT rule by the user is completed. It should be noted that one IFTTT rule may include a task of one task type, or may include tasks of a plurality of task types. This is not limited in embodiments of this application.

Optionally, in some examples, the hub device may predefine a priority sequence of the scenarios that can be detected by the whole-house sensing system. Alternatively, the user may manually set a priority sequence of IFTTT rules corresponding to the scenarios detected by the whole-house sensing system. In this way, when the whole-house sensing system detects a plurality of scenarios, and tasks performed by one or some smart devices are different in IFTTT rules corresponding to the plurality of scenarios, the hub device may determine, based on a priority sequence of the IFTTT rules corresponding to the scenarios, a task to be performed the smart device with the conflicting tasks.

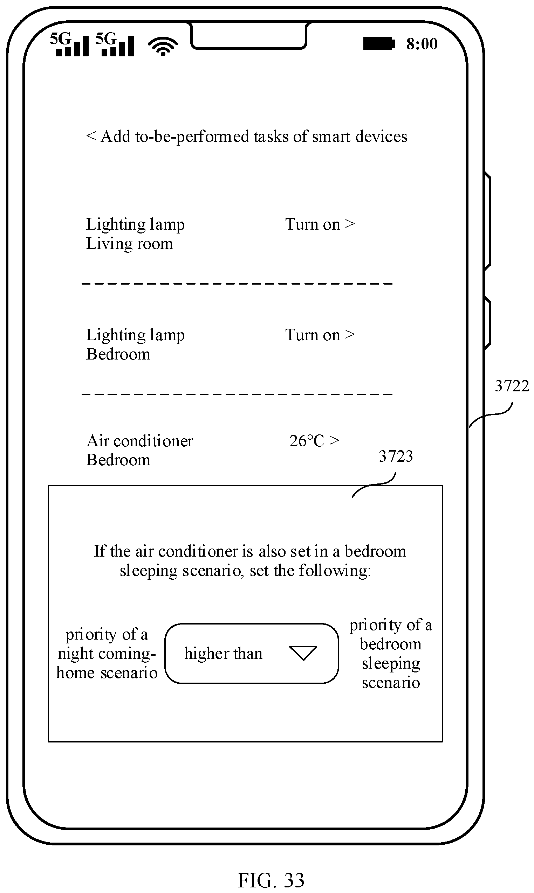

For example, after setting the IFTTT rules, the user may uniformly set the priority sequence of the scenarios related to the IFTTT rules. In an example, the priority sequence of the scenarios in descending order is as follows: the outsider intrusion scenario>the night raining scenario>the living room sleeping scenario/the bedroom sleeping scenario>the night coming-home scenario/the night going-out scenario/the daytime going-out scenario>the living room entertainment scenario/the bedroom entertainment scenario. Alternatively, in a process in which the user sets the IFTTT rules, when detecting that different IFTTT rules include conflicting tasks (for example, a same smart device performs different tasks, or smart devices of a same type in a same room perform different tasks), the mobile phone prompts the user to set priorities for scenarios corresponding to conflicting tasks. For example, in the process of setting the IFTTT rules, when it is detected that a task of an air conditioner is set in different scenarios, a prompt window 3723 may be displayed on an interface 3722 shown in FIG. 33, to prompt the user to set priorities of the different scenarios.

Optionally, in some other examples, the hub device may further predefine a user preference setting item, that is, a range of a user profile tag supported by the hub device. In this way, when the user manually sets the IFTTT rules, if the specified IFTTT rule relates to the user preference setting item, the mobile phone may prompt the user to set a user preference value (namely, the user profile tag) corresponding to the user preference setting item. For example, the hub device predefines an air conditioner temperature during sleeping, a favorite music type, and light brightness of the lighting lamp during video watching are user preference setting items. In this case, when the user starts to create the IFTTT rule, when the user starts a smart home device for the first time, or at another occasion, the hub device may prompt the user to set a user preference value of a specific smart device. For example, the user sets, to 24°C, a user preference value corresponding to the air conditioner temperature during sleeping, to pop music, a user preference value corresponding to the favorite music type, and to 15%, the light brightness of the lighting lamp during video watching. In this way, when a specific smart device in an IFTTT rule of a scenario set by the user subsequently performs a task, the task may be preferably performed based on a user preference value set by the user.

It should be noted that the foregoing uses the smart home application as an example to describe the process in which the user manually sets the IFTTT rules. It may be understood that the user may alternatively manually set the IFTTT rules in another manner. For example, the user may log in to a setting interface of the hub device by using a device, and set the IFTTT rules on the setting interface of the hub device. Details are not described one by one herein.

In some other embodiments, the hub device may collect the scenarios detected by the whole-house sensing system and a task performed by each smart device in the whole house in each scenario. Specifically, the hub device may collect a change state of each smart device, a control command for each smart device that is sent by using the smart home application, or the like. It may be understood that the user may send the control command to the smart device by using the smart home application. In this case, the hub device may obtain, by collecting the control command for each smart device forwarded by using the smart home application, the task performed by each smart device. The user may alternatively directly operate a panel or a button of the smart device to trigger the smart device to perform a corresponding task. In this case, the hub device may obtain, by collecting a status change of each smart device, a task performed by each smart device. In conclusion, a method for obtaining, by the hub device, the task performed by each smart device in the whole house is not limited in embodiments of this application.

Then, the hub device obtains, through counting, a behavior habit of the user based on the collected task performed by each smart device in each scenario, and learns the IFTTT rule in each scenario. During specific implementation, the hub device may trigger counting the behavior habit of the user in real time or cyclically (for example, every day, every seven days, or every month) or under a specific condition (for example, every five minutes after powering on), to traverse each scenario, and obtain a task performing status of the smart device in a same scenario, for example, obtain a task performing status of the smart device within preset duration (for example, five minutes) that is before and after the whole-house sensing system detects a scenario. When it is learned, through counting, that one or some smart devices perform a same task for consecutive M1 days (for example, seven days) or consecutive M2 times (for example, seven times) in a scenario, an IFTTT rule in the scenario is generated.

In still some embodiments, the hub device may further collect statistics on a behavior habit of the user according to a collected task executed by each smart device in the entire house in each scenario and a user preference setting item predefined by the hub device, and learn a user preference value of a specific smart device.

In still some embodiments, the hub device may alternatively send, to another smart device or a server, collected information such as the task performed by each smart device in the whole house in each scenario. The another smart device or the server learns the IFTTT rule and/or the user preference value of the specific smart device in each scenario, and then returns, to the hub device, the learned IFTTT rule and/or the user preference value of the specific smart device in each scenario.

In still some embodiments, specific content of the IFTTT rule may alternatively be determined by using a combination of manually setting the IFTTT rule by the user and learning the IFTTT rule by the hub device. This is not specifically limited in embodiments of this application.

It may be understood that, compared with that in the conventional technology, the trigger condition of the IFTTT rule is a time point and a status of the smart device. The trigger condition of the IFTTT rule in this embodiment of this application may alternatively be detecting the scenario based on the whole-house sensing system. The whole-house sensing system can detect a position of the user in the house, an attitude of the user, a status of the user, and the like, to identify a more refined scenario. Linkage of another smart device in the house is triggered based on the more refined scenario. This can meet a requirement on linkage of more smart devices, and improve intelligence of linkage of the smart device.

(2) Triggering a process of linkage between the smart devices based on the scenario detected by the whole-house sensing system

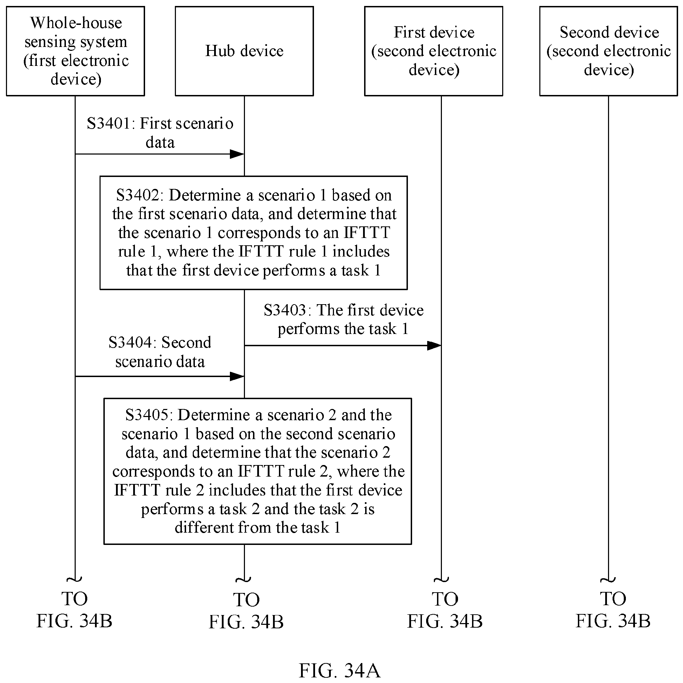

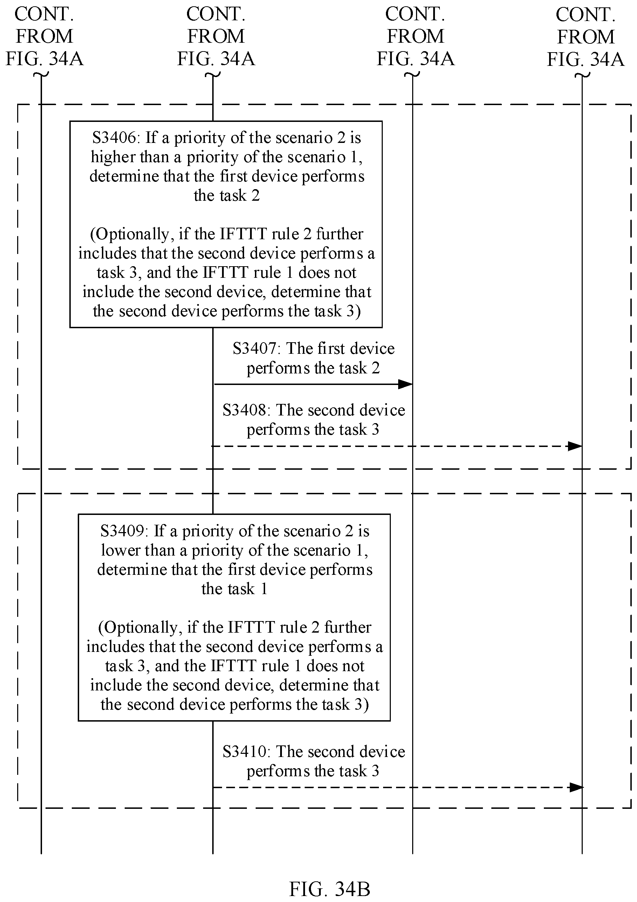

FIG. 34A and FIG. 34B are a flowchart of a method for implementing linkage between smart devices based on a whole-house sensing system according to an embodiment of this application. The method includes the following steps.

S3401: The whole-house sensing system sends first scenario data to a hub device.

The whole-house sensing system includes the first electronic device 100 in (a) in FIG. 1, configured to locate a user and/or obtain a position of each smart device (for example, the second electronic device 300) in a whole house, and the like. As described above, some first electronic devices 100 each are equipped with a millimeter-wave radar, and may further detect, by using the millimeter-wave radar, a position at which the user is located in the whole house (for example, a room in which the user is located), an identity category (for example, an adult or a child) of the user, an attitude (for example, standing, sitting, or lying-down) of the user, and a physiological feature (for example, a sleeping state that is of the user and that may be determined based on a detected breath frequency and heartbeat frequency) of the user, a movement status of the user, a height feature of the user, and the like. Some first electronic devices 100 each are further equipped with a UWB module, and may be configured to detect a position of the second electronic device.

The hub device may be, for example, the hub device 200 in (a) in FIG. 1, and is configured to centrally manage all smart devices in a home network. In some examples, a device that is powered on for a long time and has a specific storage capability and computing capability may be selected as the hub device in the home network, for example, a router, a mobile phone, a smart speaker, or a set-top box.

In some examples, each first electronic device 100 in the whole-house sensing system has a specific storage capability and processing capability, and may perform comprehensive analysis on data collected or simply processed by each first electronic device 100 in the whole-house sensing system, to identify that a current scenario in the whole house is a scenario 1 that is a corresponding scenario in an IFTTT rule of an intelligent scenario. The scenario 1 may be, for example, any one or more of a night coming-home scenario, a daytime coming-home scenario, an outsider intrusion scenario, a living room entertainment scenario, a bedroom entertainment scenario, a living room sleeping scenario, a bedroom sleeping scenario, a night raining scenario, a daytime going-out scenario, a night going-out scenario, and the like. Then, the whole-house sensing system sends the first scenario data to the hub device in the whole house. In this example, the first scenario data may be data that directly indicates that a scenario in the house is the scenario 1.

In some other examples, each first electronic device 100 in the whole-house sensing system has no specific storage capability and processing capability. In this case, the whole-house sensing system sends, to the hub device, data detected by the first electronic device 100. The hub device performs comprehensive analysis on the received data, to identify that a current scenario is a scenario 1. In this example, the first scenario data is data detected by each first electronic device 100 at a current moment or within a current time period (for example, a moment 1 or a time period 2).

S3402: The hub device determines the scenario 1 based on the first scenario data, and determines that the scenario 1 corresponds to an IFTTT rule 1, where the IFTTT rule 1 includes that a first device performs a task 1.

The hub device stores an IFTTT rule of an intelligent scenario set by the user or an IFTTT rule learned by the hub device. For both a method for setting the IFTTT rule by the user and a method for learning the IFTTT rule by the hub device, refer to the foregoing descriptions. Details are not described herein again. The IFTTT rule includes a trigger condition and a to-be-performed task of the smart device.

For example, the hub device determines, based on the first scenario data, that the scenario in the house is the scenario 1. It should be noted that, in some scenarios, the hub device may further receive status information of another smart device (namely, another second electronic device) in the house. In this case, the hub device may further determine the current scenario in the house based on the first scenario data and the status information (a power-on state, a power-off state, an online state, an offline status, or the like) of another smart device. For example, the first scenario data includes the following: The millimeter-wave radar configured for the first electronic device detects that the user is located in a living room and the user is in a sitting attitude; and the UWB module configured for the first electronic device detects that a television 1 is located in the living room. In addition, the hub device further receives that the television 1 is in the power-on state. In this case, the hub device may determine, based on the first scenario data and the power-on state of the television 1, that the scenario in the house is the living room entertainment scenario. Certainly, in some other embodiments, the first electronic device in the whole-house sensing system may obtain the status information of the another second electronic device. In this case, the first scenario data may further include the status information of the second electronic device.

After the hub device determines that the current scenario in the house is the scenario 1, the hub device searches the stored IFTTT rule for an IFTTT rule whose trigger condition is the scenario 1, namely, the scenario 1 corresponds to the IFTTT rule 1. A to-be-performed task of the smart device in the IFTTT rule 1 includes that the first device performs the task 1. Optionally, the IFTTT rule 1 may further include that the another smart device performs another task.

S3403: The hub device sends, to the first device, an indication for performing the task 1.

For example, the hub device may send, to the first device, the indication for performing the task 1 through a local connection, or the hub device may send, to the first device by using a server (for example, a server corresponding to a smart home application), the indication for performing the task 1. Then, after receiving the indication, the first device performs the task 1.

Optionally, if the IFTTT rule 1 further includes that the another smart device performs the another task, similarly, the hub device sends, to the another smart device, an indication for performing the another task.

S3404: The whole-house sensing system sends second scenario data to the hub device.

Similar to the first scenario data, the second scenario data includes data detected by each first electronic device in the whole-house sensing system at a current moment or within a time period (for example, a moment 2 or a time period 2), or the second scenario data is data indicating that the scenario in the house is a scenario 2 and the scenario 1.

For example, when it is detected that the scenario in the house is the scenario 2, it is detected that the scenario in the house is still the scenario 1. In other words, the scenario 2 and the scenario 1 currently coexist in the house. The scenario 2 may be, for example, any one or more of the night coming-home scenario, the daytime coming-home scenario, the outsider intrusion scenario, the living room entertainment scenario, the bedroom entertainment scenario, the living room sleeping scenario, the bedroom sleeping scenario, the night raining scenario, the daytime going-out scenario, the night going-out scenario, and the like. In addition, the scenario 2 is different from the scenario 1

It may be understood that, when the house includes two or more users, each user may be in a different scenario.

For example, a user 1 is in the bedroom sleeping scenario, and a user 2 is in the night coming-home scenario, that is, the whole-house sensing system detects that a plurality of scenarios coexist. Certainly, in some other cases, when there is only one user in the house, a plurality of scenarios may coexist, for example, a night sleeping scenario and a night raining scenario.

For other content, refer to descriptions of related content in step S3401.

S3405: The hub device determines the scenario 2 and the scenario 1 based on the second scenario data, and determines that the scenario 2 corresponds to an IFTTT rule 2. The IFTTT rule 2 includes that the first device performs the task 2 and the task 2 is different from the task 1.

In other words, the task 2 to be performed by the first device in the IFTTT rule 2 conflicts with the task 1 to be performed by the first device in the IFTTT rule 1. Certainly, in some other examples, the IFTTT rule 2 may further include a to-be-performed task that is of the smart device and that does not conflict with the IFTTT rule 1.

S3406: If a priority of the scenario 2 is higher than a priority of the scenario 1, the hub device determines that the first device performs the task 2.

In some embodiments, as described above, the hub device already predefines a priority sequence of all scenarios, or the user already manually sets the priority sequence of all scenarios. The priority sequence of the scenarios is consistent with a priority sequence of tasks in IFTTT rules corresponding to the scenarios. In other words, a higher priority of a scenario indicates a higher priority of a task in an IFTTT rule corresponding to the scenario. When the plurality of scenarios coexist, a task with a higher priority is selected. Therefore, if the priority of the scenario 2 is higher than the priority of the scenario 1, the hub device determines that the first device performs the task 2.

Optionally, if the IFTTT rule 2 further includes another task that does not conflict with the IFTTT rule 1, the hub device further continues to perform the another task.

For example, the IFTTT rule 2 includes a task that is not included in the IFTTT rule 1. For example, if the IFTTT rule 2 further includes that a second device performs a task 3, and the IFTTT rule 1 does not include that the second device performs the task 3, the hub device determines that the second device performs the task 3.

For another example, the IFTTT rule 2 includes a same task as that in the IFTTT rule 1. For example, if the IFTTT rule 2 further includes that a smart device 3 performs a task 4, and the IFTTT rule 1 also includes that the smart device 3 performs the task 4, the hub device determines that the smart device 3 performs the task 4. It should be noted that, when executing the IFTTT rule 1, the hub device already indicates the smart device 3 to perform the task 4 (not shown in the figure). In this case, the hub device may not send, to the smart device 3, an indication for performing the task 4. Alternatively, the hub device still sends, to the smart device 3, an indication for performing the task 4. However, because the smart device 3 already performs the task 4, the smart device 3 does not need to perform the task 4 again.

S3407: The hub device sends, to the first device, an indication for performing the task 2.

S3408: The hub device sends, to the second device, an indication for performing the task 3.

Optionally, if the IFTTT rule 2 further includes that the second device performs the task 3, the hub device further performs this step. If the IFTTT rule 2 does not include that the second device performs the task 3, this step does not need to be performed.

In step S3406 to step S3408, descriptions are provided by using a case in which the priority of the scenario 2 is higher than the priority of the scenario 1. If a priority of the scenario 2 is lower than a priority of the scenario 1, step S3409 and step S3410 are performed.

S3409: If the priority of the scenario 2 is lower than the priority of the scenario 1, the hub device determines that the first device performs the task 1.

When the plurality of scenarios coexist, the priority of the scenario 2 is lower than the priority of the scenario 1, and a priority of the task 2 in the IFTTT rule 2 is lower than a priority of the task 1 in the IFTTT rule 1. Therefore, the hub device determines that the first device performs the task 1. When executing the IFTTT rule 1, the hub device already sends, to the first device, the indication for performing the task 1. Therefore, the hub device does not need to send, to the first device again, the indication for performing the task 1. Alternatively, the hub device may still send, to the first device, the indication for performing the task 1. However, because the first device already performs the task 1, the first device does not need to perform the task 1 again.

Optionally, if the IFTTT rule 2 further includes another task that does not conflict with the IFTTT rule 1, the hub device further continues to perform the another task.

For example, the IFTTT rule 2 includes a task that is not included in the IFTTT rule 1. For example, if the IFTTT rule 2 further includes that a second device performs a task 3, and the IFTTT rule 1 does not include that the second device performs the task 3, the hub device determines that the second device performs the task 3.

For another example, the IFTTT rule 2 includes a same task as that in the IFTTT rule 1. For example, if the IFTTT rule 2 further includes that a smart device 3 performs a task 4, and the IFTTT rule 1 also includes that the smart device 3 performs the task 4, the hub device determines that the smart device 3 performs the task 4. It should be noted that, when executing the IFTTT rule 1, the hub device already indicates the smart device 3 to perform the task 4 (not shown in the figure). In this case, the hub device may not send, to the smart device 3, an indication for performing the task 4.

Alternatively, the hub device still sends, to the smart device 3, an indication for performing the task 4. However, because the smart device 3 already performs the task 4, the smart device 3 does not need to perform the task 4 again.

When the plurality of scenarios coexist, a task with a higher priority is selected. Therefore, if the priority of the scenario 2 is higher than the priority of the scenario 1, the hub device determines that the first device performs the task 2.

Optionally, if the IFTTT rule 2 further includes another task that does not conflict with the IFTTT rule 1, the hub device further continues to perform the another task. For specific content, refer to the descriptions of the related content in S3408. Details are not described herein again.

S3410: The hub device sends, to the second device, an indication for performing the task 3.

Optionally, if the IFTTT rule 2 further includes that the second device performs the task 3, the hub device further performs this step. If the IFTTT rule 2 does not include that the second device performs the task 3, this step does not need to be performed.

It may be understood that, because the whole-house sensing system can senses a more refined scenario, the plurality of scenarios in the house can be identified. Further, when a conflict occurs between tasks in IFTTT rules corresponding to the plurality of scenarios in the house, conflicting specific tasks to be performed by a smart device may be further determined based on priorities of the scenarios. This meets a requirement of the user on linkage between the smart devices in the plurality of scenarios, thereby improving user experience.

It should be further noted that, in some other embodiments, the hub device further predefines a user preference setting item (for example, an air conditioner temperature during sleeping, a favorite music type, or light brightness of a lighting lamp during video watching), and learns or receives a user preference value set by the user. In this case, when executing the IFTTT rule, the hub device preferably performs a task based on the user preference value. When there are the plurality of scenarios in the house, a task is also performed, when the conflicting tasks are performed, based on the user preference value.

For example, when detecting that the scenario in the house is the scenario 1, the hub device determines that the scenario 1 corresponds to the IFTTT rule 1, and preferably performs, when the IFTTT rule 1 includes a task related to the user preference value, the related task based on the user preference value. In an example, the user sets the air conditioner temperature during sleeping to 26°C. If the scenario 1 is a sleeping scenario, the IFTTT rule 1 includes setting the air conditioner temperature to 22°C. In this case, when executing the IFTTT rule 1, the hub device indicates an air conditioner to adjust a temperature to 26°C. If the scenario 1 is not a sleeping scenario, the IFTTT rule 1 includes setting the air conditioner temperature to 22°C. In this case, when executing the IFTTT rule 1, the hub device indicates an air conditioner to adjust a temperature to 22°C. Another task unrelated to the user preference value is performed according to the method provided in the foregoing embodiment.

For another example, if a task that conflicts with the IFTTT rule 1 and that is in the IFTTT rule 2 includes a task related to the user preference setting item, the hub device still preferably performs the related task based on the user preference value. In an example, the user sets the air conditioner temperature during sleeping to 26°C. If the scenario 1 is a non-sleeping scenario, the IFTTT rule 1 corresponding to the scenario 1 includes setting the air conditioner temperature to 22°C. In this case, when executing the IFTTT rule 1, the hub device indicates an air conditioner to adjust a temperature to 22°C. When the scenario 2 is a sleeping scenario, the IFTTT rule 2 corresponding to the scenario 2 includes setting the air conditioner temperature to 26°C. In this case, even if the priority of the scenario 2 is lower than the priority of the scenario 1, the hub device keeps the air conditioner temperature set to 26°C. In another example, the user sets the air conditioner temperature during sleeping to 26°C. If the scenario 1 is a sleeping scenario, the IFTTT rule 1 corresponding to the scenario 1 includes setting the air conditioner temperature to 22°C. In this case, when executing the IFTTT rule 1, the hub device indicates an air conditioner to adjust a temperature to 26°C. When the scenario 2 is a non-sleeping scenario, the IFTTT rule 2 corresponding to the scenario 2 includes setting the air conditioner temperature to 26°C. In this case, even if the priority of the scenario 2 is higher than the priority of the scenario 1, the hub device keeps the air conditioner temperature set to 26°C. Another task unrelated to the user preference value is performed according to the conflict resolution method provided in the foregoing embodiment.

It can be learned that, when a conflict occurs between tasks in IFTTT rules corresponding to the plurality of scenarios in the house, conflicting specific tasks to be performed by a smart device may be further determined based on priorities of the scenarios or a user preference. This meets a requirement of the user on linkage between the smart devices in the plurality of scenarios, thereby improving user experience.

With reference to some specific IFTTT rules, the following describes the technical solutions provided in this embodiment of this application.

Table 5 shows an example of a list of the IFTTT rule stored in the hub device and a priority sequence of scenarios.

**Table 5**

| | Trigger condition (scenario) | To-be-performed task of a smart device | | |
|---|---|---|---|---|
| IFTTT rule 1 | Living room sleeping scenario | Living-room lighting lamp: turning off | Living-room air conditioner: 24°C | Living-room television: turning off |
| IFTTT rule 2 | Night coming-home scenario | Living-room lighting lamp: turning on | Living-room air conditioner: 24°C | Porch lamp: turning on |
| IFTTT rule 3 | Night raining scenario | | Living-room air conditioner: 28°C | |
| IFTTT rule 4 | Living room entertainment scenario | Living-room lighting lamp: light brightness | Living-room air conditioner: | |
| | | 15% | 22°C | |
| IFTTT rule 5 | Night leaving-home scenario | Living-room lighting lamp: turning off | Living-room air conditioner: turning off | Bedroom lighting lamp, bedroom air conditioner, and the like: turning off |
| Priority sequence: night raining scenario>living room sleeping scenario>night coming-home scenario>bedroom entertainment scenario>night leaving-home scenario | | | | |

In an example, at 8:00 PM, a family member 1 watches television in the living room. The television sends the power-on state to the hub device. The hub device further detects, based on a millimeter-wave radar, that the user is located in the living room, and identifies that the user is in the sitting attitude. In this case, the hub device determines that the scenario in the house is the living room entertainment scenario and the living room entertainment scenario corresponds to the IFTTT rule 4 shown in Table 5. A to-be-performed task of a smart device included in the IFTTT rule 4 includes setting the light brightness of the living-room lighting lamp to 15% and setting a temperature of the living-room air conditioner to 22°C. The hub device executes the IFTTT rule 4.

At 9:00 PM, the family member 1 falls asleep lying on a sofa in the living room. The hub device detects, based on a millimeter-wave radar in the whole-house sensing system, that the user is located in the living room, identifies that the user is in the lying-down attitude, and further determines, based on the detected breath frequency and/or heartbeat frequency of the user, that the user is in a sleeping state. In this case, the hub device determines that the scenario in the house is the living room sleeping scenario and the living room sleeping scenario corresponds to the IFTTT rule 1 shown in Table 5. A to-be-performed task of a smart device included in the IFTTT rule 1 includes turning off the living-room lighting lamp, setting a temperature of the living-room air conditioner to 24°C, turning off the living-room television, and the like. The hub device executes the IFTTT rule 1.

At 10:00 PM, a family member 2 comes home from outside, and performs unlocking through a smart door lock. The smart door lock sends unlocking information to the hub device, and the hub device determines that the scenario in the house is the night coming-home scenario. The hub device determines, based on the night coming-home scenario, that the night coming-home scenario corresponds to the IFTTT rule 2 shown in Table 5. A to-be-performed task of a smart device included in the IFTTT rule 2 includes turning on the porch light, turning on the living-room lighting lamp, and setting a temperature of the living-room air conditioner to 24°C.

In addition, the hub device further detects, based on the millimeter-wave radar of the whole-house sensing system, that the user is currently in the living room, and the user is in the sleeping state, that is, the scenario in the house is still the sleeping scenario. To be specific, in this case, the hub device detects a plurality of scenarios based on the whole-house sensing system. In this case, the hub device performs a task that does not conflict with the IFTTT rule 1 and that is of a smart device in the IFTTT rule 2, and performs conflicting tasks of a smart device based on the priority sequence of the scenarios.

Specifically, the IFTTT rule 1 does not include control of the porch lamp. Therefore, turning on the porch lamp in the IFTTT rule 2 does not conflict with the IFTTT rule 1, and the hub device sends a turning-on indication to the porch lamp, so that the porch lamp is turned on.

Turning on the living-room lighting lamp in the IFTTT rule 2 conflicts with turning off the living-room lighting lamp in the IFTTT rule 1. Further, if the hub device determines that a priority of the living room sleeping scenario is higher than that of the night coming-home scenario, the living-room lighting lamp performs the task according to the IFTTT rule 1. To be specific, the living-room lighting lamp is still turned off. In this case, the hub device may not send a turning-off indication to the living-room lighting lamp. Alternatively, the hub device may send a turning-off indication to the living-room lighting lamp. However, the living-room lighting lamp is originally turned off currently, and the living-room lighting lamp does not need to perform a turning-off task.

Setting the temperature of the living-room air conditioner to 24°C in the IFTTT rule 2 and setting the temperature of the living-room air conditioner to 26°C in the IFTTT rule 1 are a same task. When executing the IFTTT rule 1, the hub device already performs the task previously. Therefore, the hub device may not need to send a temperature setting indication to the living-room air conditioner. Alternatively, the hub device still sends a temperature setting indication to the living-room air conditioner. However, because the temperature of the living-room air conditioner is originally set to 24°C, no adjustment is required.

At 10:30 PM, after detecting a raindrop, a raindrop sensor outside a window sends a raining event to the hub device. The hub device determines that the current scenario is the night raining scenario. The hub device determines, based on the night raining scenario, that the night raining scenario corresponds to the IFTTT rule 3 shown in Table 5. A to-be-performed task of a smart device included in the IFTTT rule 3 includes setting a temperature of the living-room air conditioner to 28°C. Then, a related task is performed according to the IFTTT rule 1 and the IFTTT rule 3.

In addition, the hub device further detects, based on the millimeter-wave radar of the whole-house sensing system, that the user is currently in the living room, and the user is in the sleeping state, that is, the scenario in the house is still the sleeping scenario. It should be noted that, the house is currently no longer in the night coming-home scenario. In this case, the hub device performs a task that does not conflict with the IFTTT rule 1 and that is of a smart device in the IFTTT rule 3, and performs conflicting tasks of a smart device based on the priority sequence of the scenarios.

Specifically, setting the temperature of the living-room air conditioner to 28°C in the IFTTT rule 3 conflicts with setting the temperature of the living-room air conditioner to 24°C in the IFTTT rule 1. Further, if the hub device determines that a priority of the night raining scenario is higher than that of the living room sleeping scenario, the living-room air conditioner performs the task according to the IFTTT rule 2. To be specific, the temperature of the living-room air conditioner is set to 28°C.

In another example, the hub device further predefines a user preference setting item of the air conditioner temperature during sleeping. The user sets a user preference value of the air conditioner temperature during sleeping to 24°C by using the smart home application, or the hub device learns that a user preference value of the air conditioner temperature during sleeping is 24°C. In this case, when the IFTTT rule is subsequently executed, if a task to be performed by a smart device in the IFTTT rule conflicts with the user preference, it is preferably ensured that the smart device performs a task consistent with the user preference.

For example, the user sleeps lying on a sofa in the living room. The hub device detects, based on a millimeter-wave radar in the whole-house sensing system, that the user is located in the living room, identifies that the user is in the lying-down attitude, and further determines, based on the detected breath frequency and/or heartbeat frequency of the user, that the user is in a sleeping state. In this case, the hub device determines that the scenario in the house is the living room sleeping scenario and the living room sleeping scenario corresponds to the IFTTT rule 1 shown in Table 5. A to-be-performed task of a smart device included in the IFTTT rule 1 includes turning off the living-room lighting lamp, setting a temperature of the living-room air conditioner to 24°C, turning off the living-room television, and the like. The hub device executes the IFTTT rule 1.

When a period of time expires, after detecting a raindrop, a raindrop sensor outside a window sends a raining event to the hub device. The hub device determines that the current scenario in the house is the night raining scenario. The hub device determines, based on the night raining scenario, that the night raining scenario corresponds to the IFTTT rule 3 shown in Table 5. A to-be-performed task of a smart device included in the IFTTT rule 3 includes setting a temperature of the living-room air conditioner to 28°C. Then, a related task is performed according to the IFTTT rule 1 and the IFTTT rule 3.

In addition, the hub device further detects, based on the millimeter-wave radar of the whole-house sensing system, that the user is currently in the living room, and the user is in the sleeping state, that is, the scenario in the house is still the living room sleeping scenario. In this case, the hub device performs a task that does not conflict with the IFTTT rule 1 and that is of a smart device in the IFTTT rule 3, and performs conflicting tasks of a smart device based on the priority sequence of the scenarios and the user preference. In addition, the hub device further needs to preferably ensure the user preference.

Specifically, setting the temperature of the living-room air conditioner to 28°C in the IFTTT rule 3 conflicts with setting the temperature of the living-room air conditioner to 24°C in the IFTTT rule 1. However, it should be noted that the user preference value of the air conditioner temperature during sleeping is 24°C. In this case, although a priority of the night raining scenario is higher than that of the living room sleeping scenario, the temperature of the living-room air conditioner is still set to 24°C.

For another example, the user watches television in the living room. The hub device learns, based on the whole-house sensing system, that the current scenario is the living room entertainment scenario and the living room entertainment scenario corresponds to the IFTTT rule 4 shown in Table 5. A to-be-performed task of a smart device included in the IFTTT rule 4 includes setting the light brightness of the living-room lighting lamp to 15% and setting a temperature of the living-room air conditioner to 22°C. The hub device executes the IFTTT rule 4.

When a period of time expires, after detecting a raindrop, a raindrop sensor outside a window sends a raining event to the hub device. The hub device determines that the current scenario is the night raining scenario. The hub device determines, based on the night raining scenario, that the night raining scenario corresponds to the IFTTT rule 3 shown in Table 5. A to-be-performed task of a smart device included in the IFTTT rule 3 includes setting a temperature of the living-room air conditioner to 28°C. Then, a related task is performed according to the IFTTT rule 1 and the IFTTT rule 3.

In addition, the hub device detects, based on the whole-house sensing system, that the scenario in the house is still the living room entertainment scenario. In this case, the hub device performs a task that does not conflict with the IFTTT rule 4 and that is of a smart device in the IFTTT rule 3, and performs conflicting tasks of a smart device based on the priority sequence of the scenarios and the user preference.

Specifically, setting the temperature of the living-room air conditioner to 28°C in the IFTTT rule 3 conflicts with setting the temperature of the living-room air conditioner to 24°C in the IFTTT rule 4. Therefore, a user preference for the air conditioner temperature during sleep is currently not mentioned. In this case, because a priority of the night raining scenario is higher than that of the living room entertainment scenario, the temperature of the living-room air conditioner is adjusted to 28°C.

It should be further noted that, in the foregoing embodiment, an example in which the user sets the IFTTT rule or the hub device automatically generates the IFTTT rule based on a task record and/or a status change record of the smart device in the house in each scenario, and then linkage between the smart devices is performed according to the generated IFTTT rule is used for description. In some embodiments, the hub device may previously obtain, through counting, a linkage rule of the smart devices based on the task record and/or the status change record of the smart device in the house in each scenario. After the user triggers an intelligent recommendation function (for example, starts the smart home application, approaches a central control panel in the house, or operates an intelligent recommendation control), the hub device may identify a scenario that the user is currently in, and then recommend, to the user, a linkage suggestion for the smart device in the scenario based on the linkage rule counted previously. The user may quickly trigger linkage between the smart devices based on the linkage suggestion. In some other embodiments, the hub device may alternatively obtain, through counting, a linkage rule of the smart devices based on the task record and/or the status change record of the smart device in the house in each scenario. When the IFTTT rule set by the user conflicts with the linkage rule of the smart devices obtained by the hub device through counting, the hub device may further prompt the user. In this way, the user modifies the specified IFTTT rule, or the hub device can automatically modify the IFTTT rule set by the user.

## Embodiment 2: Track map and heat map of an activity of a user in a house

As an area of the house is increasingly larger, functional division of a room or a region is increasingly obvious. A daily living habit of the user may be monitored and analyzed by counting activities of a single user or a plurality of users in rooms or regions with different functions, to adjust and optimize the living habit of the user. Therefore, embodiments of this application further provide a method for counting an activity of a user in a house, to automatically track an activity track of the user in the house, automatically count duration of the user in each room or region in the house, further automatically analyze a living habit of the user in the house, and intelligently provide a corresponding suggestion, so as to help the user adjust and optimize the living habit.

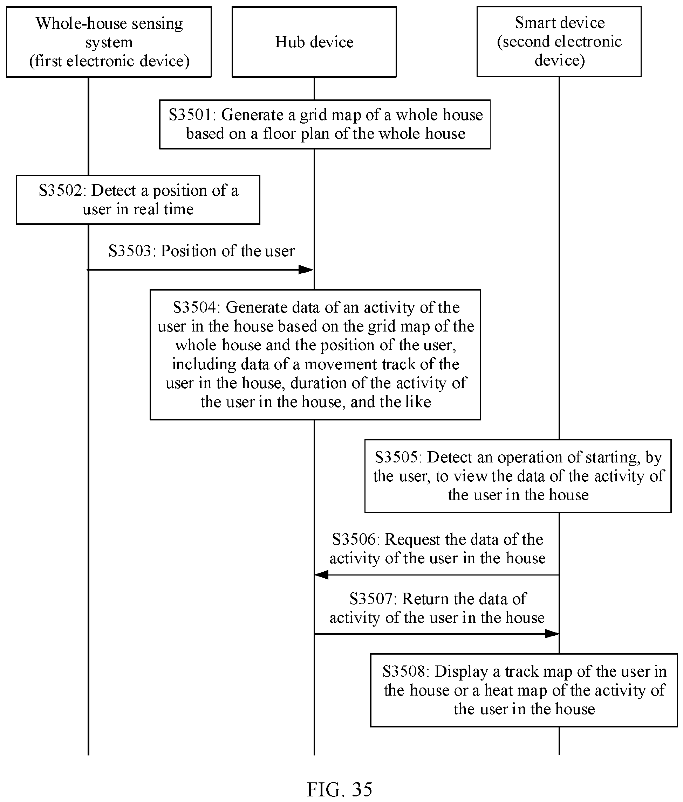

FIG. 35 is a schematic flowchart of a method for counting an activity of a user in a house according to an embodiment of this application. The method includes the following steps.

S3501: The hub device generates a grid map of the whole house based on a floor plan of the whole house.

The hub device is configured to centrally manage all smart devices in a home network. The hub device may also be configured to: receive detection data sent by each first electronic device in a whole-house sensing system, and process the detection data. In some examples, a device that is powered on for a long time and has a specific storage capability and computing capability may be selected as the hub device, for example, a router, a mobile phone, a smart speaker, or a set-top box.

The hub device herein may be, for example, the hub device 200 in (a) in FIG. 1, and is configured to centrally manage all the smart devices in the home network. In addition, the hub device is further configured to: receive data sent by each first electronic device 100 in the whole-house sensing system, and process the data. In some examples, the device that is powered on for a long time and has the specific storage capability and computing capability may be selected as the hub device in the home network, for example, the router, the mobile phone, the smart speaker, or the set-top box.

In some embodiments, the user inputs the floor plan of the whole house to the central device. The floor plan is a plane spatial layout of the house, is a drawing for describing a usage function, a relative position, a size, and the like of each piece of independent space of the whole house. The hub device grids the floor plan of the whole house to generate the grid map of the whole house, that is, divides the floor plan of the whole house into a specific quantity of grids. Each grid corresponds to one spatial range in the house. During specific implementation, a quantity of grids and a size of the grids may be designed based on an actual requirement. For example, all rooms in the whole house are divided into grids in a same size. Alternatively, different rooms in the whole house are divided into grids in different sizes, and a same room is divided into grids in a same size. Alternatively, in a same room, different regions are divided into grids in different sizes, and a same region is divided into grids in a same size. Alternatively, all rooms in the whole house are divided into one grid, or one room in the whole house is divided into one grid, or one room in the whole house is divided into a plurality of grids. In addition, a shape of the grid is not specifically limited in this application neither. The shape of the grid may be any shape, for example, a square, a rectangle, a hexagon, or a triangle. In conclusion, a method for obtaining, through division, the grid in whole house is not specifically limited in embodiments of this application.

In some other embodiments, as described above, when the user establishes the whole-house sensing system, the user needs to input the floor plan of the whole house to the hub device, to establish a unified coordinate system of the whole house. In this case, the hub device may directly use the floor plan of the whose house currently input by the user, to generate the grid map of the whole house.

S3502: The whole-house sensing system detects a position of the user in real time.

As described above, the whole-house sensing system includes the first electronic device 100 in (a) in FIG. 1, configured to locate the user and/or obtain a position of each smart device (for example, the second electronic device 300) in the whole house, and the like. As described above, some first electronic devices 100 each are equipped with a millimeter-wave radar, and may further detect, by using the millimeter-wave radar, a position at which the user is located in the whole house (for example, a room in which the user is located), an identity category (for example, an adult or a child) of the user, an attitude (for example, standing, sitting, or lying-down) of the user, a status (for example, a sleeping state, a movement state, or a stationary state that is of the user and that may be determined based on a detected breath frequency and heartbeat frequency) of the user, a height feature of the user, and the like. Some first electronic devices 100 each are equipped with a UWB base station, may be configured to detect in real time a second electronic device 300 with a UWB tag function carried by the user, and is configured to detect the position of the second electronic device 300.

S3503: The whole-house sensing system sends, to the hub device, the position of the user detected in real time.

In some embodiments, the whole-house sensing system may send the detected position (which is, for example, coordinates in a coordinate system established by each first electronic device) of the user to the hub device. The hub device converts the received position of the user detected by each first electronic device into a position (namely, coordinates) in the unified coordinate system of the whole house.

In some other embodiments, the whole-house sensing system may convert the detected position of the user into a position in the unified coordinate system of the whole house, and send the converted position to the hub device.

S3504: The hub device generates, based on the grid map of the whole house and the position of the user, data of the activity of the user in the house. The data of the activity of the user in the house includes but is not limited to a movement track of the user in the house, duration of the activity of the user in the house, and the like.

In some embodiments, as described above, each grid in the grid map of the whole house corresponds to the spatial range in the house. In this case, correspondingly, the hub device may determine, based on the received user position, the spatial range corresponding to each user position, and then determine a grid that is in the grid map of the whole house and that corresponds to each user position.

The whole-house sensing system detects the position of the user in real time. Therefore, the hub device obtains the real-time position of the user, that is, may determine the movement track of the user in the house in the grid map of the whole house. During specific implementation, the hub device may count the movement track of the user in the whole house in a unit of the whole house. Alternatively, the hub device may count a movement track of the user in each room in a unit of a room. Alternatively, the hub device may count a movement track of the user in each region in a unit of a region. One region herein may be some space in one room, or may be some space in different rooms. A meaning of the region is not specifically limited in embodiments of this application.

In addition, the hub device may further count, based on the received user position, duration within which the user is located in the spatial range corresponding to each grid, to represent the duration of the activity of the user in the house. During specific implementation, the hub device may count the duration of the activity of the user in the whole house in a unit of the whole house. Alternatively, the hub device may count duration of an activity of the user in each room in a unit of the room. Alternatively, the hub device may count duration of an activity of the user in each region in a unit of the region. One region herein may be some space in one room, or may be some space in different rooms. A meaning of the region is not specifically limited in embodiments of this application.

In some other embodiments, the whole-house sensing system may further detect the identity of the user (for example, detect the height feature of the user, and may distinguish the identity of the user based on the height feature of the user). In this case, the hub device may further count movement tracks of different users in the house, duration of activities of the users in the house, and the like.

In still some embodiments, the hub device may further analyze a behavior habit of the user based on the movement track of the user in the house and the duration of the activity of the user in the house that are obtained through counting. Subsequently, the hub device may provide a corresponding suggestion with reference to the behavior habit of the user. For example, when it is obtained, through analysis, that the duration of the user in the house is long, it may be suggested that the user increases outdoor-activity duration. Alternatively, when the user is an elderly person living alone, when it is obtained, through analysis, that duration of the elderly person in a bedroom is long, a caregiver of the elderly person may be prompted to pay attention to body health of the elderly person. Alternatively, when it is obtained, through analysis, that duration of the user in an entertainment region is long, it may be suggested that the user appropriately increases learning duration. Alternatively, when it is obtained, through analysis, that duration of the user in a sofa region is long, the user is prompted to rise and exercise. Alternatively, when the user is a child, and it is obtained, through analysis, that a track of the child in the house approaches a dangerous region, for example, a kitchen, the user may be prompted to stay away from the dangerous region or the like.

S3505: The smart device receives an operation of starting, by the user, to view the data of the activity of the user in the house.

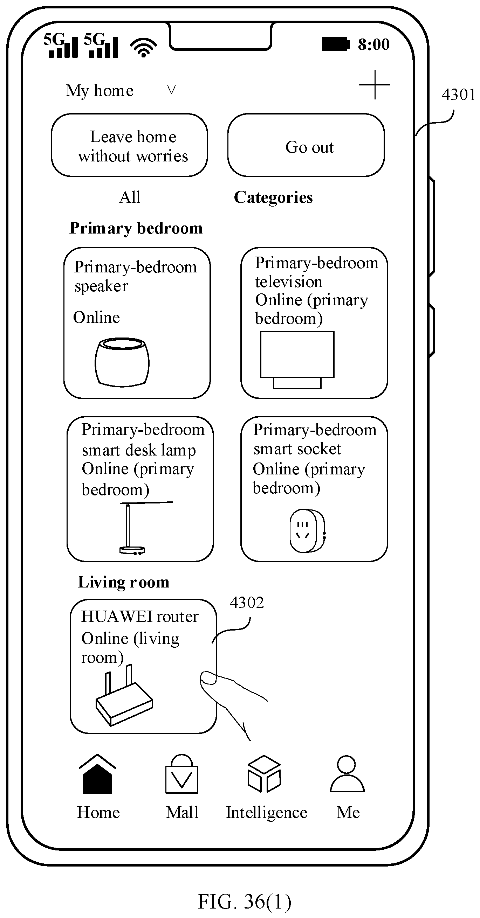

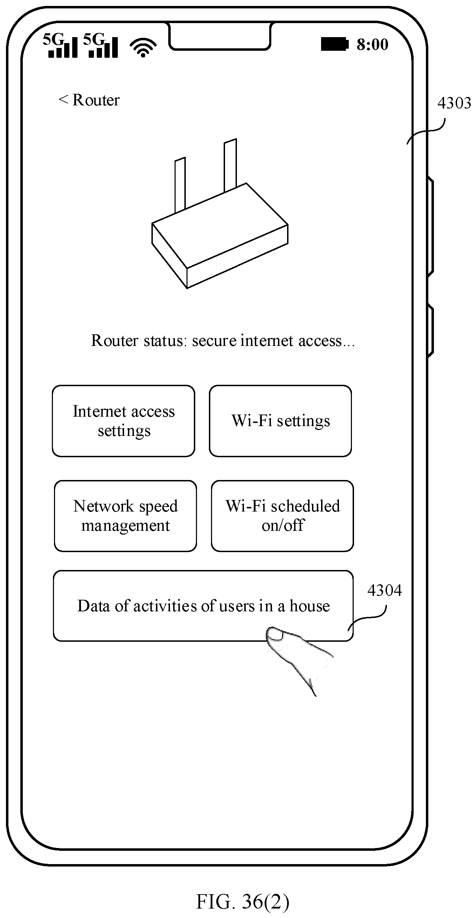

For example, the user may view the data of the activity of the user in the house by using a smart device communicatively connected to the hub device. **In** an example, the user may view the data of the activity of the user in the house by using a smart home application on the smart device (for example, a mobile phone). For example, in response to detecting an operation of starting the smart home application by the user, the mobile phone displays a home page 4301 of the smart home application shown in FIG. 36(1). The home page 4301 includes an identifier 4302 of the hub device. **In** response to receiving an operation performed by the user on the identifier 4302 of the hub device, the mobile phone displays a setting interface (or referred to as a management interface or a control interface) 4303 of the hub device shown in FIG. 36(2). Certainly, the user may alternatively enter, on another page (for example, a smart device list page) of the smart home application, a setting interface of the hub device. The setting interface 4303 of the hub device includes a control 4304 of the data of the activity of the user in the house. **In** response to operating the control 4304 of the data of the activity in the house by the user, the mobile phone requests the data of the activity of the user in the house from the hub device, that is, performs step S4306.

**In** another example, the user may alternatively log in to a setting interface of the hub device in a manner of a website by using a web browser on the smart device, and perform an operation on the setting interface of the hub device, to trigger the operation of viewing the data of the activity of the user in the house. Details are not described one by one herein.

S3506: The smart device sends, to the hub device, a request for the data of the activity of the user in the house.

S3507: The hub device returns, to the smart device, the data of the activity of the user in the house.

The data of the activity of the user in the house returned by the hub device includes but is not limited to data of the movement track of the user in the whole house, the duration of the user in the house in the whole house, and the like.

S3508: The smart device displays a track map of the user in the house or a heat map of the activity of the user in the house.

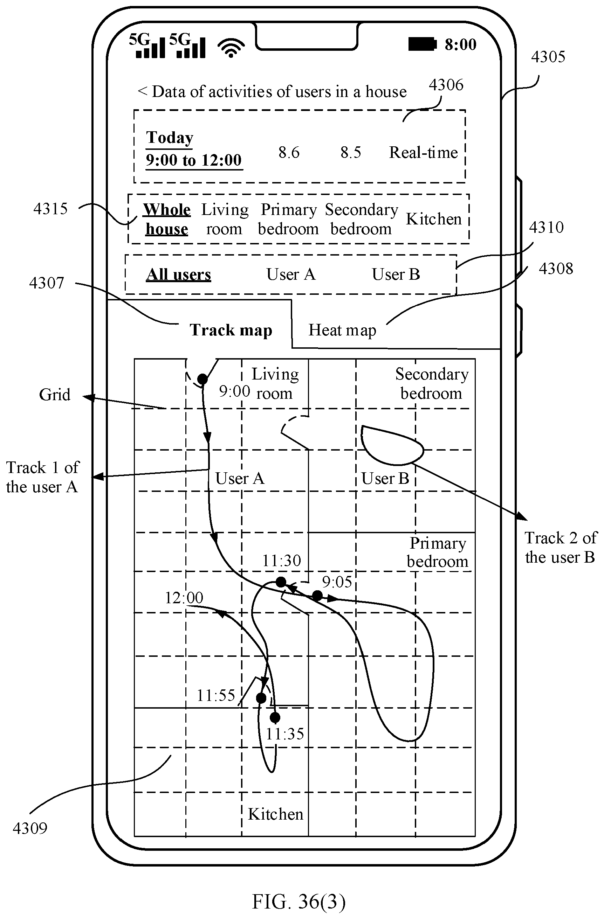

For example, after receiving the data of the activity of the user in the house returned by the hub device, the mobile phone displays an interface 4305 shown in FIG. 36(3). The interface 4305 may include a time control 4306, a room/region control 4315, a user control 4310, a track map tab control 4307, a heat map tab control 4308, and a track map 4309. The time control 4306 is used by the user to select data of an activity of the user within a time period for displaying. For example, data of an activity of the user within a day, within a time period in a day, within recent M days, or within a recent month may be queried. It should be further noted that the mobile phone may further display real-time data of the activity of the user in the house. The room/region control 4315 is used by the user to select data of an activity of the user in a room or a region in the whole house for displaying. For example, the data of the activity of the user in all the rooms (namely, the whole house), data of an activity of the user in a room, or data of an activity of the user in a region may be displayed. The user control 4310 is used by the user to select data of an activity of a user, for example, a user, or all users, in the house in the whole house for display. The track map selection control 4307 may be used to display a movement track of the user in the house under a specific condition (for example, a specific time period, a specific room, or a specific user). The heat map selection control 4308 may be used to display a heat map of an activity of the user in the house under a specific condition (for example, a specific time period, a specific room, or a specific user). The heat map is used to display the duration of the activity of the user in each region in the house.

Track maps of all the users (for example, a user A and a user B) in the whole house from 9:00 to 12:00 on a current day are displayed on the interface 4305 shown in FIG. 36(3). In an example, a movement direction (for example, a direction shown by an arrow) of the track of the user may be further displayed in the track map. Alternatively, moments at some positions may be further displayed in the track map. For example, when a room in which the user is located changes, time points of entering and exiting a room may be displayed.

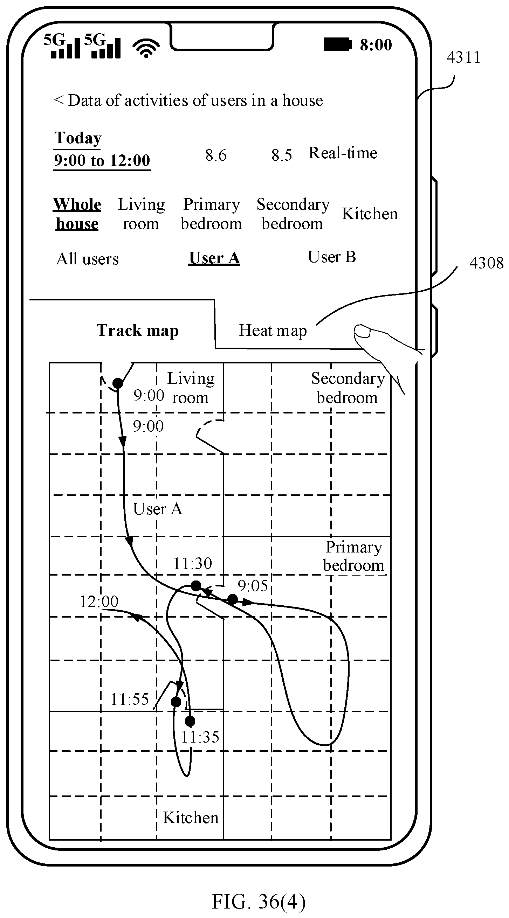

In response to choosing, by the user on the interface 4305, to view a track map of a single user, the mobile phone displays an interface 4311, that includes only the track map of the user A, shown in FIG. 36(4).

In addition, the mobile phone may further display the behavior habit of the user analyzed by the hub device based on the track of the user. This helps the user with self-adjustment based on the behavior habit of the user obtained through counting. In some other examples, when determining, based on the track of the user, that the user has entered or is about to enter a specific region, the hub device may send a reminder notification. For example, when obtaining, through analysis, that the child is about to enter the dangerous region, for example, the kitchen, the hub device may send a reminder notification to a smart device (for example, a smart speaker) in a room in which the child is located, and the smart device prompts the child not to enter the dangerous region.

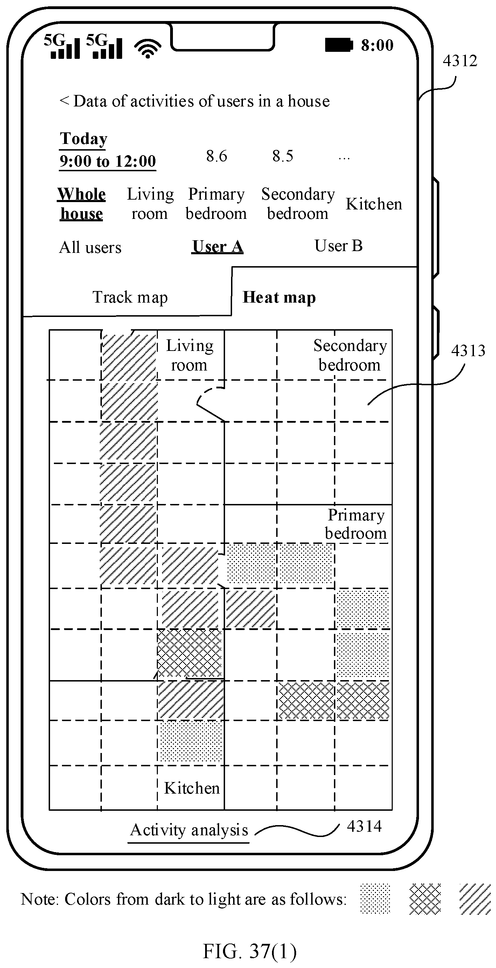

For another example, in response to operating, by the user, the heat map tab control 4308 on the interface 4311 shown in FIG. 36(4), the mobile phone displays an interface 4312 shown in FIG. 37(1). A heat map 4313 of an activity of the user A in the house is displayed on the interface 4312. In the heat map, the mobile phone uses different marks and different grids, to present duration of an activity of the user in a spatial range corresponding to each grid. For example, the mobile phone may mark the grids by using different colors. A shade of the color represents duration of an activity of the user within a spatial range corresponding to a corresponding grid. A darker color indicates longer duration of the activity of the user within the spatial range corresponding to the grid.

Similar to that during displaying the track map, the user may alternatively choose to display a heat map within another time period, choose to display a heat map in all the rooms (namely, the whole house) or a heat map in a room/region, choose to display heat maps of all the users, or a heat map of a user, or the like. For specific content, refer to the foregoing descriptions of related content. Details are not described herein again.

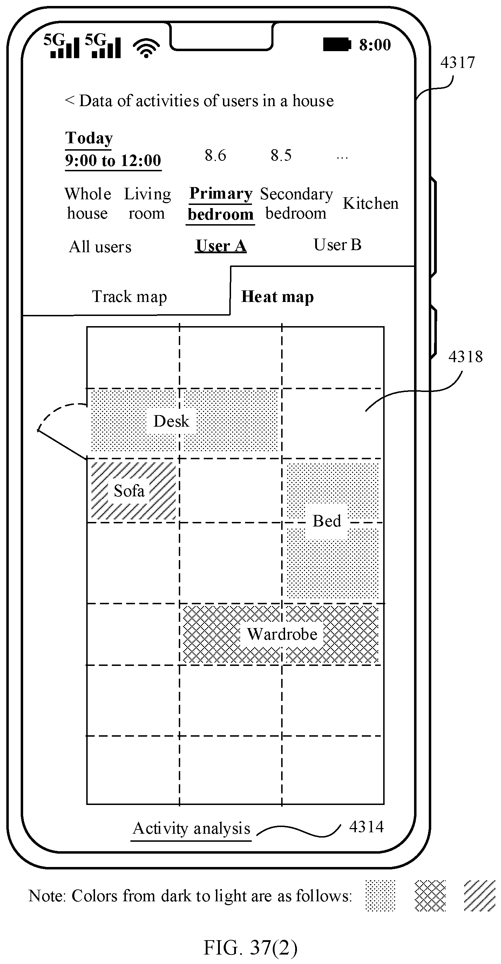

For example, in response to operating, by the user on the interface 4312 shown in FIG. 37(1), a control corresponding to a "Primary bedroom", the mobile phone displays an interface 4317 shown in FIG. 37(2). The interface 4317 includes a heat map 4318 of the user A in the primary bedroom. A specific function of each region in the primary bedroom is further marked in detail in the heat map 4318, so that a behavior specification of the user can be analyzed in more detail and accurately.

Optionally, the interface 4317 may further include an activity analysis control 4314, used to display analysis performed by the hub device on the behavior habit of the user based on the heat map of the user, and provide the corresponding suggestion with reference to the behavior habit of the user. For example, when it is obtained, through analysis, that the duration of the user in the house is long, it may be suggested that the user increases the outdoor-activity duration. Alternatively, when the user is an elderly person living alone, when it is obtained, through analysis, that duration of the elderly person in a bedroom is long, a caregiver of the elderly person may be prompted to pay attention to body health of the elderly person. Alternatively, when it is obtained, through analysis, that the duration of the user in the entertainment region is long, it may be suggested that the user appropriately increases the learning duration. Alternatively, when it is obtained, through analysis, that the duration of the user in the sofa region is long, the user is prompted to rise and exercise.

It should be noted that the methods in embodiments, the implementations, and the examples of embodiments of this application may be separately combined, and combined embodiments, implementations, or examples also fall within the protection scope of embodiments of this application. Steps or technical features in embodiments of this application may be randomly combined, and combined implementations also fall within the protection scope of embodiments of this application.

An embodiment of this application further provides an apparatus. The apparatus is included in an electronic device. The apparatus has functions of implementing behavior of the electronic device in any method in the foregoing embodiments. The function may be implemented by hardware, or may be implemented by hardware executing corresponding software. The hardware or the software includes at least one module or unit corresponding to the foregoing function, for example, a detection module or unit, a display module or unit, a determining module or unit, and a computing module or unit.

An embodiment of this application further provides a computer storage medium, including computer instructions. When the computer instructions are run on an electronic device, the electronic device is enabled to perform any method in the foregoing embodiments.

An embodiment of this application further provides a computer program product. When the computer program product runs on a computer, the computer is enabled to perform any method in the foregoing embodiments.

An embodiment of this application further provides a graphical user interface on an electronic device. The electronic device includes a display, a camera, a memory, and one or more processors. The one or more processors are configured to execute one or more computer programs stored in the memory. The graphical user interface includes a graphical user interface displayed when the electronic device performs any method in the foregoing embodiments.

It may be understood that, to implement the foregoing functions, the foregoing device includes a corresponding hardware structure and/or software module for implementing each function. A person skilled in the art should easily be aware that, in combination with units and algorithm steps of the examples described in embodiments disclosed in this specification, embodiments of this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of the present invention.

In embodiments of this application, the foregoing device may be divided into functional modules based on the foregoing method examples, for example, each functional module may be obtained through division based on each corresponding function, or two or more functions may be integrated into one processing module. The integrated module may be implemented in a form of hardware, or may be implemented in a form of a software functional module. It should be noted that, in embodiments of the present invention, division into the modules is an example, is merely logical function division, and may be other division during actual implementation.

A person skilled in the art may clearly learn from the foregoing description of the implementations that, for convenience and brevity of description, division into the foregoing functional modules is only used as an example for description. During actual application, the foregoing functions may be allocated to different function modules for implementation based on a requirement, that is, an inner structure of an apparatus is divided into different functional modules, to complete all or some of the functions described above. For a detailed working process of the foregoing system, apparatus, and unit, refer to a corresponding process in the foregoing method embodiments. Details are not described herein again.

Functional units in embodiments of this application may be integrated into one processing unit, or each of the units may exist alone physically, or two or more units are integrated into one unit. The integrated unit may be implemented in a form of hardware, or may be implemented in a form of a software functional unit.

When being implemented in the form of the software functional unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program code, for example, a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A human sensing-based system for linkage between smart devices, comprising a hub device (200), a first electronic device (100), and R second electronic devices (300), wherein any two of the hub device (200), the first electronic device (100), and any one of the R second electronic devices (300) is configured to communicate in a wired communication or wireless communication manner; the first electronic device comprises an ultra-wide band module and a millimeter-wave radar module, and is configured to measure a human body position and positions of the R second electronic devices (300); and the R second electronic devices (300) comprise a first device, and R is a positive integer greater than or equal to 1;

   the first electronic device (100) is configured to send first scenario data to the hub device;
   the hub device (200) is configured to determine, based on the first scenario data, that a current scenario is a first scenario, and determines that the first scenario corresponds to a first linkage rule, wherein the first linkage rule comprises that the first device performs a first task;
   the hub device (200) is configured to send, to the first device, a first message for performing the first task;
   the first device is configured to perform the first task in response to receiving the first message;
   the first electronic device (100) is configured to send second scenario data to the hub device (200);
   the hub device (200) is configured to determine, based on the second scenario data, that the current scenario is a second scenario and the first scenario, and determines that the second scenario corresponds to a second linkage rule, wherein the second linkage rule comprises that the first device performs a second task; and the second task is different from the first task; and
   the hub device (200) is configured to determine that a priority of the first scenario is higher than a priority of the second scenario, and the hub device (200) is configured to determine that the first device performs the first task, wherein the first scenario data comprises data detected by the first electronic device (100) at a first moment or within a first time period, and status information of any one or more of the R second electronic devices (300) at the first moment or within the first time period, wherein
   the data detected by the first electronic device (100) at the first moment or within the first time period comprises one or more of a human body position, an identity category of a human body, an attitude of the human body, a height feature of the human body, a physiological feature of the human body, and a position or positions of the any one or more of the R second electronic devices (300).

2. The system according to claim 1, wherein the first scenario data indicates that a scenario in a house is the first scenario at a first moment or within a first time period; or
wherein the second scenario data indicates that the scenario in the house is the second scenario and the first scenario at a second moment or within a second time period.

3. The system according to claim 1 or 2, wherein the R second electronic devices (300) further comprise a second device;

the second linkage rule further comprises that the second device performs a third task, and the first linkage rule does not comprise the second device;
after the hub device (200) determines that the first device performs the first task, the hub device is further configured to send, to the second device, a second message for performing the third task; and
the second device is configured to perform the third task in response to receiving the second message.

4. The system according to any one of claims 1 to 3, wherein
the hub device (200) is separately configured to count status changes of the R second electronic devices in each scenario detected by the first electronic device and/or control commands for the R second electronic devices (300) sent by the hub device (200), and is configured to learn a linkage rule corresponding to each scenario.

5. The system according to claim 4, wherein the hub device (200)is configured to update the linkage rule corresponding to each scenario in real time or cyclically or under a specific condition.

6. A human sensing-based method for linkage between smart devices, applied to a hub device (200), wherein the hub device (200) separately communicates with a first electronic device (100)and any one of R second electronic devices (300)in a wired communication or wireless communication manner; the first electronic device comprises an ultra-wide band module and a millimeter-wave radar module, and is configured to measure a human body position and positions of the R second electronic devices (300); and the R second electronic devices (300)comprise a first device, and R is a positive integer greater than or equal to 1;

the hub device (200) receives first scenario data sent by the first electronic device (100);
the hub device (200) determines, based on the first scenario data, that a current scenario is a first scenario, and determines that the first scenario corresponds to a first linkage rule, wherein the first linkage rule comprises that the first device performs a first task;
the hub device (200) sends, to the first device, a first message for performing the first task;
the hub device (200) receives second scenario data sent by the first electronic device (100);
the hub device (200) determines, based on the second scenario data, that the current scenario is a second scenario and the first scenario, and determines that the second scenario corresponds to a second linkage rule, wherein the second linkage rule comprises that the first device performs a second task; and the second task is different from the first task; and
the hub device (200) determines that a priority of the first scenario is higher than a priority of the second scenario, and the hub device (200) determines that the first device performs the first task, wherein the first scenario data comprises data detected by the first electronic device (100) at a first moment or within a first time period, and status information of any one or more of the R second electronic devices (300) at the first moment or within the first time period, wherein
the data detected by the first electronic device (100) at the first moment or within the first time period comprises one or more of a human body position, an identity category of a human body, an attitude of the human body, a height feature of the human body, a physiological feature of the human body, and a position or positions of the any one or more of the R second electronic devices (300).

7. The method according to claim 6, wherein the first scenario data indicates that a scenario in a house is the first scenario at a first moment or within a first time period; or
wherein the second scenario data indicates that the scenario in the house is the second scenario and the first scenario at a second moment or within a second time period.

8. The method according to claim 6 or 7, wherein the second scenario data comprises data detected by the first electronic device (100) at a second moment or within a second time period, and/or status information of any one or more of the R second electronic devices (300) at the second moment or within the second time period, wherein
the data detected by the first electronic device (100) at the second moment or within the second time period comprises one or more of a human body position, an identity category of a human body, an attitude of the human body, a height feature of the human body, a physiological feature of the human body, and a position or positions of the any one or more of the R second electronic devices (300).

9. The method according to any one of claims 6 to 8, wherein the R second electronic devices (300) further comprise a second device;

the second linkage rule further comprises that the second device performs a third task, and the first linkage rule does not comprise the second device;
after the hub device (200) determines that the first device performs the first task, the hub device further sends, to the second device, a second message for performing the third task; and
the second device performs the third task in response to receiving the second message.

10. The method according to any one of claims 6 to 9, wherein
the hub device (200) separately counts status changes of the R second electronic devices in each scenario detected by the first electronic device and/or control commands for the R second electronic devices sent by the hub device, and learns a linkage rule corresponding to each scenario.

11. The method according to claim 10, wherein the hub device (200) updates the linkage rule corresponding to each scenario in real time or cyclically or under a specific condition.

12. A computer-readable storage medium, comprising computer instructions, wherein when the computer instructions are run on an electronic device, the electronic device is enabled to perform the method according to any one of claims 6 to 11.

**Patentansprüche**

1. Auf menschlicher Wahrnehmung basierendes System zur Verknüpfung zwischen intelligenten Vorrichtungen, das eine Hub-Vorrichtung (200), eine erste elektronische Vorrichtung (100) und R zweite elektronische Vorrichtungen (300) umfasst, wobei zwei beliebige von der Hub-Vorrichtung (200), der ersten elektronischen Vorrichtung (100) und einer beliebigen der R zweiten elektronischen Vorrichtungen (300) konfiguriert sind, um auf eine drahtgebundene oder drahtlose Kommunikationsweise zu kommunizieren; wobei die erste elektronische Vorrichtung ein Ultrabreitbandmodul und ein Millimeterwellen-Radarmodul umfasst und konfiguriert ist, um eine Position eines menschlichen Körpers und Positionen der R zweiten elektronischen Vorrichtungen (300) zu messen; und die R zweiten elektronischen Vorrichtungen (300) eine erste Vorrichtung umfassen und R eine positive ganze Zahl größer als oder gleich 1 ist;

wobei die erste elektronische Vorrichtung (100) konfiguriert ist, um erste Szenariodaten an die Hub-Vorrichtung zu senden;
wobei die Hub-Vorrichtung (200) konfiguriert ist, um basierend auf den ersten Szenariodaten festzustellen, dass ein aktuelles Szenario ein erstes Szenario ist, und feststellt, dass das erste Szenario einer ersten Verknüpfungsregel entspricht, wobei die erste Verknüpfungsregel umfasst, dass die erste Vorrichtung eine erste Aufgabe ausführt; wobei die Hub-Vorrichtung (200) konfiguriert ist, um an die erste Vorrichtung eine erste Nachricht zum Ausführen der ersten Aufgabe zu senden;
wobei die erste Vorrichtung konfiguriert ist, um als Reaktion auf den Empfang der ersten Nachricht die erste Aufgabe auszuführen;
wobei die erste elektronische Vorrichtung (100) konfiguriert ist, um zweite Szenariodaten an die Hub-Vorrichtung (200) zu senden;
wobei die Hub-Vorrichtung (200) konfiguriert ist, um basierend auf den zweiten Szenariodaten festzustellen, dass es sich bei dem aktuellen Szenario um ein zweites Szenario und das erste Szenario handelt, und feststellt, dass das zweite Szenario einer zweiten Verknüpfungsregel entspricht, wobei die zweite Verknüpfungsregel umfasst, dass die erste Vorrichtung eine zweite Aufgabe ausführt; und die zweite Aufgabe sich von der ersten Aufgabe unterscheidet; und
wobei die Hub-Vorrichtung (200) konfiguriert ist, um festzustellen, dass eine Priorität des ersten Szenarios höher als eine Priorität des zweiten Szenarios ist, und die Hub-Vorrichtung (200) konfiguriert ist, um festzustellen, dass die erste Vorrichtung die erste Aufgabe ausführt, wobei die ersten Szenariodaten durch die erste elektronische Vorrichtung (100) zu einem ersten Zeitpunkt oder innerhalb eines ersten Zeitraums erfasste Daten und Statusinformationen einer beliebigen oder mehrerer der R zweiten elektronischen Vorrichtungen (300) zu dem ersten Zeitpunkt oder innerhalb des ersten Zeitraums umfassen, wobei
die durch die erste elektronische Vorrichtung (100) zu dem ersten Zeitpunkt oder innerhalb des ersten Zeitraums erfassten Daten eines oder mehrere von einer Position eines menschlichen Körpers, einer Identitätskategorie eines menschlichen Körpers, einer Haltung des menschlichen Körpers, eines Größenmerkmals des menschlichen Körpers, eines physiologischen Merkmals des menschlichen Körpers und einer Position oder Positionen der einen beliebigen oder der mehreren der R zweiten elektronischen Vorrichtungen (300) umfassen.

2. System nach Anspruch 1, wobei die ersten Szenariodaten anzeigen, dass ein Szenario in einem Haus das erste Szenario zu einem Zeitpunkt oder innerhalb eines ersten Zeitraums ist; oder
wobei die zweiten Szenariodaten anzeigen, dass das Szenario in dem Haus das zweite Szenario und das erste Szenario zu einem zweiten Zeitpunkt oder innerhalb eines zweiten Zeitraums ist.

3. System nach Anspruch 1 oder 2, wobei die R zweiten elektronischen Vorrichtungen (300) ferner eine zweite Vorrichtung umfassen;

wobei die zweite Verknüpfungsregel ferner umfasst, dass die zweite Vorrichtung eine dritte Aufgabe ausführt, und die erste Verknüpfungsregel nicht die zweite Vorrichtung umfasst;
nachdem die Hub-Vorrichtung (200) festgestellt hat, dass die erste Vorrichtung die erste Aufgabe ausführt, die Hub-Vorrichtung ferner konfiguriert ist, um an die zweite Vorrichtung eine zweite Nachricht zum Ausführen der dritten Aufgabe zu senden; und
die zweite Vorrichtung konfiguriert ist, um als Reaktion auf den Empfang der zweiten Nachricht die dritte Aufgabe auszuführen.

4. System nach einem der Ansprüche 1 bis 3, wobei
die Hub-Vorrichtung (200) separat konfiguriert ist, um Statusänderungen der R zweiten elektronischen Vorrichtungen in jedem Szenario, das durch die erste elektronische Vorrichtung erfasst wird, und/oder Steuerbefehle für die R zweiten elektronischen Vorrichtungen (300), die durch die Hub-Vorrichtung (200) gesendet werden, zu zählen, und konfiguriert ist, um eine jedem Szenario entsprechende Verknüpfungsregel zu erlernen.

5. System nach Anspruch 4, wobei die Hub-Vorrichtung (200) konfiguriert ist, um die jedem Szenario entsprechende Verknüpfungsregel in Echtzeit oder zyklisch oder unter einer bestimmten Bedingung zu aktualisieren.

6. Auf menschlicher Wahrnehmung basierendes Verfahren zur Verknüpfung zwischen intelligenten Vorrichtungen, das auf eine Hub-Vorrichtung (200) angewendet wird, wobei die Hub-Vorrichtung (200) separat mit einer ersten elektronischen Vorrichtung (100) und einer beliebigen von R zweiten elektronischen Vorrichtungen (300) auf eine drahtgebundene oder drahtlose Kommunikationsweise kommuniziert; wobei die erste elektronische Vorrichtung ein Ultrabreitbandmodul und ein Millimeterwellen-Radarmodul umfasst und konfiguriert ist, um die Position eines menschlichen Körpers und Positionen der R zweiten elektronischen Vorrichtungen (300) zu messen; und die R zweiten elektronischen Vorrichtungen (300) eine erste Vorrichtung umfassen und R eine positive ganze Zahl größer als oder gleich 1 ist;

wobei die Hub-Vorrichtung (200) erste Szenariodaten empfängt, die durch die erste elektronische Vorrichtung (100) gesendet werden;
wobei die Hub-Vorrichtung (200) basierend auf den ersten Szenariodaten feststellt, dass ein aktuelles Szenario ein erstes Szenario ist, und feststellt, dass das erste Szenario einer ersten Verknüpfungsregel entspricht, wobei die erste Verknüpfungsregel umfasst, dass die erste Vorrichtung eine erste Aufgabe ausführt;
wobei die Hub-Vorrichtung (200) an die erste Vorrichtung eine erste Nachricht zum Ausführen der ersten Aufgabe sendet;
wobei die Hub-Vorrichtung (200) zweite Szenariodaten empfängt, die durch die erste elektronische Vorrichtung (100) gesendet werden;
wobei die Hub-Vorrichtung (200) basierend auf den zweiten Szenariodaten feststellt, dass das aktuelle Szenario ein zweites Szenario und das erste Szenario ist, und feststellt, dass das zweite Szenario einer zweiten Verknüpfungsregel entspricht, wobei die zweite Verknüpfungsregel umfasst, dass die erste Vorrichtung eine zweite Aufgabe ausführt; und die zweite Aufgabe sich von der ersten Aufgabe unterscheidet; und
wobei die Hub-Vorrichtung (200) feststellt, dass eine Priorität des ersten Szenarios höher als eine Priorität des zweiten Szenarios ist, und die Hub-Vorrichtung (200) feststellt, dass die erste Vorrichtung die erste Aufgabe ausführt, wobei die ersten Szenariodaten durch die erste elektronische Vorrichtung (100) zu einem ersten Zeitpunkt oder innerhalb eines ersten Zeitraums erfasste Daten und Statusinformationen einer beliebigen oder mehrerer der R zweiten elektronischen Vorrichtungen (300) zu dem ersten Zeitpunkt oder innerhalb des ersten Zeitraums umfassen, wobei
die durch die erste elektronische Vorrichtung (100) zu dem ersten Zeitpunkt oder innerhalb des ersten Zeitraums erfassten Daten eines oder mehrere von einer Position eines menschlichen Körpers, einer Identitätskategorie eines menschlichen Körpers, einer Haltung des menschlichen Körpers, eines Größenmerkmals des menschlichen Körpers, eines physiologischen Merkmals des menschlichen Körpers und einer Position oder Positionen der einen beliebigen oder der mehreren der R zweiten elektronischen Vorrichtungen (300) umfassen.

7. Verfahren nach Anspruch 6, wobei die ersten Szenariodaten anzeigen, dass ein Szenario in einem Haus das erste Szenario zu einem ersten Zeitpunkt oder innerhalb eines ersten Zeitraums ist; oder
wobei die zweiten Szenariodaten anzeigen, dass das Szenario in dem Haus das zweite Szenario und das erste Szenario zu einem zweiten Zeitpunkt oder innerhalb eines zweiten Zeitraums ist.

8. Verfahren nach Anspruch 6 oder 7, wobei die zweiten Szenariodaten durch die erste elektronische Vorrichtung (100) zu einem zweiten Zeitpunkt oder innerhalb eines zweiten Zeitraums erfasste Daten und/oder Statusinformationen einer beliebigen oder mehrerer der R zweiten elektronischen Vorrichtungen (300) zu dem zweiten Zeitpunkt oder innerhalb des zweiten Zeitraums umfassen, wobei
die durch die erste elektronische Vorrichtung (100) zu dem zweiten Zeitpunkt oder innerhalb des zweiten Zeitraums erfassten Daten eines oder mehrere von einer Position eines menschlichen Körpers, einer Identitätskategorie eines menschlichen Körpers, einer Haltung des menschlichen Körpers, eines Größenmerkmals des menschlichen Körpers, eines physiologischen Merkmals des menschlichen Körpers und einer Position oder Positionen der einen beliebigen oder der mehreren der R zweiten elektronischen Vorrichtungen (300) umfassen.

9. Verfahren nach einem der Ansprüche 6 bis 8, wobei die R zweiten elektronischen Vorrichtungen (300) ferner eine zweite Vorrichtung umfassen;

wobei die zweite Verknüpfungsregel ferner umfasst, dass die zweite Vorrichtung eine dritte Aufgabe ausführt, und die erste Verknüpfungsregel nicht die zweite Vorrichtung umfasst;
wobei, nachdem die Hub-Vorrichtung (200) festgestellt hat, dass die erste Vorrichtung die erste Aufgabe ausführt, die Hub-Vorrichtung ferner an die zweite Vorrichtung eine zweite Nachricht zum Ausführen der dritten Aufgabe sendet; und
wobei die zweite Vorrichtung als Reaktion auf den Empfang der zweiten Nachricht die dritte Aufgabe ausführt.

10. Verfahren nach einem der Ansprüche 6 bis 9, wobei
die Hub-Vorrichtung (200) separat Statusänderungen der R zweiten elektronischen Vorrichtungen in jedem durch die erste elektronische Vorrichtung erfassten Szenario und/oder durch die Hub-Vorrichtung gesendete Steuerbefehle für die R zweiten elektronischen Vorrichtungen zählt und eine jedem Szenario entsprechende Verknüpfungsregel erlernt.

11. Verfahren nach Anspruch 10, wobei die Hub-Vorrichtung (200) die jedem Szenario entsprechende Verknüpfungsregel in Echtzeit oder zyklisch oder unter einer bestimmten Bedingung aktualisiert.

12. Computerlesbares Speicherungsmedium, das Computeranweisungen umfasst, wobei, wenn die Computeranweisungen auf einer elektronischen Vorrichtung durchgeführt werden, die elektronische Vorrichtung aktiviert wird, um das Verfahren nach einem der Ansprüche 6 bis 11 auszuführen.


**Revendications**

1. Système basé sur une détection humaine pour un lien entre des dispositifs intelligents, comprenant un dispositif concentrateur (200), un premier dispositif électronique (100), et R seconds dispositifs électroniques (300), dans lequel deux quelconques du dispositif concentrateur (200), du premier dispositif électronique (100), et de l'un quelconque des R seconds dispositifs électroniques (300) sont configurés pour communiquer par un moyen de communication câblée ou de communication sans fil ; le premier dispositif électronique comprend un module à bande ultralarge et un module radar à ondes millimétriques, et est configuré pour mesurer une position de corps humain et des positions des R seconds dispositifs électroniques (300) ; et les R seconds dispositifs électroniques (300) comprennent un premier dispositif, et R est un nombre entier positif supérieur ou égal à 1 ;

le premier dispositif électronique (100) est configuré pour envoyer des premières données de scénario au dispositif concentrateur ;

le dispositif concentrateur (200) est configuré pour déterminer, sur la base des premières données de scénario, qu'un scénario actuel est un premier scénario, et détermine que le premier scénario correspond à une première règle de lien, dans lequel la première règle de lien comprend la réalisation d'une première tâche par le premier dispositif ;

le dispositif concentrateur (200) est configuré pour envoyer, au premier dispositif, un premier message pour la réalisation de la première tâche ;

le premier dispositif est configuré pour réaliser la première tâche en réponse à la réception du premier message ;

le premier dispositif électronique (100) est configuré pour envoyer des secondes données de scénario au dispositif concentrateur (200) ;

le dispositif concentrateur (200) est configuré pour déterminer, sur la base des secondes données de scénario, que le scénario actuel est un second scénario et le premier scénario, et détermine que le second scénario correspond à une seconde règle de lien, dans lequel la seconde règle de lien comprend la réalisation d'une deuxième tâche par le premier dispositif ; et la deuxième tâche est différente de la première tâche ; et

le dispositif concentrateur (200) est configuré pour déterminer qu'une priorité du premier scénario est supérieure à une priorité du second scénario, et le dispositif concentrateur (200) est configuré pour déterminer que le premier dispositif réalise la première tâche, dans lequel les premières données de scénario comprennent des données détectées par le premier dispositif électronique (100) à un premier moment ou dans une première période de temps, et des informations d'état de l'un ou des quelconques des R seconds dispositifs électroniques (300) au premier moment ou dans la première période de temps, dans lequel

les données détectées par le premier dispositif électronique (100) au premier moment ou dans la première période de temps comprennent un ou plusieurs parmi une position de corps humain, une catégorie d'identité d'un corps humain, une attitude du corps humain, une caractéristique de taille du corps humain, une caractéristique physiologique du corps humain, et une position ou des positions du ou des quelconques des R seconds dispositifs électroniques (300).

2. Système selon la revendication 1, dans lequel les premières données de scénario indiquent qu'un scénario dans une maison est le premier scénario à un premier moment ou dans une première période de temps ; ou

dans lequel les secondes données de scénario indiquent que le scénario dans la maison est le second scénario et le premier scénario à un second moment ou dans une seconde période de temps.

3. Système selon la revendication 1 ou 2, dans lequel les R seconds dispositifs électroniques (300) comprennent en outre un second dispositif ;

la seconde règle de lien comprend en outre la réalisation d'une troisième tâche par le second dispositif, et la première règle de lien ne comprend pas le second dispositif ; après la détermination, par le dispositif concentrateur (200), du fait que le premier dispositif réalise la première tâche, le dispositif concentrateur est en outre configuré pour envoyer au second dispositif un second message pour la réalisation de la troisième tâche ; et le second dispositif est configuré pour réaliser la troisième tâche en réponse à la réception du second message.

4. Système selon l'une quelconque des revendications 1 à 3, dans lequel le dispositif concentrateur (200) est configuré séparément pour compter des changements d'état des R seconds dispositifs électroniques dans chaque scénario détecté par le premier dispositif électronique et/ou des ordres de commande pour les R seconds dispositifs électroniques (300) envoyés par le dispositif concentrateur (200), et est configuré pour apprendre une règle de lien correspondant à chaque scénario.

5. Système selon la revendication 4, dans lequel le dispositif concentrateur (200) est configuré pour mettre à jour la règle de lien correspondant à chaque scénario en temps réel ou de manière cyclique ou sous une condition spécifique.

6. Procédé basé sur une détection humaine pour un lien entre des dispositifs intelligents, appliqué à un dispositif concentrateur (200), dans lequel le dispositif concentrateur (200) communique séparément avec un premier dispositif électronique (100) et l'un quelconque des R seconds dispositifs électroniques (300) par un moyen de communication câblée ou de communication sans fil ; le premier dispositif électronique comprend un module à bande ultralarge et un module radar à ondes millimétriques, et est configuré pour mesurer une position de corps humain et des positions des R seconds dispositifs électroniques (300) ; et les R seconds dispositifs électroniques (300) comprennent un premier dispositif, et R est un nombre entier positif supérieur ou égal à 1 ;

le dispositif concentrateur (200) reçoit des premières données de scénario envoyées par le premier dispositif électronique (100) ;

le dispositif concentrateur (200) détermine, sur la base des premières données de scénario, qu'un scénario actuel est un premier scénario, et détermine que le premier scénario correspond à une première règle de lien, dans lequel la première règle de lien comprend la réalisation d'une première tâche par le premier dispositif ;

le dispositif concentrateur (200) envoie, au premier dispositif, un premier message pour la réalisation de la première tâche ;

le dispositif concentrateur (200) reçoit des secondes données de scénario envoyées par le premier dispositif électronique (100) ;

le dispositif concentrateur (200) détermine, sur la base des secondes données de scénario, que le scénario actuel est un second scénario et le premier scénario, et détermine que le second scénario correspond à une seconde règle de lien, dans lequel la seconde règle de lien comprend la réalisation d'une deuxième tâche par le premier dispositif ; et la deuxième tâche est différente de la première tâche ; et

le dispositif concentrateur (200) détermine qu'une priorité du premier scénario est supérieure à une priorité du second scénario, et le dispositif concentrateur (200) détermine que le premier dispositif réalise la première tâche, dans lequel les premières données de scénario comprennent des données détectées par le premier dispositif électronique (100) à un premier moment ou dans une première période de temps, et des informations d'état de l'un ou des quelconques des R seconds dispositifs électroniques (300) au premier moment ou dans la première période de temps, dans lequel

les données détectées par le premier dispositif électronique (100) au premier moment ou dans la première période de temps comprennent un ou plusieurs parmi une position de corps humain, une catégorie d'identité d'un corps humain, une attitude du corps humain, une caractéristique de taille du corps humain, une caractéristique physiologique du corps humain, et une position ou des positions du ou des quelconques des R seconds dispositifs électroniques (300).

7. Procédé selon la revendication 6, dans lequel les premières données de scénario indiquent qu'un scénario dans une maison est le premier scénario à un premier moment ou dans une première période de temps ; ou
dans lequel les secondes données de scénario indiquent que le scénario dans la maison est le second scénario et le premier scénario à un second moment ou dans une seconde période de temps.

8. Procédé selon la revendication 6 ou 7, dans lequel les secondes données de scénario comprennent des données détectées par le premier dispositif électronique (100) à un second moment ou dans une seconde période de temps, et/ou des informations d'état de l'un ou des quelconques des R seconds dispositifs électroniques (300) au second moment ou dans la seconde période de temps, dans lequel
les données détectées par le premier dispositif électronique (100) au second moment ou dans la seconde période de temps comprennent un ou plusieurs parmi une position de corps humain, une catégorie d'identité d'un corps humain, une attitude du corps humain, une caractéristique de taille du corps humain, une caractéristique physiologique du corps humain, et une position ou des positions du ou des quelconques des R seconds dispositifs électroniques (300).

9. Procédé selon l'une quelconque des revendications 6 à 8, dans lequel les R seconds dispositifs électroniques (300) comprennent en outre un second dispositif ;

la seconde règle de lien comprend en outre la réalisation d'une troisième tâche par le second dispositif, et la première règle de lien ne comprend pas le second dispositif ;

après la détermination, par le dispositif concentrateur (200), du fait que le premier dispositif réalise la première tâche, le dispositif concentrateur envoie en outre, au second dispositif, un second message pour la réalisation de la troisième tâche ; et

le second dispositif réalise la troisième tâche en réponse à la réception du second message.

10. Procédé selon l'une quelconque des revendications 6 à 9, dans lequel
le dispositif concentrateur (200) compte séparément des changements d'état des R seconds dispositifs électroniques dans chaque scénario détecté par le premier dispositif électronique et/ou des ordres de commande pour les R seconds dispositifs électroniques envoyés par le dispositif concentrateur, et apprend une règle de lien correspondant à chaque scénario.

11. Procédé selon la revendication 10, dans lequel le dispositif concentrateur (200) met à jour la règle de lien correspondant à chaque scénario en temps réel ou de manière cyclique ou sous une condition spécifique.

12. Support de stockage lisible par ordinateur, comprenant des instructions informatiques, dans lequel lorsque les instructions informatiques sont exécutées sur un dispositif électronique, le dispositif électronique est activé pour réaliser le procédé selon l'une quelconque des revendications 6 à 11.

(a)

(b)

FIG. 1

First electronic device 100

Antenna

Wireless communication
module 140
(Wi-Fi/Bluetooth/ZigBee or the
like)

Antenna

Antenna

Millimeter-wave
radar module 160

UWB module 150

Processor 110

Power management
module 130

Memory 120

Power supply 131

FIG. 2

Hub device 200

Antenna

Wireless communication
module 240
(Wi-Fi/Bluetooth/ZigBee or
the like)

Memory 220

Power management
module 230

Processor 210

Power supply 231

FIG. 3

Second electronic device 300

Antenna          Antenna

Wireless communication module
360
(Wi-Fi/Bluetooth/ZigBee or the
like)

UWB module
350

Loudspeaker
370A

Receiver
370B

Audio
module
370

Processor 310

Memory 320

USB interface
330

Microphone
370C

Display 380

Headset
jack 370D

IMU module
390

Power supply
module 340

FIG. 4

UWB module 150

Receiver 1502

Receive
antenna 1

Power
amplifier

Mixer

Filter

Sampling module

Receive
antenna n

Power
amplifier

Mixer

Filter

Sampling module

First processing
module

Transmitter 1501

Transmit
antenna

Power
amplifier

Modulator

Digital-to-analog
converter

Data signal generator

Timing start
indication
information

Pulse generator

FIG. 5A

FIG. 5B

UWB module 350

Receiver 3502

Receive antenna

Power amplifier

Mixer

Filter

Sampling module

Processing module

Transmitter 3501

Timing start indication information

Transmit antenna

Power amplifier

Modulator

Digital-to-analog converter

Data signal generator

Pulse generator

FIG. 6

FIG. 7(a)

FIG. 7(b)

FIG. 7(c)

FIG. 7(d)

FIG. 7(e)

(a)

(b)

FIG. 8

$Z_e$ axis

Antenna 2

$X_e$ axis

$O_e$

Antenna 0  Antenna 1

$Y_e$ axis

L-shaped antenna structure

(a)

$Z_e$ axis

Antenna 2

$X_e$ axis

$O_e$

Antenna 0  Antenna 1

$Y_e$ axis

Triangular antenna structure

(b)

(c)

FIG. 9

(a)

(b)

FIG. 10

FIG. 11

FIG. 12(a)

FIG. 12(b)

FIG. 12(c)

Z_e axis

First electronic
device

α

β

X_e axis

P

O_e

Second
electronic device

β

L

O_b

UWB signal transmitted by
the second electronic device

Y_e axis

FIG. 12(d) (CONTINUED)

Z_e axis

β

N2

Antenna 2

d2

M2

β

L2 (λ/2)

L1 (λ/2)

X_e axis

Antenna 0

Antenna 1

UWB signal

α

N1

Component of
the UWB signal
on X_eO_eY_e

O_e

d1

M1

UWB signal

Y_e axis

Component of the
UWB signal on X_eO_eY_e

FIG. 12(e) (CONTINUED)

FIG. 12(f) (CONTINUED)

FIG. 13(a)

FIG. 13(b)

FIG. 13(c)

FIG. 14

(a)

(b)

FIG. 15

(a)

(b)

FIG. 16

FIG. 17

FIG. 18(a)

FIG. 18(b)

Frequency

——— Transmitted signal

- - - - - - Received signal

- · — · — Difference frequency signal

Time

Range FFT

Frequency

Time

FIG. 18(c)

Chirp signal 1  Chirp signal 2

N sampling points

Range FFT

Doppler FFT

M frequency sweep cycles

FIG. 18(d)

FIG. 18(e)

FIG. 19(a)

Z_m axis

X_m axis

O_m Receive Receive Receive Receive Transmit Transmit
antenna antenna antenna antenna antenna 0 antenna 2
0 1 2 3

$\frac{\lambda_L}{2}$

Y_m axis

$2\lambda_L$

~
TO
FIG. 19(b)-2

Z_m axis

X_m axis

O_m Receive Receive Receive Receive Transmit Transmit
antenna antenna antenna antenna antenna 0 antenna 2
0 1 2 3

$\frac{\lambda_L}{2}$

Y_m axis

$2\lambda_L$

Two transmit antennas and four receive antennas

FIG. 19(b)-1

One transmit antenna and eight receive antennas

FIG. 19(b)-2

FIG. 19(c)-1

FIG. 19(c)-2

Reflection point

(a)

$Z_m$ axis

$Y_m$ axis

First electronic
device 100

$X_m$ axis

H

$\mathbf{u}^{m} = [x_{k}^{m}, y_{k}^{m}, z_{k}^{m}]^{T}$

$h^{m}$

(b)

FIG. 20

S2100: A millimeter-wave radar module receives a reflected signal

S2101: The millimeter-wave radar module performs a two-dimensional fast Fourier transform on a digital difference frequency signal

Range FFT

Doppler FFT

S2102: The millimeter-wave radar module obtains a distance between a reflection point and the millimeter-wave radar and a radial speed

S2103: The millimeter-wave radar module determines a signal coming direction of the reflected signal

S2104: The millimeter-wave radar module determines coordinates of the reflection point in a fourth coordinate system

S2105: The millimeter-wave radar module determines coordinates of a smart device or a user in the fourth coordinate system

S2106: The millimeter-wave radar module tracks the smart device or the user

FIG. 21

Target tracking result → S2201: Extract phase information → S2202: Unwrap a phase → S2203: Calculate a phase difference → S2204: Perform band-pass filtering → S2205: Estimate a range → S2206: Perform determining

Range FFT (Range FFT) result → S2201: Extract phase information

FIG. 22

FIG. 23

First electronic device 100

Transmit
antenna 1

$Z_m$ axis

Receive          Receive
antenna 0    antenna 2

$X_m$ axis

Receive     Receive       Transmit
antenna 1  antenna 3    antenna 0

Transmit
antenna 2

$Y_m$
axis

dz

$Z_e$ axis

Antenna 2

dy

$X_e$ axis

Antenna     Antenna
0                   1

$Y_e$ axis

dx

FIG. 24

FIG. 25

S1: Establish a first coordinate system, a second coordinate system, a third coordinate system, a fourth coordinate system, and a fifth coordinate system, and obtain position information of a device, a region, and a user in the fifth coordinate system through conversion from the first coordinate system, the second coordinate system, the third coordinate system, and the fourth coordinate system to the fifth coordinate system

S2: A second electronic device performs a preset operation based on the position information of the user and position information of the second electronic device

(a)

Hub device 200

Determine, based on the coordinates of the second electronic device and the coordinates of the user, that the second electronic device executes a preset instruction

Coordinates of the second electronic device and a room or a region in which the second electronic device is located

Report coordinates of a user in a whole house and a room or a region in which the user is located

Deliver the preset instruction

First electronic device 100

| UWB module | Millimeter-wave radar module |

Second electronic device 300

(b)

FIG. 26

FIG. 27(a)

Secondary bedroom

Toilet

Primary bedroom

Dining room

Living room

Balcony

Kitchen

Entrance aisle

2701

FIG. 27(b)

FIG. 27(c)

| Calculate centroids of two groups of point clouds | Calculate coordinates that are of points in the two groups of point clouds and that are obtained by using the centroids as origins | Calculate W and G with the purpose of minimizing the following objective function, and perform iteration | Exit and output a result if an iteration condition is met |
|---|---|---|---|

$$E(W,G)=\frac{1}{n}\sum_{i=1}^{n}\left\| q_i^{e1} - (Wq_i^{e3}+G) \right\|^2$$

FIG. 28

(a)

(b)

FIG. 29

FIG. 30(1)

FIG. 30(2)

< Create

3706

Name editing
For example, turn on an air
conditioner at a high temperature

If a condition is met

3707

+ Add conditions

To-be-performed tasks

+ Add tasks

3708

3705

FIG. 31(1)

< Add conditions

Specific time ⟿ 3710
\>
Time for triggering a task, for example,
7:00 AM

- - - - - - - - - - - - - - - - - - - - -

Smart device triggering ⟿ 3711
\>
For example, a human body sensor detects
that a human body passes through

- - - - - - - - - - - - - - - - - - - - -

Intelligent scenario triggering ⟿ 3712
\>
Intelligent scenario that a whole-house
sensing system can detect

3709

FIG. 31(2)

3713

< Intelligent scenario triggering

Night coming-home ☑

Daytime coming-home ☐

Outsider intrusion ☐

Living room entertainment ☐

Bedroom entertainment ☐

Living room sleeping ☐

Bedroom sleeping ☐

Night raining ☐

Daytime going-out ☐

Night going-out ☐

3714

Add

FIG. 31(3)

< Create

Name editing
For example, turn on an air
conditioner at a high temperature          3706

If a condition is met          3716

Night coming-home scenario          3707

+ Add conditions

3715

To-be-performed tasks

+ Add tasks          3708

FIG. 31(4)

< Add tasks

Smart devices ~~ 3718
>
For example, "turn on a lamp
and turn off an air conditioner"

- - - - - - - - - - - - - - - - -

System functions ~~ 3719
>
For example, "sending a message
notification"

- - - - - - - - - - - - - - - - -

3717

FIG. 32(1)

< Add to-be-performed tasks of smart devices

Lighting lamp                    Turn on >
Living room

- - - - - - - - - - - - - - - - - - - -

Lighting lamp                    Turn on >
Bedroom

- - - - - - - - - - - - - - - - - - - -

Air conditioner                  26°C >
Bedroom

- - - - - - - - - - - - - - - - - - - -

3720

3721

Add

FIG. 32(2)

< Add to-be-performed tasks of smart devices

Lighting lamp                    Turn on >
Living room

- - - - - - - - - - - - - - - - - - - - - - -

Lighting lamp                    Turn on >
Bedroom

- - - - - - - - - - - - - - - - - - - - - - -
                                                        3722

Air conditioner              26°C >
Bedroom                                  3723

If the air conditioner is also set in a bedroom
sleeping scenario, set the following:

priority of a                                    priority of a
night coming-    [ higher than    ▽ ]     bedroom
home scenario                                    sleeping
                                                 scenario

FIG. 33

EP 4 383 031 B1

| Whole-house sensing system (first electronic device) | Hub device | First device (second electronic device) | Second device (second electronic device) |

S3401: First scenario data →

S3402: Determine a scenario 1 based on the first scenario data, and determine that the scenario 1 corresponds to an IFTTT rule 1, where the IFTTT rule 1 includes that the first device performs a task 1

S3403: The first device performs the task 1 →

S3404: Second scenario data →

S3405: Determine a scenario 2 and the scenario 1 based on the second scenario data, and determine that the scenario 2 corresponds to an IFTTT rule 2, where the IFTTT rule 2 includes that the first device performs a task 2 and the task 2 is different from the task 1

TO FIG. 34B          TO FIG. 34B          TO FIG. 34B          TO FIG. 34B

FIG. 34A

114

CONT.
FROM
FIG. 34A

CONT.
FROM
FIG. 34A

CONT.
FROM
FIG. 34A

CONT.
FROM
FIG. 34A

S3406: If a priority of the scenario 2 is higher than a priority of the scenario 1, determine that the first device performs the task 2

(Optionally, if the IFTTT rule 2 further includes that the second device performs a task 3, and the IFTTT rule 1 does not include the second device, determine that the second device performs the task 3)

S3407: The first device performs the task 2

S3408: The second device performs the task 3

S3409: If a priority of the scenario 2 is lower than a priority of the scenario 1, determine that the first device performs the task 1

(Optionally, if the IFTTT rule 2 further includes that the second device performs a task 3, and the IFTTT rule 1 does not include the second device, determine that the second device performs the task 3)

S3410: The second device performs the task 3

FIG. 34B

| Whole-house sensing system (first electronic device) | Hub device | Smart device (second electronic device) |
|---|---|---|

S3501: Generate a grid map of a whole house based on a floor plan of the whole house

S3502: Detect a position of a user in real time

S3503: Position of the user

S3504: Generate data of an activity of the user in the house based on the grid map of the whole house and the position of the user, including data of a movement track of the user in the house, duration of the activity of the user in the house, and the like

S3505: Detect an operation of starting, by the user, to view the data of the activity of the user in the house

S3506: Request the data of the activity of the user in the house

S3507: Return the data of activity of the user in the house

S3508: Display a track map of the user in the house or a heat map of the activity of the user in the house

FIG. 35

FIG. 36(1)

FIG. 36(2)

FIG. 36(3)

FIG. 36(4)

< Data of activities of users in a house

**Today**
**9:00 to 12:00**     8.6     8.5     ...

**Whole** Living Primary Secondary Kitchen
**house** room bedroom bedroom

All users          **User A**          User B

Track map          **Heat map**

Living room

Secondary bedroom

Primary bedroom

Kitchen

Activity analysis                    4314

4312

4313

Note: Colors from dark to light are as follows:

FIG. 37(1)

4317

< Data of activities of users in a house

**Today**
**9:00 to 12:00**     8.6     8.5     ...

Whole   Living   **Primary**   Secondary   Kitchen
house   room     **bedroom**   bedroom

All users           **User A**           User B

Track map           **Heat map**

4318

Desk

Sofa

Bed

Wardrobe

Activity analysis          4314

Note: Colors from dark to light are as follows:

FIG. 37(2)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 112925217 A
- CN 111796527 A

- CN 202110872916

**Non-patent literature cited in the description**

- **QIN YONGYUAN**. Inertial Navigation. Science Press, May 2006